(19) **Europäisches Patentamt** / **European Patent Office** / **Office européen des brevets**

(11) **EP 3 257 811 B1**

(12) **EUROPEAN PATENT SPECIFICATION**

(45) Date of publication and mention of the grant of the patent:
**30.03.2022 Bulletin 2022/13**

(21) Application number: **16749086.1**

(22) Date of filing: **02.02.2016**

(51) International Patent Classification (IPC):
**C01B 32/182** *(2017.01)*   **B01D 67/00** *(2006.01)*
**B01D 69/00** *(2006.01)*   **B01D 71/02** *(2006.01)*
**C01B 32/20** *(2017.01)*   **C01B 32/205** *(2017.01)*

(52) Cooperative Patent Classification (CPC):
**C01B 32/20; C01B 32/205;** C01B 2204/04;
C01B 2204/22; C01P 2004/03; C01P 2004/04;
C01P 2004/30; C01P 2006/40

(86) International application number:
**PCT/JP2016/052981**

(87) International publication number:
**WO 2016/129442 (18.08.2016 Gazette 2016/33)**

(54) **SMOOTH-SURFACED GRAPHITE MEMBRANE AND METHOD FOR PRODUCING SAME**

GRAPHITMEMBRAN MIT GLATTER OBERFLÄCHE UND VERFAHREN ZUR HERSTELLUNG DERSELBEN

MEMBRANE EN GRAPHITE À SURFACE LISSE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2015 JP 2015025580**
**22.07.2015 JP 2015145328**

(43) Date of publication of application:
**20.12.2017 Bulletin 2017/51**

(73) Proprietor: **Kaneka Corporation**
**Osaka-shi, Osaka 530-8288 (JP)**

(72) Inventors:
• **TACHIBANA, Masamitsu**
  **Settsu-shi**
  **Osaka 566-0072 (JP)**
• **TATAMI, Atsushi**
  **Settsu-shi**
  **Osaka 566-0072 (JP)**
• **MURAKAMI, Mutsuaki**
  **Settsu-shi**
  **Osaka 566-0072 (JP)**

(74) Representative: **Hoffmann Eitle**
**Patent- und Rechtsanwälte PartmbB**
**Arabellastraße 30**
**81925 München (DE)**

(56) References cited:
WO-A1-2010/074918   JP-A- H0 862 394
JP-A- H04 310 569   JP-A- H05 132 360
JP-A- H07 190 962   JP-A- 2013 129 599
JP-A- 2013 212 938   JP-A- 2013 216 552
JP-A- 2013 216 552   JP-A- 2014 015 391
JP-A- 2015 199 624   US-A1- 2011 162 792

• **NAOMI NISHIKI ET AL.: 'Synthesis and Characterization of Pyrolytic Graphite from Heat-treated Polyimide' IEEJ vol. 123, no. 11, 01 January 2003, pages 1115 - 1123, XP055476056**

**Description**

TECHNICAL FIELD

The present invention relates to a graphite membrane having a high quality such as extremely excellent surface smoothness, thin thickness and large area, and an electrical conductivity of 8000 S/cm or more in a-b plane direction or in the membrane plane direction, and a method for preparing the same.

BACKGROUND ART

The graphite membrane has been important for an industrial material in the viewpoint of excellent heat resistance, chemical resistance, high thermal conductivity, high electric conductivity, and has been widely utilized for electronic conductor, heat diffuser material, heat resistant sealing material, gasket, heating element and the like. Since electronic machines and the like are miniaturized, thinned, and improved in the viewpoint of the performance, a graphite membrane having excellent surface smoothness, thinness, uniformity, large area, high electronic conductivity, high thermal conductivity, and the like has been strongly required.

A basic structure of a graphite crystal is a layered structure in which base planes formed by carbon atoms bound in the form of a hexagonal network are orderly stacked (a direction in which layers are stacked is referred to as a c-axis, and a direction in which the base plane formed by carbon atoms bound in the form of a hexagonal network extends is referred to as an a-b plane direction). Carbon atoms within the base plane are strongly bound with a covalent bond, and atom distance is 0.1421 nm. On the other hand, binding between faces of layers stacked depends on a weak Van der Walls force, and an interlayer distance is 0.3354 nm in an ideal structure. The ideal graphite crystal is divided into hexagonal system or rhombohedral system according to layer stacks and the graphite crystal generally has hexagonal system. The electrical conductivity in graphite is large in the a-b plane direction reflecting such anisotropy, and therefore the electrical conductivity in this direction are good measures for determining graphite quality such as quality of layered structure formed by carbon atoms bound in the form of a hexagonal network.

An example of the electrical conductivity of a conventionally known high-quality graphite in the a-b plane direction thereof is 25000 S/cm, this value being the electrical conductivity of a naturally produced graphite, which is regarded as a monocrystal, or a graphite called kish graphite, which is obtained from carbon dissolved in a melted metal (Non-Patent Documents 1 and 2).

Apart from these graphites, methods have been developed in each of which an especial polymer is directly thermally treated, carbonized, and graphitized (Patent Documents 1 and 2). Examples of the polymer, which is used for this purpose, include polyimide, polyoxadiazole, and poly-p-phenylenevinylene. In these methods, a thin polymer film is formed by an applying coating method or multilayer-extruding method, and this film is carbonized and graphitized to make it possible to produce a graphite membrane having a high electrical conductivity of 20000 S/cm or more in the a-b plane direction.

Furthermore, it is known that a graphite membrane which has a very thin and uniform thickness and has a very high electrical conductivity in the a-b plane direction can be produced by firing a very thin polyimide film produced not to contain any impurity, such as any solvent or any curing agent, using a vapor deposition polymerization method (Patent Document 3).

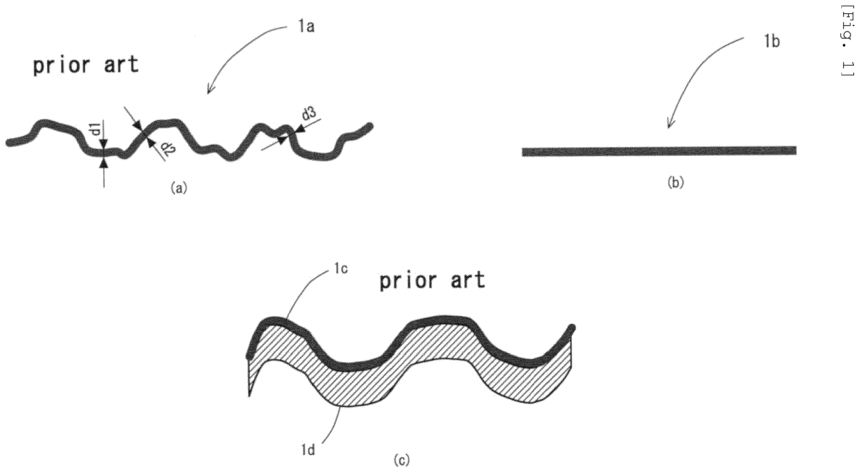

However, as illustrated in Fig. 1(a), an independent graphite membrane 1a obtained by any one of these methods is large in area, and has excellent uniformity in net thickness (d1, d2 and d3) except wrinkles and undulations. However, the membrane has many wrinkles, and thus there remains a room for making the surface smoothness thereof better than an independent graphite membrane 1b which the present invention aims, as illustrated in Fig. 1(b). In particular, as a polymer film of a raw matter is thinner, the mechanical strength thereof is weaker. Thus, the conventionally yielded graphite membrane 1a is large in ratio of the height of convexo-concavities of its wrinkles to the thickness. Thus, there remains a problem that this film is not easily used in some use-cases, for example, a case where this film is required to be laminated onto a surface of a smooth substrate such as a glass substrate, a silicon substrate or a PET film not to give any gap between portions of the film. For example, Fig. 1(c) illustrates a laminated type graphite membrane obtained by transferring a conventional graphite membrane 1a to a substrate 1d. About even a transferred graphite membrane 1c, it is difficult to cause wrinkles or undulations to disappear. Also, there is the graphite membrane 1c obtained by graphitizing a polymer bonded onto the substrate 1d such as a carbon substrate resisting the graphitizing temperature. However, according to the prior art, when this is peeled off and transfer onto a member, wrinkles, undulations, breaks or such defects are easily generated as well. Thus, the independent graphite membrane 1b excellent in surface smoothness cannot be obtained.

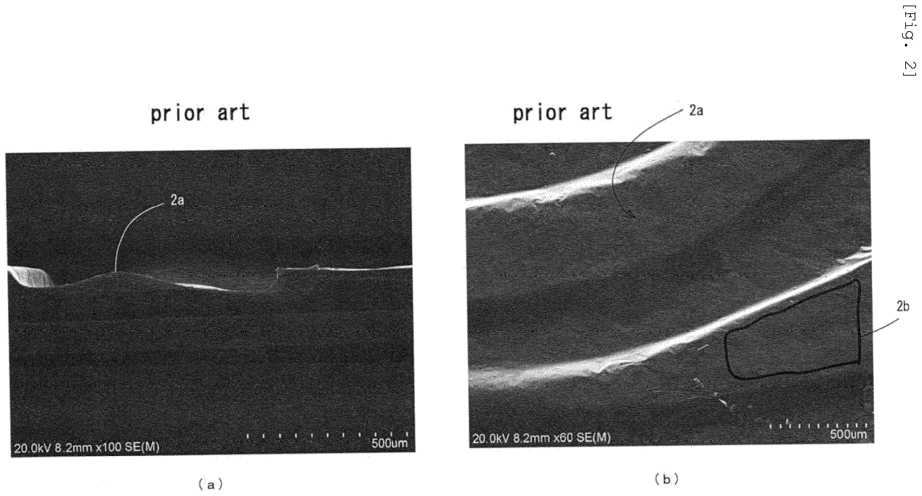

As an example of the above-mentioned technique, Figs. 2(a) and 2(b) illustrate, respectively, an SEM photograph of a surface of a graphite membrane 2a obtained by the method of Patent Document 1, and an SEM photograph of a cross section thereof. As illustrated in Fig. 2(a), about the conventional graphite membrane, the net thickness thereof itself is uniform except wrinkles and undulations. When a scope to be considered is limited to a narrow scope such as only a mountain portion or valley portion of a wrinkle, in an area several hundreds of micrometers square or several tens of micrometers square the arithmetic average roughness Ra thereof (provided that the Ra is not precisely any arithmetic average roughness Ra since the area cannot ensure a predetermined evaluating length) may satisfy 100 nm or less, 50 nm or less, or 20 nm or less. In such a way, some conventional graphite membranes partially have a very smooth surface (see 2b in Fig. 2(b)). However, there has been not known any independent graphite membrane having a 5 mm or more square area such a wide area where the front surface thereof has an Ra of 200 nm or less in every corner thereof.

Patent Document 3 also states that a thin film prepared by a polyamic acid is formed on a glassy carbon substrate by vapor deposition polymerization, and this thin film is heated together with the glassy carbon, and thus a thin graphite membrane can be formed which is especially excellent in thickness-uniformity. The thin graphite membrane in this state is surely high in surface smoothness. However, a substrate usable at the time of graphitization in such a manner needs to resist a very high temperature such as 3000°C. Thus, a substantially usable substrate is limited to electroconductive substrates such as a carbon substrate, a graphite substrate or a tungsten substrate. When costs are further considered, the usable substrate is limited to the carbon substrate or graphite substrate. In the meantime, in order to use a thin graphite membrane as, for example, an electroconductive material making use of a high electrical conductivity thereof and other properties, which are described in the present patent application or Patent Document 3, it is necessary to bond the thin film onto an electrically insulating substrate or a semiconductor substrate, and then use the resultant, or to fix, for example, only both ends of the thin film onto a member, and then use the resultant in the state that the thin film is floating in the air. In other words, even if a thin graphite membrane as described in Patent Document 3, which is bonded onto a substrate of an electroconductive material such as glassy carbon, is excellent in surface smoothness, this membrane may be actually restricted about a scope for using the membrane as a raw material or matter as it is. In order to solve this problem, it is necessary to produce the graphite membrane as an independent membrane separated from the electroconductive substrate. It is of course ideal that a high-quality graphite having a smooth surface and excellent adhesion onto the substrate and also electrical conductivity can be directly formed on a substrate such as quartz. However, there is not any electrically insulating substrate or semiconductor substrate that substantially resists temperatures for graphitization. Thus, it is substantially permissible only to produce a graphite membrane having excellent surface smoothness and physical properties, such as electrical conductivity, once.

Patent Document 3 also discloses that a composite film composed of a PMMA (polymethyl methacrylate) film and a thin graphite membrane is yielded by applying a solution of PMMA onto a graphite membrane formed on a glassy carbon, and peeling off the thin graphite membrane together with the PMMA film from the glassy carbon. A thin graphite membrane moiety of the composite film yielded in this way is high in uniformity of net thickness (denoting d1, d2 and d3 in Fig. 1(a)) except wrinkles and undulations; and the moiety is not bad in surface smoothness level. However, when the thin graphite membrane is peeled off, the thin graphite membrane is unavoidably finely wrinkled or undulated. Thus, this thin graphite membrane has not realized the matter that an area of 5 mm or more square size has such a surface smoothness that no winkle is generated into every corner of the area and the surface of the area has an arithmetic average roughness of 200 nm or less. One cause therefor would be based on the method for the peeling. Another cause therefor is assumed to be as follows: polyimide yielded by vapor deposition polymerization is slightly lower in the orientation of its polymeric chains in a direction parallel with the plane of the film than any polyimide film yielded by solution-application; consequently, the resultant graphite membrane tends to be low in toughness. In conclusion, about any independent graphite membrane of 5 mm or more square size, even the method in Patent Document 3 does not make it possible to adjust the arithmetic average roughness to 200 nm or less.

Patent Document 4 discloses that a polymer film formed on a substrate is sandwiched between graphite pieces, and the resultant is carbonized and graphitized to yield a graphite film in which the number of disc-form cracks is from 0 to 10 per 0.01 cm$^2$, the height of wrinkles formed in the front surface is from 0 to 50 nm, and the size of grains is 1 $\mu$m or more, and the thickness is 1 $\mu$m or less. However, the method for the sandwiching of the polymer film between the graphite pieces to carbonize and graphitized the polymer membrane is a method equivalent to the methods in Patent Documents 5, 6 and 7. Even when such methods make it possible that in a small area of the membrane, the wrinkle height is decreased into the range of 0 to 50 nm, the methods do not make it possible that in an independent graphite membrane having a wide area of 5 mm or more square size, the arithmetic average roughness Ra is set to 200 nm or less. This matter is as will be demonstrated in Comparative Examples as set forth below.

Patent Documents 6 and 7 disclose that a polymer film is fixed to a stainless frame and the resultant is carbonized, and this manner improves the finally yielded graphite membrane in graphitization degree and electrical conductivity. This method is based on an intention that over a predetermined period at an initial stage of the carbonization process, pulling force is caused to act onto the film to improve orientation of polymeric chains inside the film. This method produces great advantageous effects of improving the resultant graphite membrane in graphitization degree and electrical conductivity. However, the stainless frame is not varied in size in the carbonization step while the polymer film is shrunken by the carbonization; consequently, the carbonized film is excessively stretched to be distorted, cracked or damaged in other forms, so that the carbonized film is wrinkled. As will be demonstrated in Comparative Examples 1 and 10, which will be described later, this membrane cannot attain a small Ra.

In conclusion, about an independent graphite membrane having, particularly, a thickness of 12 μm or less, conventional documents do not specifically disclose any method for realizing a high surface smoothness, a small thickness, a large area, and an electrical conductivity in the a-b plane direction of the membrane, i.e., in the membrane plane direction with a good balance and at a high level, so that such a method has been unknown (Fig. 1). Furthermore, the following method is also in an unknown technical scope: a method of using, particularly, an easily commercially available polymeric material, such as polyimide, to produce effectively a thin graphite membrane having a high electrical conductivity of 8000 S/cm or more and to realize such a high-level surface smoothness that surface-irregularities including wrinkles and undulations have a surface arithmetic average roughness Ra of 200 nm or less throughout the whole of a large area of 5 mm or more square size over a wide extent of the membrane having a thickness of 12 μm or less.

Patent Document 8 describes a film composed of carbon atoms, each carbon atom forms a graphite crystal and the c-axis of the graphite crystal is oriented vertically to the film surface. In the film, the film thickness is 1 nm or more and less than 1,000 nm, film length divided by film thickness is $\geq 5.0 \times 10^4$, and film width divided by film thickness is $\geq 5.0 \times 10^4$.

Patent Document 9 describes a process for producing a graphite film that comprises the graphitization step for a raw material film made of a polymer film and/or a carbonized polymer film and/or the post-planar pressurization step for the film in this order to prepare a graphite film, wherein the graphitization step is a step of thermally treating two or more stacked raw material films at a highest temperature of 2,000°C and includes a method of electrically heating the raw material films themselves and/or a method of thermally treating the films while applying pressure to the films planarly, and the post-planar pressurization step includes a method of planarly pressurizing the one raw material film or the multiple stacked raw material films after graphitization by single-plate press or vacuum press

Patent Document 10 describes graphene oxide membrane materials having a surface area of above about 200 μm and that exhibit electrical conductivity in excess of about 200 S/m. Also described therein are methods of synthesizing such membranes, as well as devices and sensors that incorporate these novel grapheme materials.

PRIOR ART

PATENT DOCUMENT

Patent Document 1: JP2004-299919A
Patent Document 2: JP2005-53719A
Patent Document 3: JP2013-212938A
Patent Document 4: JP2013-121894A
Patent Document 5: JPH02-120218A
Patent Document 6: JPS61-275116A
Patent Document 7: JPS61-275117
Patent Document 8: JP 2013-216552 A
Patent Document 9: US 2011/162792 A1
Patent Document 10: WO 2010/074918 A1

NON PATENT DOCUMENT

Non-Patent Document 1: L. Spain, A. R. Ubbelohde, and D. A. Young "Electronic properties of oriented graphite" PHILOSOPHICAL TRANSACTIONS OF THE ROYALSOCIETY
Non-Patent Document 2: T. C. Chieu, M. S. Dresselhaus and M. Endo, Phys. Rev. B26, 5867(1982)

SUMMARY OF THE INVENTION

PROBLEMS TO BE SOLVED BY THE INVENTION

An object of the present invention is to provide a graphite membrane (independent graphite membrane) having a high quality such as extremely excellent surface smoothness, thin thickness, large area, and an electrical conductivity of 8000 S/cm or more in a-b plane direction or in membrane plane direction.

SOLUTIONS TO SOLVE THE PROBLEMS

The present inventors have found that an independent graphite membrane having a high quality such as extremely excellent surface smoothness, thin thickness and large area, and having an electrical conductivity of 8000 S/cm or more in a-b plane direction is obtained by applying force on the polymer film from the center to outside of the polymer film along the film plane during baking, to complete the present invention. The graphite membrane of the present invention is excellent for a constituent material, in particular, for small-sized and thin electroconductors, thermoconductors, heat-resistant sealing materials, gaskets, heat generators, and micro electromechanical systems (MEMS).
The present invention relates to the following:

i) A graphite membrane having in an independent graphite membrane a thickness of 10 nm to 12 $\mu$m, an area of 5 $\times$ 5 mm$^2$ or more, an electrical conductivity of 8000 S/cm or more, and an arithmetic average roughness Ra of 200 nm or less on the surface of the graphite membrane.

ii) A method for preparing a graphite membrane as defined in i), comprising a step of carbonizing and graphitizing a polymer film to prepare a graphite membrane, wherein an arithmetic average roughness Ra on the surface of the graphite membrane is reduced by regulating a size in a direction parallel to the graphite membrane in either the carbonization or the graphitization of the polymer film, or both the carbonization and the graphitization of the polymer film.

iii) A method for preparing a graphite membrane as defined in i), comprising a step of carbonizing and graphitizing a polymer film to prepare a graphite membrane, wherein an arithmetic average roughness Ra on the surface of the graphite membrane is reduced by applying pulling force to the polymer film along a direction parallel to the polymer film in either the carbonization or the graphitization of the polymer film, or both the carbonization and the graphitization of the polymer film.

iv) A method for preparing a graphite membrane as defined in i), comprising a step of carbonizing and graphitizing a polymer film to prepare a graphite membrane, wherein an arithmetic average roughness Ra on the surface of the graphite membrane is reduced by stacking the polymer film with a substrate in either the carbonization or the graphitization of the polymer film, or both the carbonization and the graphitization of the polymer film.

v) A method for preparing a graphite membrane as defined in i), comprising a step of carbonizing and graphitizing a polymer film to prepare a graphite membrane, wherein an arithmetic average roughness Ra on the surface of the graphite membrane is reduced by stacking the polymer film having a thickness of 20 nm to 40 $\mu$m as plural pieces, pressing polymer films by applying a pressure in a direction of 30° or less from a perpendicular direction to the polymer film plane in the carbonization of the polymer film or both the carbonization and the graphitization of the polymer film, and separating each of stacked graphite membranes after graphitization.

vi) A method for preparing a graphite membrane as defined in i), comprising a step of carbonizing and graphitizing a polymer film to prepare a graphite membrane, wherein an arithmetic average roughness Ra on the surface of the graphite membrane is reduced by stacking the polymer film with a frame or a substrate of a polymer film having mechanical strength higher than that of the polymer film in both the carbonization and the graphitization of the polymer film.

vii) A method for preparing a graphite membrane as defined in i), comprising a step of carbonizing and graphitizing a polymer film to prepare a graphite membrane, wherein an arithmetic average roughness Ra on the surface of the graphite membrane is reduced by stacking a carbonized film obtained by carbonizing a polymer film or a graphitized film obtained by graphitizing a polymer film with a frame or a substrate of a carbonized film obtained by carbonizing a polymer film or a graphitized film obtained by graphitizing a polymer film having mechanical strength higher than that of the polymer film in both the carbonization and the graphitization of the polymer film or the graphitization of the polymer film.

viii) A method for preparing a graphite membrane as defined in i), comprising a step of carbonizing and graphitizing a polymer film to prepare a graphite membrane, wherein an arithmetic average roughness Ra on the surface of the graphite membrane is reduced by pressing at 2200 °C or more the polymer film sandwiched by two substrates including at least one curved substrate in the graphitization of the polymer film.

ix) A method for preparing a graphite membrane as defined in i), comprising a step of carbonizing and graphitizing a polymer film to prepare a graphite membrane, wherein an arithmetic average roughness Ra on the surface of the graphite membrane is reduced by interposing the polymer film between gaps formed by two substrates in nonparallel plane such that a part of each of two substrates is contacted with each other at 2200 °C or more in the graphitization of the polymer film, and pressing the polymer film and the two substrates such that one or both of the two substrates are gradually adjusted in a parallel state and gaps formed by the two substrates are eliminated.

x) A method for preparing a graphite membrane as defined in i), comprising a step of carbonizing and graphitizing a polymer film to prepare a graphite membrane, wherein an arithmetic average roughness Ra on the surface of the graphite membrane is reduced by stacking a carbonized film obtained by carbonizing a polymer film with a frame or a substrate of a carbonized film obtained by carbonizing a polymer film having mechanical strength higher than that of the polymer film to graphitize these.

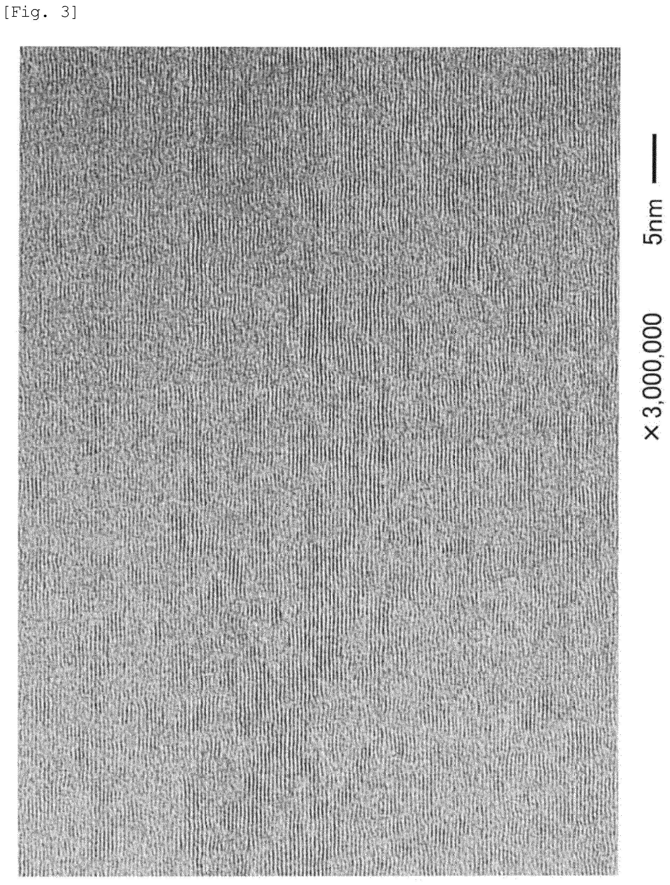

Apart from the above, the graphite membrane of the present invention is of a graphite species. Graphite is a laminated body of graphene layers. In other words, the graphite membrane of the present invention is a laminated body of graphene layers. This matter is described on, for example, pages 72 to 73 of "Carbon Science from Basic Physical Properties to Application and Development" (published by Kagaku-Dojin Publishing Co., Inc. on October 15, 2011). The present invention is accomplished by decreasing wrinkles of graphene present in a surface of a graphite membrane (in other words, smoothing the surface of the graphite membrane) and simultaneously decreasing wrinkles of graphene that are inside the graphite membrane. In other words, the "smooth-surfaced graphite membrane" of the present invention may be referred to as a "laminated body in smooth graphene layers are laminated onto each other". This matter can easily be understood with reference to Fig. 1. In light of the method of the present invention for producing a graphite membrane, it is self-evident that wrinkles are decreased also about graphene inside the graphite membrane. In order to decrease only wrinkles of graphene of the outermost layer, an especial technical manner would be necessary rather than the present invention. This matter is also clear from a sectional TEM image of a "smooth-surfaced graphite membrane" of the present invention, as is shown in Fig. 3.

Fig. 1(a) shows a schematic sectional view of a conventional high-quality graphite membrane 1a, and Fig. 1(b) shows a schematic sectional view of a smooth-surfaced graphite membrane 1b of the present invention. As the conventional high-quality graphite membrane 1a, there is known a membrane which is very thin and has uniform thicknesses (d1, d2 and d3). However, when the conventional membrane is large in area, the membrane has wrinkles and undulations. Thus, there remains a room for improving the surface smoothness. In contrast, the smooth-surfaced graphite membrane 1b of the present invention is uniform in thickness and has only a very small number of wrinkles and undulations. Such a very high surface smoothness is essential for the application of the graphite membrane, in particular, to articles required to have a minute working precision, such as fine interconnection materials, and micro electromechanical systems (MEMS). Moreover, the graphite membrane of the present invention is especially excellent for thermal interface materials (TIM).

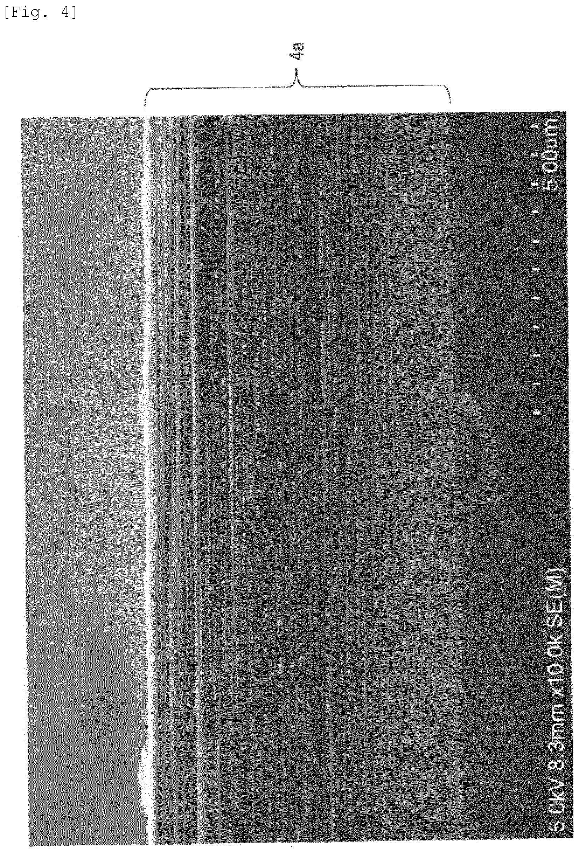

The graphite membrane of the present invention, which is of a graphite species, is also a laminated structure in which very thin graphite membranes are regularly laminated onto each other in parallel with the membrane plane direction without giving any gap therebetween, this graphite membranes being membranes which are uniform in thickness without having any wrinkle nor undulation and which have only a very small number of defects such as breaks. This matter is evident from sectional SEM images and Ra values in Figs. 4 to 6. It is easily understandable that according to the method of the present invention, wrinkles of the very thin graphite membranes constituting the inside of the graphite membrane are substantially completely stretched, as described above. This structure can never be produced even by shaping natural graphite into a sheet form, or by pressing, cutting and surface-polishing isotropic graphite, glassy carbon, a graphite evaporated membrane, fullerene or carbon nanotubes, or a composite material of two or more of these materials. Thus, the present invention realizes a graphite membrane having unprecedented especially excellent surface smoothness, and good properties such as very high electrical conductivity, thermoconductivity, bending resistance, rapture resistance, and easy cuttability at the same time.

EFFECTS OF THE INVENTION

The present invention can provide a graphite membrane (independent graphite membrane) having very high surface smoothness and especially excellent for a constituent material, in particular, for small-sized and thin electroconductors, thermoconductors, thermal interface materials (TIM), heat-resistant sealing materials, gaskets, heat generators, and micro electromechanical systems (MEMS).

BRIEF DESCRIPTION OF THE DRAWINGS

Fig. 1(a) illustrates a schematic sectional view of a conventional high-quality graphite membrane (independent graphite membrane), Fig. 1(c) illustrates a schematic sectional view of a laminate including a conventional high-quality graphite membrane, and Fig. 1(b) illustrates a schematic sectional view of a smooth-surfaced graphite membrane (independent graphite membrane) of the present invention.

Fig. 2(a) is an SEM photograph (magnification: 100) of a cross section of a conventional high-quality graphite membrane, and Fig. 2(b) is an SEM photograph (magnification: 60) of a surface of the conventional high-quality graphite membrane.

Fig. 3 is a TEM photograph (magnification: 3000000) of a cross section of a smooth-surfaced graphite membrane prepared in a working example according to the present invention.

Fig. 4 is an SEM photograph (magnification: 10000) of a cross section of a smooth-surfaced graphite membrane prepared in a working example according to the present invention.

Fig. 5 is an SEM photograph (magnification: 10000) of a cross section of a smooth-surfaced graphite membrane prepared in a working example according to the present invention.

Fig. 6 is an SEM photograph (magnification: 35000) of a cross section of a smooth-surfaced graphite membrane prepared in another working example according to the present invention.

Fig. 7 is a schematic view illustrating shrinkage and expansion behaviors of a conventional carbonized film and graphite membrane, and further an example of a method for producing a smooth-surfaced graphite membrane of the present invention.

Fig. 8 is a schematic view illustrating an example of the method for producing a smooth-surfaced graphite membrane (square sample) of the present invention.

Fig. 9 is a schematic view illustrating another example of the method for producing a smooth-surfaced graphite membrane (circular sample) of the present invention.

Fig. 10 is a schematic view illustrating still another example of the method for producing a smooth-surfaced graphite membrane of the present invention.

Fig. 11 is a schematic view for describing pulling force (to a square sample) in the present invention.

Fig. 12 is another schematic view for describing pulling force (to a circular sample) in the present invention.

Fig. 13 is a schematic view illustrating a different example of the method for producing a smooth-surfaced graphite membrane of the present invention.

Fig. 14 is a schematic view illustrating a different example of the method for producing a smooth-surfaced graphite membrane of the present invention.

Fig. 15 is a schematic view illustrating a different example of the method for producing a smooth-surfaced graphite membrane of the present invention.

Fig. 16 is a schematic view illustrating a different example of the method for producing a smooth-surfaced graphite membrane (circular sample) of the present invention.

Fig. 17 is a schematic view illustrating a different example of the method for producing a smooth-surfaced graphite membrane (square sample) of the present invention.

Fig. 18 is a schematic view illustrating a different example of the method for producing a smooth-surfaced graphite membrane of the present invention.

Fig. 19 is a schematic view illustrating a different example of the method for producing a smooth-surfaced graphite membrane of the present invention.

Fig. 20 is a schematic view illustrating thickness-measuring sites of a polymer film.

Fig. 21 is a schematic view illustrating surface-smoothness (arithmetic surface smoothness Ra) measuring sites (five black lines) of each graphite membrane, and electrical resistance- and thickness-measuring sites (four black squares) thereof.

MODE FOR CARRYING OUT THE INVENTION

Hereinafter, the present invention will be described in detail.

[Thinness of Graphite Membrane]

A graphite membrane becomes thinner as a polymer film which is a raw material of the graphite membrane becomes thinner. A thinner graphite membrane is usable for a smaller and thinner article. According to the method of the present invention, as a thinner polymer film is baked as far as conditions for the baking are not varied, a graphite membrane tends to be obtained with a better electrical conductivity in the a-b plane direction thereof, i.e., the membrane plane direction. Thus, in order to yield a graphite membrane having a high electrical conductivity, it is preferred to use a thin polymer film. The high electrical conductivity means that the graphite is excellent in crystallinity to have only a small number of cracks and defects. Thus, this matter simultaneously means that the graphite is high in thermoconductivity.

About a film which is thin to some degree, the membrane tends to easily realize an excellent surface smoothness because wrinkles thereof can be stretched only by pulling the film outward in the film plane direction by a relatively small force.

From these viewpoints, the graphite membrane of the present invention has a thickness of 12 $\mu$m or less, preferably 8 $\mu$m or less, more preferably 5 $\mu$m or less, even more preferably 3 $\mu$m or less, 2 $\mu$m or less, or 1.5 $\mu$m or less.

On the other hand, as the graphite membrane is thicker, the membrane is less easily broken. Thus, when baked, the graphite membrane less easily undergoes an unexpected situation, such as a situation that holes are locally formed in the membrane by the sublimation of the graphite, so that the graphite membrane is easier to produce, handle, and work. Moreover, the proportion of a thickness error of the membrane to the membrane thickness is smaller, so that a more advantage is produced for quality assurance of the resultant product. From these viewpoints, the graphite membrane has a thickness of 10 nm or more, or 20 nm or more, more preferably 30 nm or more, even more preferably 50 nm or more, 80 nm or more, or 100 nm or more.

In light of the above-mentioned matters, the graphite membrane of the present invention has a thickness of preferably from 20 nm to 8 $\mu$m, more preferably from 30 nm to 5 $\mu$m, even more preferably from 50 nm to 3 $\mu$m, and most preferably from 100 nm to 1.5 $\mu$m.

[Thickness Measuring Method]

A method for measuring the thickness may be a measurement using a known device. The thickness is measurable by, for example, a contact type measuring method using, e.g., micrometer calipers, an optical measuring method using, e.g., a laser displacement gage or a spectroscopic ellipsometer, or a method through a cross section observation, using an SEM (scanning electron microscope) or TEM (transmission electron microscope).

[Surface Smoothness of Graphite Membrane]

The graphite membrane is required to have a high surface smoothness when used particularly as a constituent material, e.g., a small and thin electroconductive material, electromagnetic shield material, static electricity resistant material, fine interconnection material, thermoconductive material and heat resistant sealing material, gaskets, heat generators and micro electromechanical systems (MEMS).

When the graphite membrane has irregularities such as wrinkles and undulations, there is the high possibility that the graphite membrane is peeled off because the graphite membrane is not successfully laminated on the substrate and the like. Moreover, even when the laminating is successful, the original wrinkles and undulations are forcibly stretched to cause the graphite membrane to be, for example, cracked, broken, chipped, perforated, or wrinkled into different sites of the membrane. Thus, the graphite membrane cannot exhibit excellent properties, for example, originally high electrical conductivity, thermoconductivity, and elastic modulus. Furthermore, at the time of the laminating, the thickness is increased correspondingly to the height of the wrinkles to hinder the resultant instrument from being made thinner and smaller. Additionally, the graphite membrane is bad in adhesiveness onto a position to which this membrane should be caused to adhere closely, so that there is the high possibility that the graphite membrane cannot realize a desired adhesion strength, contact area or sealing performance (sealing-up property). Thus, the graphite membrane of the present invention has an arithmetic average roughness (Ra) thereof of 200 nm or less, more preferably 150 nm or less, even more preferably 100 nm or less, and even more preferably 50 nm or less. The arithmetic average roughness is most preferably 40 nm or less, 30 nm or less, or 10 nm or less since this surface smoothness is equivalent in level to that of industrially produced polymer films, polymer plates, glass plates, quartz plates, silicon wafers, sapphire plates and other substrates, so that a laminate matter composed of the graphite membrane and one or more of these substrates can easily be produced.

[Method for Evaluating Surface Smoothness]

The surface smoothness of the graphite membrane can be evaluated by an already existing means or method, such as a probetype surface roughness meter, an optical method using, e.g., a laser microscope, or an STM (scanning tunneling microscope), or AFM (atomic force microscope). The index of the surface smoothness may be represented by, for example, the arithmetic average roughness Ra of the membrane, the average length Rsm of a contour curve element of the membrane, the maximum height Rz, or ten-point average roughness Rzjis of the membrane. As regulations about these indexes, for example, JIS B0601-2001 is usable or applicable.

[Area of Graphite Membrane]

The graphite membrane is limited about the scope of the application thereof as a member unless the area of the membrane is wide to some extent. Thus, the graphite membrane needs to have a predetermined area or more. The graphite membrane is required to have a large area in order to be applied to, particularly, heat diffusive sheets, displays, organic ELs, solar cells, interconnection circuit substrates, electromagnetic shield materials, gaskets, and such articles. Thus, the graphite membrane has an area of $5 \times 5$ mm$^2$ or more, more preferably $10 \times 10$ mm$^2$ or more, even more preferably 20 x 20 mm$^2$ or more, even more preferably $30 \times 30$ mm$^2$ or more, or $40 \times 40$ mm$^2$ or more. The area of the graphite membrane is most preferably $50 \times 50$ mm$^2$ or more, or $100 \times 100$ mm$^2$ or more.

[Electrical conductivity of Graphite Membrane]

Generally, the electrical conductivity is dependent on the application, and the graphite membrane preferably has high electrical conductivity in the case of an electroconductor, a heat diffusive member, a member for an electronic circuit, or an electromagnetic shield member. In these, the graphite membrane has an electrical conductivity of 8000 S/cm or more, more preferably 9000 S/cm or more, even more preferably 10000 S/cm or more, even more preferably 11000 S/cm or more, even more preferably 12000 S/cm or more, or 13000 S/cm or more, most preferably 16000 S/cm or more, or 18000 S/cm or more. The electrical resistance of the graphite membrane is measured by an already known method such as the van Der Pauw method, or an ordinary four-terminal method; and the electrical conductivity can be calculated from the size, the thickness of the sample, and the above electrical resistance.

The graphite membrane of the present invention having the above-mentioned characteristics can also be mentioned as set forth below: this membrane is a laminated body in which graphene layers each having a surface smoothness (flatness) equivalent to the graphite membrane are laminated onto each other without giving any gap therebetween from results of TEM sectional images and/or SEM sectional images thereof. In other words, the graphite membrane of the present invention can be a laminated body of graphene layers having an arithmetic average roughness Ra of 200 nm or less. The arithmetic average roughness Ra thereof is preferably 100 nm or less, more preferably 50 nm or less, even more preferably 40 nm or less, and particularly preferably 30 nm or less. The arithmetic average roughness Ra of graphene layers inside such a graphite membrane cannot be directly by means of any ordinary measuring instrument using a probe or a laser ray. However, when a cross section of the graphite membrane is regarded as a purely flat plane, the Ra value can be directly estimated from any image of a cross section of the graphite membrane in a direction perpendicular to the graphite membrane plane observed by TEM or SEM because the image indicates a convexo-concavity curve of inside the graphite membrane in a direction perpendicular to the graphene layers. A laminate viewed in the sectional image through the SEM is not strictly individual graphene layers, but is a laminated structure in which very thin graphite layers that are each a laminated body of graphene layers are laminated onto each other. However, it does not happen that any one of the graphene layers constituting this graphite layer is extended from any one of the very thin graphite layers outward to reach different one of the very thin graphite layers, i.e., any one of the graphene layer is overlying or underlying one of these graphite layers. Thus, about one of the very thin graphite layers that is viewed in the SEM sectional image, by calculating out the Ra from the sectional image, the Ra value of the graphene layers can be gained. This matter is evident also from sectional TEM images or sectional SEM images obtained in the EXAMPLES as set forth below.

The graphite membrane of the present invention can be a laminate consisting of extremely thin graphite having the same surface smoothness (flatness) as the graphite membrane is stacked without gaps between the graphenes in cross-section images observed by SEM. The graphite membrane of the present invention preferably can have the following four features.

(Feature 1) the graphite membrane has an arithmetic average roughness Ra of 200 nm or less over 70 % or more of cross-section area in the cross-section of direction perpendicular to the graphite membrane plane;

(Feature 2) the graphite membrane is a laminated structure in which extremely thin graphite layers are stacked without gaps between the graphenes from one surface of the graphite membrane to another surface of the graphite membrane and a variation of the thickness of the graphite membrane is 100 nm or less, and are in parallel direction in 5 degree or less relative to a direction of the graphite membrane plane.

(Feature 3) the extremely thin graphite layers have 100 or more layers depending on a thickness of the graphite membrane and 10 or more layers in many cases.

(Feature 4) the graphite membrane has a density of 1.8 g/cm$^3$ or more.

The feature 1 (the arithmetic average roughness Ra shown in 70% or more of the sectional area of the cross section of the graphite membrane in a direction perpendicular to the graphite membrane plane) is preferably 150 nm Ra or less, more preferably 100 nm Ra or less, even preferably 50 nm Ra or less, and particularly preferably 20 nm Ra or less.

The feature 2 (the thickness variation of each of the very thin graphite layers) is preferably 70 nm or less, more preferably 50 nm or less, even preferably 25 nm or less, and particularly preferably 10 nm or less.

For reference, the matter that graphene layers are laminated onto each other merely into a flat form can be attained by a conventional technique. An excellent point of the present invention is that a wide area, in which it can be determined whether or not the Ra of this area is 200 nm or less (evaluating length: 1.25 mm), shows an excellent flatness (Ra: 200 nm or less), and graphene layers are widely and extendedly laminated in parallel onto each other over the whole of this flat area-surface, so that the graphene layers themselves are flat in the widelyextended area. It is sufficient for the domain size of each of the graphenes to be small, for example, less than 100 μm (for example, several tens of micrometers), in particular, less than 10 μm (for example, several micrometers).

The graphite membrane of the present invention may be laminated onto a substrate. However, the graphite membrane is characterized by having, as an independent graphite membrane (in the state that the graphite membrane is not laminated onto any member such as a substrate), the above-mentioned various properties. An independent graphite membrane having the above-mentioned properties has not been hitherto attainable. Even about a graphite membrane having large wrinkles (a large Ra), an apparently high surface smoothness can be realized, for example, by vaporizing carbon onto the front surface of the membrane, coating carbon paste onto the front surface, or polishing the front surface. However, such a method makes it impossible to cause the graphite membrane to have the above-mentioned excellent characteristics, and the production of such a conventional graphite membrane requires much labor. Additionally, applications of the graphite membrane are also limited. About an independent graphite membrane of the present invention, the front surface thereof does not necessarily have an Ra of 200 nm or less as far as a laminated flat structure in which graphene layers are laminated onto each other without giving any gap therebetween is observed in a TEM sectional image and/or an SEM sectional image of the graphite membrane, and further the arithmetic average roughness Ra of this flat laminated portion is 200 nm or less (preferably 150 nm or less, 100 nm or less, 50 nm or less, 40 nm or less, 30 nm or less, or 10 nm or less). Such a graphite membrane can also attain the excellent properties. For example, in the process of producing an independent graphite membrane of the present invention, the graphite membrane is subjected to a treatment for daring to lower the surface smoothness into an Ra more than 200 nm, for example, by adding a filler made of graphite beforehand to the workpiece, by roughening the front surface of the workpiece with an abrasive having a large particle diameter, or by giving irregularities intentionally onto the front surface through, for example, a push using a mold. It is effective to use any one of these manners in accordance with the usage of the graphite membrane in order to prevent the graphite membrane from being bonded excessively strongly to a substrate having a smooth surface or take a good balance between slippage and anti-slippage of the front surface of the graphite membrane. A product obtained by subjecting any independent graphite membrane of the present invention having excellent surface smoothness to such a treatment is included in the scope of the present invention.

<Raw Material Polymer>

A kind of raw material polymer used in the present invention is not limited particularly as long as the graphite having the good quality is prepared by baking of the polymer. A raw material polymer is preferably an aromatic polymer, and the aromatic polymer is preferably at least one selected from polyimide, polyamide, poly-p-phenylenevinylene, polyquinoxaline, polyoxadiazole, polybenzimidazole, polybenzoxazole, polybenzothiazole, polyquinazolinedione, polybenzoxazinone, polyquinazolone, benzimidazobenzophenanthroline ladder polymer, and derivatives thereof. The films of these polymers may be produced by a publicly known method. As a particularly preferred aromatic polymer, aromatic polyimides, polyparaphenylene vinylene, and poly oxadiazole can be exemplified. Among these polymers, below-described aromatic polyimides prepared by polyamic acid obtained from a reacted product of acid dianhydrides (particularly, aromatic acid dianhydrides) and diamines (particularly, aromatic diamines) are particularly preferred as a raw material polymer for graphite membrane preparation of the present invention.

[Acid Anhydride]

Examples of the acid dianhydride capable of being used for synthesizing an aromatic polyimide include a pyromellitic anhydride (PMDA), 2,3,6,7-naphthalenetetracarboxylic dianhydride, 3,3',4,4'-biphenyltetracarboxylic dianhydride, 1,2,5,6-naphthalenetetracarboxylic dianhydride, 2,2',3,3'-biphenyltetracarboxylic dianhydride, 3,3',4,4'-benzophenonetetracarboxylic dianhydride, 2,2-bis(3,4-dicarboxyphenyl)propane dianhydride, 3,4,9,10-perylenetetracarboxylic dianhydride, bis(3,4-dicarboxyphenyl)propane dianhydride, 1,1-bis(2,3-dicarboxyphenyl)ethane dianhydride, 1,1-bis(3,4-dicarboxyphenyl)ethane dianhydride, bis(2,3-dicarboxyphenyl)methane dianhydride, bis(3,4-dicarboxyphenyl)ethane dianhydride, oxydiphthalic dianhydride, bis(3,4-dicarboxyphenyl)sulfonic dianhydride, p-phenylenebis(trimellitic acid monoester acid anhydride), ethylenebis(trimellitic acid monoester acid anhydride), bisphenol A bis(trimellitic acid monoester acid anhydride), and analogs thereof. These dianhydrides may be used singly or may be used as a mixture containing these dianhydrides in a certain ratio. Particularly because the more a polyimide film has a polymer structure having an extremely rigid structure, the higher the orientation of the polyimide film becomes, and further from the viewpoint of availability of these dianhydride, the pyromellitic anhydride and 3,3',4,4'-biphenyltetracarboxylic dianhydride are particularly preferred.

[Diamine]

Examples of the diamine capable of being used for synthesizing an aromatic polyimide include 4,4'-diaminodiphenyl ether (ODA), p-phenylenediamine (PDA), 4,4'-diaminodiphenyl propane, 4,4'-diaminodiphenyl methane, benzidine, 3,3'-dichlorobenzidine, 4,4'-diaminodiphenyl sulfide, 3,3'-diaminodiphenyl sulfone, 4,4'-diaminodiphenyl sulfone, 4,4'-diaminodiphenyl ether, 3,3'-diaminodiphenyl ether, 3,4-diaminodiphenyl ether, 1,5-diaminonaphthalene, 4,4'-diaminodiphenyl diethyl silane, 4,4'-diaminodiphenyl silane, 4,4'-diaminodiphenyl ethyl phosphine oxide, 4,4'-diaminodiphenyl N-methylamine, 4,4'-diaminodiphenyl N-phenylamine, 1,4-diaminobenzene(p-phenylenediamine), 1,3-diaminobenzene, 1,2-diaminobenzene, and analogs thereof. These diamines may be used singly or may be used as a mixture containing these diamines in a certain ratio. Moreover, from the viewpoint of easy availability of graphite membrane having excellent crystallity due to the high orientation of a polyimide film, and the availability of the diamine, 4,4'-diaminodiphenyl ether (ODA) or p-phenylenediamine (PDA) is preferably used.

[Method for Preparing Polyamic Acid]

The method for preparing the polyamic acid may be any known method. Particularly preferred polymerization methods therefor include as follows:

1) a method of dissolving an aromatic diamine into a polar organic solvent, and cause this diamine to react with an aromatic tetracarboxylic acid dianhydride substantially equal in mole number to the diamine to polymerize the polymerizable components;
2) a method of causing an aromatic tetracarboxylic acid dianhydride to react with an aromatic diamine compound excessively smaller in mole number than this dianhydride in a polar organic solvent to yield a prepolymer having, at both terminals thereof, acid anhydride groups; and subsequently using the aromatic diamine compound to make the aromatic tetracarboxylic acid anhydride substantially equal in mole number to the aromatic diamine compound in the entire step to polymerize the polymerizable components;
3) a method of causing an aromatic tetracarboxylic acid dianhydride to react with an aromatic diamine compound excessively larger in mole number than the dianhydride in a polar organic solvent to polymerize these components to yield a prepolymer having, at both terminals thereof, amino groups; then adding the aromatic diamine compound additionally to the prepolymer; and subsequently using the aromatic tetracarboxylic acid dianhydride to make the aromatic tetracarboxylic acid dianhydride and the aromatic diamine compound substantially equal in mole number with each other through the entire step to polymerize the polymerizable components.
4) a method of dissolving and/or dispersing an aromatic tetracarboxylic acid dianhydride into a polar organic solvent, and then using an aromatic diamine compound to make the dianhydride and the diamine compound substantially equal in mole number to each other to polymerize the polymerizable compounds; and
5) a method of causing an aromatic tetracarboxylic acid dianhydride and an aromatic diamine compound which are substantially equal in mole number to each other to react with each other in a polar organic solvent to polymerize the polymerizable components.

A method for producing polyamic acid from the acid dianhydride and the diamine includes a method in which the polyamic acid is usually produced by dissolving at least one of aromatic acid dianhydrides and at least one of diamines in an organic solvent, and stirring the solution containing the polyamic acid in a controlled temperature condition until polymerization of the above-mentioned acid dianhydride and diamine is completed. These polyamic acid solutions are commonly produced with a concentration in 5 to 35% by weight, and preferably 10 to 30% by weight. When the solution has a concentration in this range, it is possible to achieve an appropriate molecular weight and an appropriate solution viscosity. When a concentration of a polyamic acid solution is much lower, a molecular weight of the polyamic acid is not sufficient, the strength of the obtained polyimide film is not sufficient, and the formation of the polyimide film becomes difficult due to the lower viscosity of the polyamic acid solution in some cases. On the other hand, when a concentration of the polyamic acid solution is much high, the viscosity of the polyamic acid solution is much high, and the formation of the polyimide film becomes difficult.
The acid dianhydride and the diamine in the polyamic solution are preferably substantially equal in molar amount to each other, and a mole ratio of dianhydride to diamine is, for example, 1.5 : 1 to 1 : 1.5, preferably 1.2 : 1 to 1 : 1.2, and more preferably 1.1 : 1 to 1 : 1.1.

[Solvent for synthesis of polyamide acid]

Preferred solvent for synthesis of the polyamic acid is an amide solvent such as N,N-dimethyl formamide, N,N-dimethylacetoamide, N-methyl-2-pyrrolidone and the like, N,N-dimethyl formamide, and N,N-dimethylacetoamide are particularly used.

<Synthesis, Film Formation of Polyimide>

Examples of a method for producing a polyimide include a thermal cure method in which polyamic acid of a precursor is imidized by heating, and a chemically curing method in which both or one of a dehydrating agent typified by acid anhydrides such as acetic anhydride and tertiary amines such as picoline, quinoline, isoquinoline and pyridine, is used as an imidization accelerator for polyamic acid to perform imidization, and any of these methods may be employed. The chemically curing method is preferred because the obtained polyimide film is hardly broken during baking in the case of applying tension, and graphite membrane having good quality such as high electrical conductivity can be easily obtained. On the other hand, in the thermal cure method, since the imidization occurs by heating of polyamide acid, the thermal cure method can be easily used in the case of the formation of the polyimide film in much time, and can be applied to various methods for forming polyimide film such as spin coating, so that the thermal cure method has a merit that there is high degree of freedom on the process of the manufacture of the polyimide film.

For example, a method for preparing a polyimide film using a chemically curing method is as follows. The dehydrating agent containing a larger amount than an amount of stoichiometry and the imidization accelerator containing the same amount as a catalyst are added to a solution containing a polyamic acid and an organic solvent to prepare a mixture, the mixture is casted or coated on a substrate such as alumimum foil, a polymer film such as PET, or a supporting body such as drum or endless belt to prepare a filmlike layer, drying the organic solvent by heating to prepare a film having mechanical strength. Then, the film is further heated, dried, imidized to prepare a polyimide film. The temperature of heating is preferably the range of from 150 °C to 550 °C.

On the other hand, the polyimide film may be obtained by not adding the imidization accelerator, and simply imidizing the film by heating (the thermal cure method), that is, the temperature of heating is preferably the range of from 150 °C to 550 °C.

Furthermore, the polyimide producing process preferably has the step of fixing or drawing the film in order to prevent this film from being shrunken or heighten the orientation of its polymeric chains in the film plane direction. This is because the use of the polyimide film high in orientation in the film plane direction easily makes the crystallinity of the resultant graphite high so that the graphite membrane is easily obtained with a high electrical conductivity and a high thermoconductivity. A reason therefor is that: when the polyimide film is graphitized, carbon atoms in a graphite precursor need to be rearranged into a graphite crystal structure; in the polyimide having originally excellent orientation in the film plane direction, the rearrangement of the graphite crystal structure is not required much; thus, the polyimide is baked to be smoothly and advancingly converted into graphite.

When the polyimide film is desired to be yielded directly onto a substrate such as a copper foil piece, an aluminum foil piece, a quartz plate, or a glassy carbon plate, it is advisable to form a polyamic acid film onto desired one out of such substrates using a bar coater or a spin coater, to heat the film to imidize the acid, and to yield a polyimide film attached on the substrate. In this case also, any one of the chemically curing method and the thermally curing method may be used as far as the method is not any vapor deposition polymerization method.

<Range of thickness of raw material polymer film>

In order to obtain a graphite membrane having a thickness in such a range, a thickness of a polymer film as a raw material is preferably in a range of 40 $\mu$m to 20 nm. This depends on the fact that a thickness of the graphite membrane finally obtained is commonly often about 60 to 30% of a thickness of a starting polymer film having a thickness of 1 $\mu$m or more and about 50 to 20% of a thickness of a starting polymer film having a thickness of 1 $\mu$m or less. Accordingly, this means that in order to obtain a graphite membrane of the present invention having a thickness of 12 $\mu$m or less and more than 10 nm, the thickness of a starting polymer film is preferably in a range of from 40 $\mu$m to 20 nm. The thickness of the polymer film may be, for example, 30 $\mu$m or less, and 30 nm or more.

[Carbonization]

In the present invention, a polymer film of a starting material is heated in an inert gas or in vacuum to perform carbonization. The inert gas such as nitrogen, argon, mixed gas of argon and nitrogen is preferably used. The carbonization is generally carried out at a temperature of 800 to 1800 °C. For example, a method in which a temperature is increased at 800 to 1800 °C at a rate of 10 °C/minute, the temperature is kept for 10 minutes and the like. The rate of increasing the temperature is not limited particularly, and preferably 0.5 °C/minute or more in view point of the improvement of productivity, and 100 °C/minute or less in the view point of sufficiently carrying out carbonization. Generally, the rate for increasing the temperature is preferably 1 °C/minute to 50 °C/minute. A method for heating the polymer film in the carbonization is not limited particularly, and method using a resistance heater such as graphite heater, and method using infrared radiation can be used preferably.

[Graphitization]

The film carbonized by the above method is set at the inside of a graphitizing furnace to carry out the graphitization. Graphitization is usually performed in order to achieve such a high temperature of 2200 °C or more, an electric current is usually passed directly through a graphite heater, and heating is performed with use of Joule heat thereof. The graphitization is carried out in an inert gas, and an argon gas is most suitable as the inert gas, and a small amount of helium may be added to argon.

As the heating temperature is higher, a graphite membrane having a higher electrical conductivity is easily yielded. However, a polymer film having, particularly, a thickness of 5 μm or less is easily converted to graphite even at a relatively low temperature; thus, a heating temperature necessary for yielding the graphite membrane of the present invention is relatively low, and is 2200°C or higher. The matter that graphitization can be attained at such a relatively low temperature is advantageous since a furnace for the graphitization can be made simple and electric powder can be reduced to lower costs. Of course, when the resultant graphite membrane is desired to realize a high electrical conductivity, it is more preferred to make the temperature for the graphitization higher. According to the method of the present invention, in which force is applied to a film to pull the film outward in the film plane direction to improve the resultant graphite membrane in surface smoothness, the resultant graphite membrane tends to be excellent in surface smoothness when the force is applied in a relatively wide temperature range for a relatively long period, or in a relatively high temperature range. Also from this viewpoint, therefore, the temperature for the graphitization is more advantageous as the temperature is higher. Thus, in the graphitization, the heating temperature is preferably 2600°C or higher, more preferably 2800°C or higher, and most preferably 3000°C or higher.

[Size Change at Baking Time]

In the case of an aromatic polyimide, the film-plane-direction size of a carbonized film obtained after the carbonization of the polyimide is shrunken into about 75 to 85% of the size of the original polymer film in many cases when the polymer film is shrunken without applying a force at the carbonizing time. The final membrane-plane-direction size of the graphite membrane is turned into about 85 to 95% of the size of the original polymer film in many cases when the shrinkage and expansion of the film are left to take their own course at the carbonizing time and graphitizing time. A characteristic of the present invention is to impose various limitations onto such a shrinkage and expansion without applying a force. Hereinafter, the limitations usable in the invention will be described in turn.

[Decrease of Wrinkles by Regulated or Controlled Size]

While a raw polymer film is baked, that is, when a polymer film is carbonized or graphitized, or when a polymer film is subjected to carbonization and graphitization, force is applied to the film to pull the film outward along the film plane. In this way, a high-quality graphite membrane is yielded which is especially excellent in surface smoothness, thin, and large in area, and further which has an electrical conductivity of 8000 S/cm or more in the a-b plane direction, i.e., the membrane plane direction.

The method for pulling the film outward along the film plane is preferably a method of pulling the polymer film basically along the inside of the film plane from the center of this polymer film radially to the outside thereof. There is no problem even when from this direction, the angle of the pulling direction is deviated by 45° or less. This deviation of the angle may be a deviation inside the film plane, or a deviation in a direction deviated away from the inside of the film plane. In particular, when the orientation of the polymer film is anisotropic, it is effective to pull the film from the center (for example, the centroid) of the film not into radial directions but into directions deviated intentionally from the radial directions. Also when the structure of the graphite membrane or the electrical conductivity or some other property of this membrane is desired to be intentionally caused to have anisotropy, it is also effective to pull the film into directions deviated from the radial directions.

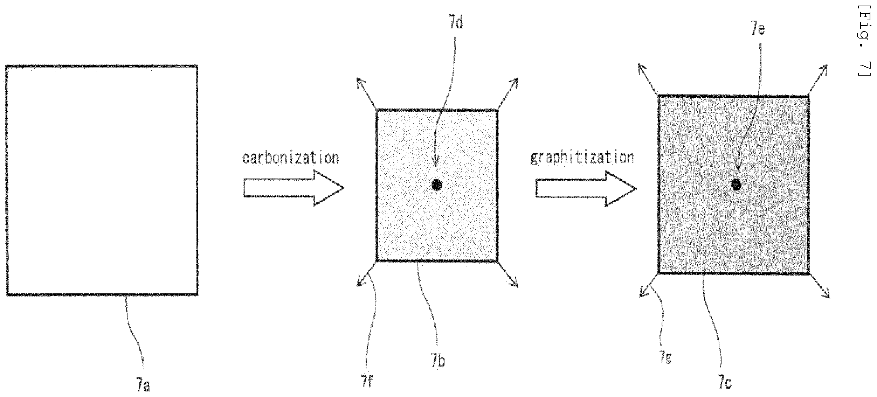

One method therefor is a method of regulating or controlling the size of the polymer film, the carbonized film or graphited film mechanically during baking. When the shrinkage and expansion of, e.g., an aromatic polyimide film 7a are left to take their own course, the size of a carbonized film 7b in the film plane direction is shrunken into about 80% of the size of the original polyimide film 7a after the film 7a is carbonized at 1000°C. A graphited membrane 7c yielded by next graphitization at about 3000°C is expanded into about 90% of the size of the original polyimide film 7a (Fig. 7).

The complicated shrinkage and expansion give many wrinkles to the resultant film, particularly, the resultant thin film when the membrane is produced. Thus, in the present invention, as represented by, e.g., arrows 7f and 7g, from a center 7d or 7e of the carbonized film or graphitized film, force for widening the film to an appropriate degree into the radially extending directions is applied to the film to decrease wrinkles largely. In this case, for example, the size of the film is mechanically fixed at the carbonizing time to adjust the film into a size larger than the size of the film on the basis of shrinkage without applying a force after the carbonization. Alternatively, the film is formed to change the size thereof gradually into a predetermined size (while the film is made into a pulled state, the film is gradually moved in a shrinking direction thereof). In this way, wrinkles of the film which are generated by uneven shrinkage at the carbonizing time are stretched, so that the resultant carbonized film can be made high in surface smoothness. If the regulated or controlled size is excessively larger or smaller than the shrunken size without applying a force, wrinkles are reservedly generated. Thus, in order to make the arithmetic average roughness Ra of the front surface of the membrane small, the film size is required to be regulated into an appropriate range. This range is varied in accordance with the thickness or strength of the carbonized film or graphitized film; thus, it is difficult to determine the range without reservation. However, it is usually recommendable in the carbonizing step to make the size of the film equal to or less than the size before the carbonization. In the carbonizing step and/or the graphitizing step, it is recommendable to make the size of the film larger than the shrunken size thereof without applying a force. A specific and preferred numeral range of the size will be described later.

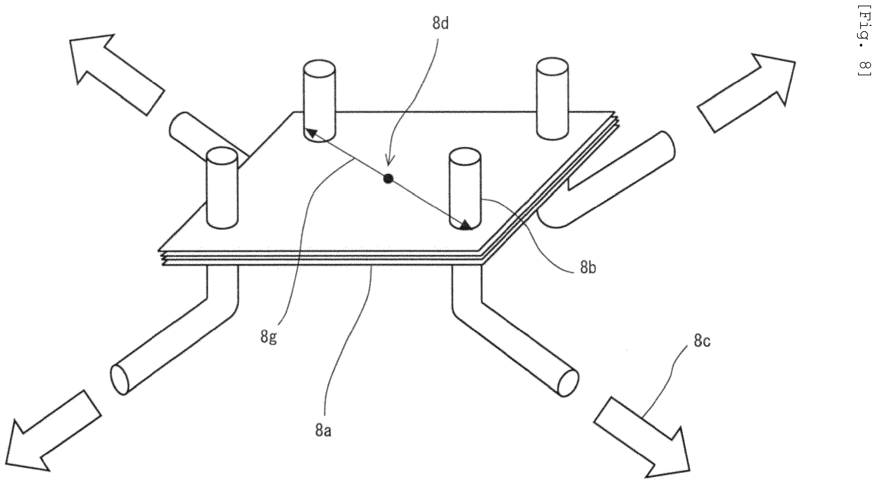

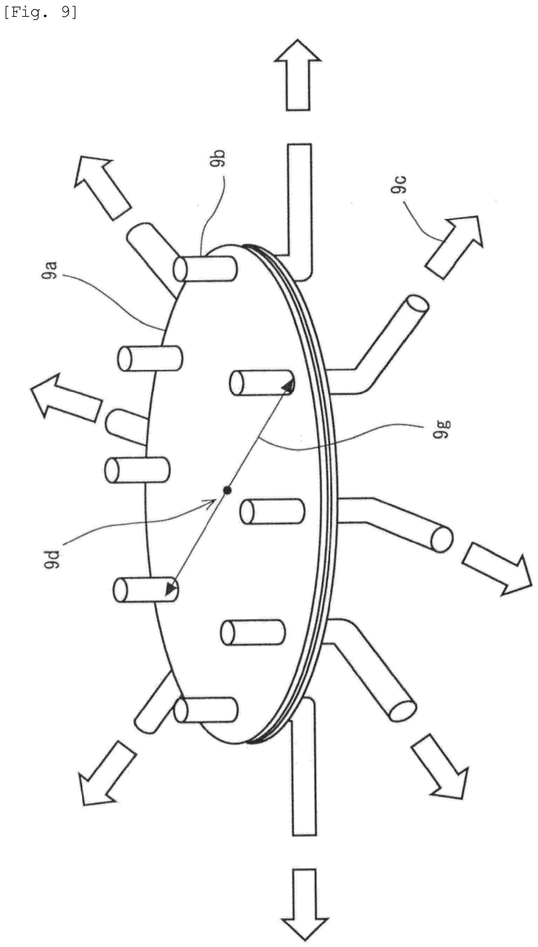

In order to control the size of the film, it is necessary, for example, to fix the edge of the film onto a jig. The method therefor is, for example, a method of sandwiching the edge of the film between plate-form carbon members from the upper and lower of the film, or a method of making plural holes in the edge of the film, and then inserting the hooks made of carbon into holes, or passing strings made of carbon into the holes. In the latter case, in order to protect the holes in the edge of the film from being physically broken, it is effective to fit eyelets made of carbon, paper, a nonwoven fabric, or a resin such as polyimide to the holes, or increase the number of the holes to weaken force applied to each of the holes. The means or method for controlling the size mechanically may be a method of using a fixed frame made of graphite, or a method of using movable arms made of graphite (Figs. 8 and 9). Although this movable-arm-used method requires a large-scale machine, the method makes it possible to make various controls or minute adjustments to be high in versatility.

The same as described above is applied to the graphitizing process. At the graphitizing time, the size of the carbonized film or graphite film is regulated in the state of, for example, fixing the edge of the carbonized film or the graphite film mechanically onto a jig; and thus wrinkles generated by an uneven expansion of the film can be decreased to improve the resultant graphite membrane in surface smoothness. At the graphitizing time, the size of the film elongates without applying a force; thus, it is desirable to make a control to pull the edge of the film to elongate the film into a predetermined size.

In an example in Fig. 8, columnar arms 8b each bent into an L-shape and made of a graphite (CIP (cold isotropic press) material) are inserted, respectively, into corners of each of polymer films or carbonized films 8a in the form of a polygon (rectangle in the illustrated example), and then each of the arms 8b is shifted, along a radially extending direction 8c, from centers 8d of the films 8a into an enlarging direction or shrinking direction. In this way, an appropriate tension can be caused to act onto the films.

In an example of Fig. 9, columnar arms 9b each bent into an L-shape and made of a graphite (CIP material) are inserted, respectively, into circumferential portions of each of polymer films or carbonized films 9a in the form of a cycle (perfect circle in the illustrated example; however, the form may be elliptical), and each of the arms 9b is shifted, along a radially extending direction 9c, from centers 9d of the films 9a into an enlarging direction or shrinking direction. In this way, an appropriate tension can be caused to act onto the film.

In the example in each of Figs. 8 and 9, the films 8a each having the same shape, or the films 9a each having the same shape are laminated onto each other, and then the size of the films is controlled by the arms. However, the arms may be used to regulate the size of only a single film 8a or 9a.

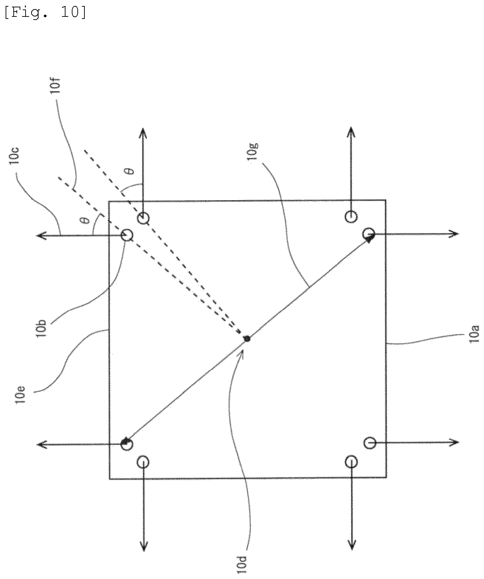

Fig. 10 is a conceptual view illustrating an example of the case of pulling a film in directions deviated from the radial directions. In this illustrated example, plural (two in the illustrated example) arm fitting sites 10b are located at each corner of a polymer film or carbonized film that is a film 10a in the form of a polygon (rectangle in the illustrated example). In each of the fitting sites, an arm is shifted into a direction 10c orthogonal to a side 10e of the film that is nearest to the fitting site. This direction 10c is different from a direction 10f extending radially from a center 10d of the film 10a. However, this direction 10c has an angle θ to the radially extending direction 10f. This angle θ is 45° or less.

When the wrinkles are stretched in any one of the carbonizing process and the graphitizing process, an advantageous effect is produced. However, when the film size is controlled at the graphitizing time of a final process, the effect of improving the surface smoothness is higher. Of course, it is indispensable to regulate the size appropriately to stretch the wrinkles. If the film size is controlled to a departure size, no advantageous effect is produced, and further an adverse effect may be produced. Higher advantageous effects are produced by stretching the wrinkles by mechanical size control at both of the carbonizing time and the graphitizing time. A reason therefor is as follows: even the size control at only the graphitizing time produces a sufficiently high surface-smoothness-improving effect; however, in order to realize a better surface smoothness, also at the carbonizing time, the surface smoothness is beforehand improved by the size control. This operation further heightens the surface-smoothness-improving effect at the graphitizing time. In the case of making the size control mechanically at only the graphitizing time to stretch the wrinkles, it is preferred from the viewpoint of decreasing the wrinkles more effectively to control the size of the film to a larger size to pull the film more strongly than in the case of making the size control at both the carbonizing time and the graphitizing time to stretch the wrinkles. However, the risk for breaking the film becomes high, so that it is necessary to carefully control the size of the film.

If in this case the film size is controlled to a size substantially equal to or smaller than the original size without applying a force based on the heating of the film, no advantageous effect of stretching the wrinkles is produced, and reversely wrinkles may be generated. If the film size is controlled to a size far larger than the original size without applying a force based on the heating, the film does not come to resist against pulling, and is thus broken.

In the carbonizing process, the wrinkles can be stretched by controlling the film into a size 0.2 to 12% larger (i.e., 100.2 to 112%) than the final size (100%) without applying a force based on the heating (that is, the size obtained when the shrinkage of the film is left to take its own course). By controlling the film to a size larger than this size, the possibility that the film is broken becomes high. The enlargement ratio of the carbonized film with controlled size relative to the carbonized film with size without applying a force is preferably from 0.5 to 8%, more preferably from 0.8 to 6%, even more preferably from 1 to 5%, and most preferably from 2 to 4%.

In the graphitizing process, the wrinkles can be stretched by regulating the film into a size 0.2 to 9% larger (i.e., 100.2 to 109%) than the final size (100%) without applying a force based on the heating (that is, the size obtained when the expansion of the film is left to take its own course). By regulating the film to a size larger than this size, the possibility that the film is broken becomes high. The enlargement ratio of the carbonized film with controlled size relative to the carbonized film with size without applying a force is preferably from 0.5 to 7%, more preferably from 1 to 5%, and most preferably from 2 to 4%.

The wrinkles can be stretched also by controlling the size of a film plane direction that is finally regulated at the carbonizing time or at the graphitizing time relatively to the size of the film plane direction of the original polymer film. At both of the carbonizing time and the graphitizing time, the size of the film may be controlled. The size of the film plane direction controlled at the carbonizing time is, for example, from 75 to 87%, preferably from 77 to 87%, more preferably from 79 to 86% of the size of the film plane direction of the original polymer film. The size of the film plane direction controlled at the graphitizing time is, for example, from 85 to 97%, preferably from 87 to 97%, more preferably from 89 to 97% of the size of the film plane direction of the original polymer film. The size referred to herein is a size using, as a reference, the distance (8g, 9g or 10g) between two points positioned symmetrically with respect to the center (8d, 9d or 10d) of the film. When plural reference sizes are present, it is sufficient to use, as a reference, the size of a portion of the film that is easily measured or controlled. For example, when arms are inserted into holes in a polygonal film and then the film is pulled, about circular holes that are used for pulling the film through arms and are paired on a diagonal line of the polygon, the following line segment may be used as a reference: a line segment through which points are linked with each other, the points being present on the circumference of its inside diameter and present at pullingdirection sides of the film. This case is convenient since the control of the displacement of the arms can be directly related to the size control at real time.

The film may be made into a pulled state at all times during heating, or may be made into a pulled state only for a partial time of the heating period, or only in a partial range of the heating temperature range. When the film is always made into a pulled state, higher advantageous effects in surface smoothness are produced. However, the film may come not to endure the pulling. Thus, it may be necessary to select the timing of the size control and the period therefor with a good balance, considering the breaking strength or the thickness of the film also.

This method makes it possible to improve the surface smoothness of not only a single membrane but also that of many membranes while the films are simultaneously baked. Thus, the method is excellent in the productivity. Moreover, the method makes it possible to mechanically make a fine adjustment of the size at any timing to have an advantage of making a precise control easily.

This method can be applied to a graphite membrane which has once been graphitized while the film is thermally treated again at a graphitizing temperature (for example, 2200°C or higher). It is however preferred from the viewpoint of the productivity to perform this method at the same time of the graphitization.

[Decrease of Wrinkles by Applying Predetermined Force to Film]

The method for pulling the film outward along the film plane may be a method of applying a predetermined force mechanically to the film during baking. In this case, at the carbonizing or graphitizing time or at both of the carbonizing time and the graphitizing time, the edge of the film is outward pulled by a predetermined force (Figs. 8 and 9). It is preferred to pull the film basically along the inside of the film plane radially and outwards from the center of the film.

However, no problem is caused even when the film is pulled at an angle deviated by 45° from this direction. This deviation of the angle may be a deviation inside the film plane, or a deviation in a direction deviated apart from the film plane. In particular, when the orientation of the polymer film is anisotropic, it is effective to pull the film from the center of the film not into the radial directions but into directions deviated intentionally from the radial directions. This manner is effective also when it is desired that the structure of the graphite membrane or the electrical conductivity or some other property of this membrane is intentionally caused to have anisotropy. For example, when the film is stretched by pulling eight sites of the film, the film may not be pulled radially into eight directions, but may be pulled at every adjacent two sites of the eight sites into the same direction to be stretched into four directions (Fig. 10).

The means for applying the predetermined force to the film may be, for example, a method using a weight, a method using a spring, or a method of making a control using movable arms. Although this movable-arm-used method requires a large-scale machine, the method makes it possible to make various controls or minute adjustments to be high in versatility. Whether this method is used at only the carbonizing time, or used at only the graphitizing time, advantageous effects are produced. However, the surface-smoothness-improving effect is greater when the method is used at the graphitizing time of a final process. The use of the method at both of the carbonizing time and the graphitizing time produces an even greater surface-smoothness-improving effect. The pulling force may be appropriately varied, or a constant force may be continuously applied to the film. In order to make the breaking of the film difficult, it is preferred to strengthen the applied force gradually until the force reaches a predetermined force without applying the predetermined force abruptly to the film. The force may be applied to the film for only a partial time of the heating period or in only a partial range of the heating temperature range. The surface-smoothness-improving effect is higher when the film is always made into a force-applied state. However, the film may come not to endure the pulling. Thus, in some cases it is necessary to select the timing of the size control and the period therefor with a good balance, considering the breaking strength or the thickness of the film also. For example, a carbonized film tends to be brittle. Thus, it may be preferred not to apply a large force thereto. However, when the applied force is too weak, the wrinkle-deceasing effect is insufficient. Thus, a force of some value or large needs to be applied to the film.

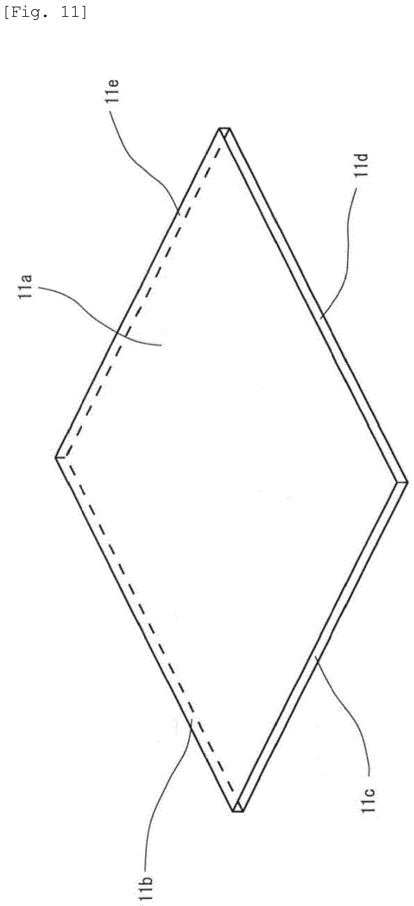

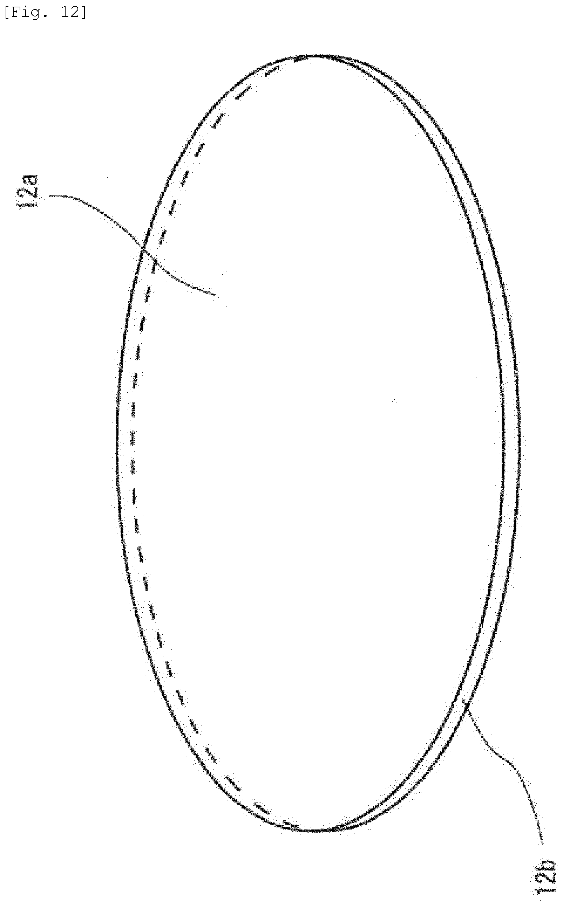

The range of the strength of the force applied to the film can be defined as the total of applied forces (tensions) per total area of cross sections of an original polyimide film (cross sections of the film in all-direction excluding the widest front and rear film surfaces) (Figs. 11 and 12). Fig. 11 is a view for describing a square film 11a, and the total area of its cross sections is the total area of individual cross sections 11b, 11c, 11d and 11e. When four arms in the total number are each inserted to one out of four corners of this film 11a and then the film is pulled, the value obtained by dividing the total of respective tensions applied to the arms by the total area of the cross sections is called the "total pulling force per total cross section area of the film". Fig. 12 is a view for describing the definition of the tension to a circular sample. Fig. 12 shows a circular film 12a, and the total area of its cross section is the area of a side surface 12b of the film 12a. When arms (the number thereof being eight when the film is pulled as illustrated in Fig. 9) are inserted into the circumference of this film 12a at regular intervals, and then the film 12a is pulled, the value obtained by dividing the total of respective tensions applied to the arms by the total area of the cross section is called the "total pulling force per total cross section area of the film".

The carbonized film is relatively brittle to be easily broken. Thus, at the carbonizing time, the pulling degree is relatively weak. The total pulling force per total area of the original polyimide film may be from 8 to 180 $gf/mm^2$. The total pulling force is more preferably from 10 to 100 $gf/mm^2$, even preferably from 15 to 70 $gf/mm^2$, and even more preferably from 20 to 50 $gf/mm^2$, and even more preferably from 30 to 40 $gf/mm^2$. As the graphitization advances more and more, the membrane becomes relatively stronger to be less broken. Thus, when a graphitizing membrane is pulled, the film may be relatively strongly pulled. The total pulling force may be from 8 to 1500 $gf/mm^2$ per total area of the original polyimide film. The total pulling force is preferably from 8 to 1200 $gf/mm^2$, more preferably from 10 to 800 $gf/mm^2$, even more preferably from 15 to 600 $gf/mm^2$, even more preferably from 20 to 400 $gf/mm^2$, even more preferably from 30 to 300 $gf/mm^2$, even more preferably from 40 to 200 $gf/mm^2$. The pulling force may be equivalent to that at the carbonizing time.

This method also makes it possible to improve the surface smoothness of many films while the films are simultaneously baked. Thus, the method is excellent in producing performance. Moreover, the method makes it possible to mechanically make a fine adjustment of the size at any timing to have an advantage of making a precise control easily.

This method can be performed while a graphite membrane that has once been graphitized is again heated at a graphitizing temperature (for example, 2200°C or more). From the viewpoint of the productivity, however, the method is preferably performed at the same time of the graphitization.

[Baking (1) of Film Stacked with Substrate]

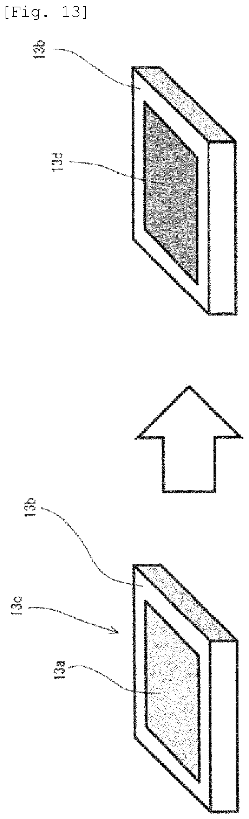

The means for applying force to the film outward along the film plane may be a method of carbonizing and graphitizing a polymer film in the state of being stacked with a substrate having strong mechanical strength (Fig. 13). Specifically, as illustrated in Fig. 13, a polymer film 13a is stacked with a substrate 13b, and this stacked body 13c is carbonized to yield a carbonized film 13d. This carbonized film 13d is graphitized while keeping the state of being stacked with the substrate 13b. Alternatively, the carbonized film 13d is separated from the substrate 13b, and subsequently graphitized so that the arithmetic average roughness Ra of the front surface of the graphite membrane can be made small. While the polymer film 13a or the carbonized film 13d is baked in the state of being bonded to the substrate 13b, neither wrinkles nor undulations are generated. Thus, the resultant graphite membrane can be improved in surface smoothness.

As the used substrate, any substrate is usable without causing any problem as far as the substrate can ensure a firing temperature of some value or higher, and has a surface smoothness of some value or higher. Examples of the substrate include copper foil and nickel foil pieces; and quartz glass, a silicon wafer, a SiC plate, a graphite membrane, a graphite plate, and a glassy carbon plate. As the substrate, a polymeric material may also be used. The substrate of this polymeric material is preferably larger in thickness than the polymer film. Specifically, when the polymers of the polymer film and the substrate are each an aromatic polyimide, it is preferred that the thickness of the aromatic polyimide film as the polymer film ranges from 20 nm to 40 $\mu$m, and that of the aromatic polyimide film as the substrate ranges from 5 to 150 $\mu$m.

Specifically, it is advisable to use, e.g., a bar coater or a spin coater to form a polymer film onto a substrate as described above, and carbonize or graphitize the workpiece as it is up to a limit temperature at which the substrate can be ensured. When a polymer substrate is used, it is sufficient merely to stack the polymer substrate and the polymer film onto each other. The method for forming, for example, a polyimide may be any one of the above-mentioned chemical curing and thermal curing. The chemical curing has an advantage that the resultant polyimide and graphite are excellent in orientation, and the graphite is excellent in electrical conductivity and other properties. The thermal curing is small in imidizing speed at room temperature so that the curing can attain the coating of the imide in a long period to easily increase the flexibility of the producing process.

In the case of using a substrate having a melting point of, e.g., 2600°C or higher, such as a graphite or glassy carbon substrate, the polymer film can be graphitized up to 2600°C or higher, preferably to a final graphitization while keeping a state stacked with the substrate. Thus, a graphite membrane especially excellent in surface smoothness can be obtained. Also in the case of using, as the substrate, a specific polymeric material convertible to graphite, this substrate itself is carbonized and graphitized in the same manner as the polymer film. Thus, the polymer film can be graphitized up to, e.g., 2500°C or higher, preferably to a final graphitization while keeping a state stacked with the substrate. In this case, the polymers of the polymer film and the polymer substrate are each preferably an aromatic polyimide.

In the case of using a substrate other than the above, for example, a substrate having a melting point of 1000°C or higher (in particular, the substrate having the melting point of lower than 2600°C), the polymer film is heated (carbonized or graphitized) up to a limit temperature at which the substrate can be ensured, for example, up to 950°C or higher (particularly, to a temperature lower than the melting point of the substrate by 100°C or more). Thereafter, the carbonized film or the graphite membrane is taken away from the substrate by, for example, etching or physical peeling, and then the film alone is heated (carbonized or graphitized) at a high temperature.

Wrinkles of any graphite membrane are based on uneven shrinkage or expansion of a precursor membrane thereof while the precursor membrane is heated. Thus, it is preferred from the viewpoint of an improvement in the surface smoothness to heat the precursor membrane stacked with a substrate up to a temperature as high as possible. In the present invention, the polymer film stacked with the substrate is heated to, e.g., 950°C or higher, preferably 1000°C or higher, more preferably 1200°C or higher, even more preferably 1300°C or higher, even more preferably 1500°C or higher, even more preferably 2500°C or higher, and most preferably 2800°C or higher.

This method also makes it possible to bake many graphite membranes at one time to be excellent in the productivity. When a bendable substrate such as a metal foil piece is used, the method may be further improved in the productivity according to a rollto-roll manner. When only a substrate is prepared without preparing any large-scale apparatus, this method is relatively easily usable by using a simple baking furnace which does not have a pressing or pulling function or such a function.

In the case of using a polymer material for the substrate, a releasing layer may be interposed between the substrate and the polymer film. The releasing layer may be the same as given as examples in item "Baking (2) of Film Stacked with Substrate" described below.

[Baking (2) of Film Stacked with Substrate]

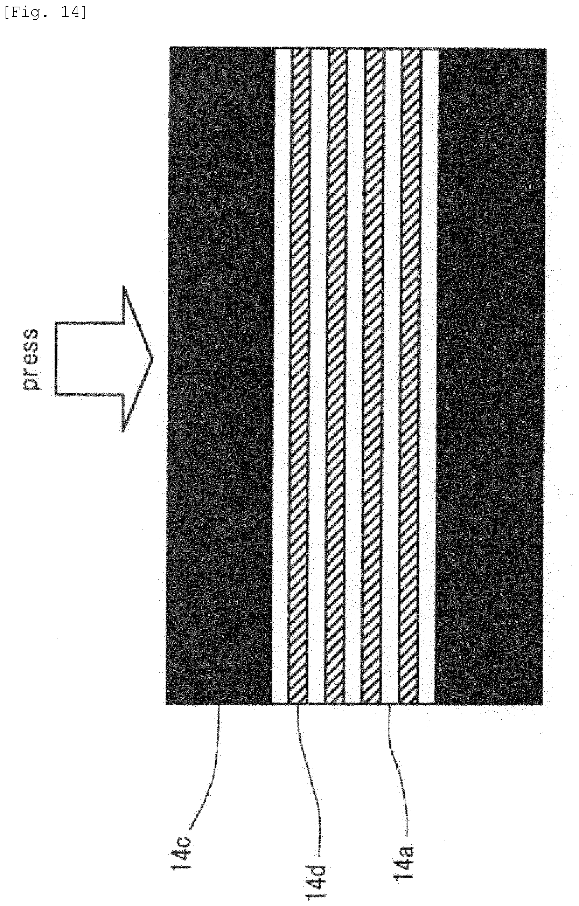

As illustrated in Fig. 14, when many polymer films (sample films) 14a themselves are laminated onto each other to make the total thickness of the resultant large, this laminate is sandwiched between second substrates (graphite plates in the illustrated example) 14c, and then a load is applied thereto in a direction of an angle of 30° or less from a direction perpendicular to the film plane, the following state can be attained: each of the sample films 14a makes use of the other sample films 14a as a first substrate excellent in mechanical strength. In this state, the workpiece is carbonized or is carbonized and graphitized. After the graphitization, the resultant plural graphite membranes are peeled off one by one to produce the graphite membrane with an excellent surface smoothness. In the case of using the other sample films as the first substrate in such a way, at the carbonizing time or the graphitizing time the parts corresponding to the substrate (the first substrate) are also shrunken and expanded in the film plane direction in the same manner as the sample films. Accordingly, in this case, apart from the case where a substrate such as a metal foil piece is hardly varied in size, both of the load onto the film plane and the strengthening of the mechanical strength restrain the workpiece from being wrinkled while the workpiece can make use of the effect of pulling the workpiece outward in the film plane direction by a subtle force. As a result, the resultant graphite membrane can be more effectively prevented from being bent, broken or unevenly wrinkled, or minutely cracked or turned to have minute defects inside the film.

In the illustrated example, the number of the polymer films 14a is four. However, the number of the polymer films 14a is not particularly limited, and may be, for example, 100 or more, or 1000 or more.

The method for applying the load to the film may be an appropriate already known method, such as a method using a weight, or a pressing method. The weight-used method is excellent since the method does not require the addition of a pressing or any other especial mechanism to a furnace used in carbonization and graphitization, and can make use of an already existing furnace as it is. When a mechanical method such as pressing is used, an appropriate load can be applied to the film at an appropriate timing, so that this method has an advantage of making a precise control easily. The value of the load needs to be controlled to restrain the generation of wrinkles and simultaneously realize the integration of the laminated films during baking, and needs not to bond the graphite membranes excessively to each other after the firing. The value of the load therefor is appropriately not less than 0.01 kgf/cm$^2$ and not more than 60 kgf/cm$^2$, more preferably not less than 0.02 kgf/cm$^2$ and not more than 30 kgf/cm$^2$, even more preferably not less than 0.05 kgf/cm$^2$ and not more than 15 kgf/cm$^2$, even more preferably not less than 0.1 kgf/cm$^2$ and not more than 8 kgf/cm$^2$, and even more preferably not less than 0.5 kgf/cm$^2$ and not more than 4 kgf/cm$^2$.

It is generally preferred for the direction in which the load is applied to the film to be a direction perpendicular to the film plane. In the case of applying force in a direct deviated slightly from the film plane direction to stretch the film in an oblique direction to aim to a greater wrinkle-decreasing effect, the load may be applied into an oblique direction, by 30° or lower, from the direction perpendicular to the film plane. However, a mechanism or control therefor becomes somewhat complicated. About a laminate of sample films as described above, a greater surface-smoothness-improving effect is produced by sandwiching every partial laminate having a predetermined total thickness of the entire laminate of the sample films between hard graphite plates or glassy carbon plates.

Also in the case of this item "Baking (2) of Film Stacked with Substrate", the thickness of each of the raw polymer films ranges not less than 20 nm and not more than 40 μm in the same manner as in the respective cases of the other methods. In almost all cases, the thickness of each of the raw polymer films ranges not less than 30 nm and not more than 30 μm.

However, when the load is large, there may be caused a case in which after the baking the graphite membranes are bonded to each other so that when any one of the membranes is peeled off from the others, the membrane may be broken. Thus, the membrane may need to be carefully peeled off. Moreover, it is advisable to lay a releasing layer 14d between any adjacent membranes 14a and 14a in order to prevent the adjacent membranes from being bonded to each other (Fig. 14). An especial restriction is not imposed onto the releasing layer 14d as far as this layer does not hinder the formation of a graphite membrane, and can prevent the membranes from being bonded to each other. The releasing layer is preferably made of, e.g., a material having fluidity such as oil or organic solvent, a pasty material such as resin paste, a sheetform layer such as a paper or a nonwoven fabric piece or a resin film, or a powder such as resin powder, carbon powder, graphite powder, or diamond powder. In general, any material that can endure a relatively high temperature is preferred. Those decomposed or vaporized at a predetermined temperature to disappear from between the films such as oil, an organic solvent, a resin paste, a resin film, resin powder are excellent since these do not give any impurity to the resultant graphite membrane. Graphite powder, a resin sheet which is heated to be turned to graphite, resin powder and others each have an advantage of exhibiting, as a releasing layer, an effect thereof stably up to the last of the graphitizing process. Of course, this method makes it possible to bake many graphite membranes simultaneously to be especially excellent in the productivity.

The releasing layer may be formed between each of the second substrates (graphite plates) 14c and the polymer film 14a.

[Baking (3) of Film Stacked with Substrate]

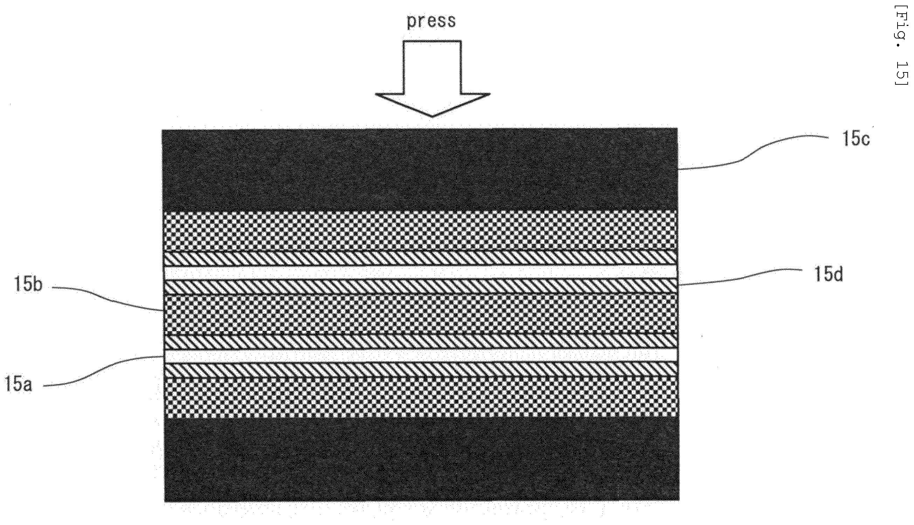

As illustrated in Fig. 15, each polymer film (sample film) 15a is inserted between polymer films (substrates) 15b which are each larger in thickness than this sample film and are each heated to be converted to graphite, so that these are put onto each other. This laminate is sandwiched between a pair of second substrates (graphite plates in the illustrated example) 15c, and load is applied thereto into a direction deviated, by 30° or lower, from a direction perpendicular to the film plane. In this way, the laminate can be made into the state that mechanical strength is given to the sample films. In this state, the laminate is subjected to both of carbonization and graphitization, and after the graphitization the resultant graphite membranes 15a are peeled off from the graphitized substrates 15b. In this way, the graphite membranes 15a can be produced with an excellent surface smoothness. Also in the case of using, as substrates, polymer films in such a way, moieties corresponding to the substrates are shrunken or expanded in the film plane direction at the carbonizing time and at the graphitizing time, similarly to the sample films. For this reason, in this case, apart from the case where substrates such as metallic foil pieces are hardly varied in size, the present laminate is restrained from being wrinkled by both of load onto the film plane and the strengthening of the mechanical strength while the laminate can simultaneously make use of an effect of pulling the laminate outward in the film plane direction by a subtle strength. As a result, the resultant graphite membranes can be more effectively prevented from being warped, broken or unevenly wrinkled, or finely cracked or turned to have fine defects inside the membranes.

In the illustrated example, the polymer substrates 15b are used in three pieces, and the polymer films 15a are each inserted into between every adjacent two of the polymer substrates 15b (at two sites). The number of sites where the polymer films 15a are inserted may be appropriately set in accordance with the number of the polymer substrates 15b. The number may be three or more, or four or more. At each of the inserting sites, one of the polymer films 15a may be inserted, or plural polymer films may be laminated onto each other. The lamination number of the laminated polymer films 15a is not particularly limited, and may be, for example, 100 or more, or 1000 or more.

The method for applying the load to the films may be an appropriate already known method, such as a method using a weight, or a pressing method. The weight-used method is excellent since the method does not require the addition of a pressing or any other especial mechanism to a furnace used in carbonization and graphitization, and can make use of an already existing furnace as it is. When a mechanical method such as pressing is used, an appropriate load can be applied to the films at an appropriate timing. Thus, this method has an advantage of making a precise control easily. The value of the load needs to be controlled to restrain the generation of wrinkles and simultaneously realize the integration of the laminated films while the films are baked, and needs not to bond the graphite membranes excessively to each other after the baking. The value of the load therefor is appropriately not less than 0.01 $kgf/cm^2$ and not more than 60 $kgf/cm^2$, more preferably not less than 0.02 $kgf/cm^2$ and not more than 30 $kgf/cm^2$, even more preferably not less than 0.05 $kgf/cm^2$ and not more than 15 $kgf/cm^2$, and even more preferably not less than 0.1 $kgf/cm^2$ and not more than 8 $kgf/cm^2$, and even more preferably not less than 0.5 $kgf/cm^2$ and not more than 4 $kgf/cm^2$. It is generally preferred for the direction in which the load is applied to the films to be a direction perpendicular to the film plane. In the case of applying force to the film in a direction deviated slightly from the film plane direction to push and stretch the films in an oblique direction to aim to a greater wrinkle-decreasing effect, the load may be applied into an oblique direction, by 30° or lower, from the direction perpendicular to the film plane. However, a mechanism or control therefor becomes somewhat complicated.

About the polymer films used as the substrates, it is allowable to laminate these films and the sample films alternately, or sandwich each of the sample films, from both outer surfaces of the sample film, between two of the polymer films, and thus use the two polymer films for the sample film. The former case is excellent in the productivity due to the large proportion of the thickness of moieties of the samples. The latter case is advantageous for an improvement of the resultant graphite membranes in surface smoothness. About the laminate of the sample films and the polymer films, a greater surface-smoothness-improving effect is produced by sandwiching every partial laminate having a predetermined total thickness of the entire laminate of the sample films and the polymer films between hard graphite plates or glassy carbon plates.

In this case also, the thickness of each of the raw polymer films ranges not less than 20 nm and not more than 40 μm in the same manner as in the respective cases of the other methods. In almost all cases, the thickness of each of the raw polymer films ranges not less than 30 nm and not more than 30 μm. If the thickness of each of the polymer films used as the substrates is too small, the force at which these films pull the sample films is weak so that the surface-smoothness-improving effect is not very great. If the thickness is too large, the volume of the sample film moieties is relatively small when the polymer films and the sample films are stacked onto each other, so that the productivity of the graphite membrane is lower during baking. From such a viewpoint, the thickness of the polymer film used as each of the substrates is preferably larger than that of each of the polymer films. The thickness of the substrate is set into a range preferably from 5 to 150 μm, and more preferably from 10 to 100 μm. The polymer film used as the substrate is usable without causing any problem as far as the film is heated to be convertible to a graphite film or a carbonized film. Preferred examples of a raw material of this film include polyimide, polyamide, poly-p-phenylenevinylene, polyquinoxaline, polyoxadiazole, polybenzimidazole, polybenzoxazole, polybenzthiazole, polyquinazolinedione, polybenzoxadinone, polyquinazolone, and benzimidazobenzophenanthroline ladder polymers; and respective derivatives of these compounds. It is particularly preferred to use an aromatic polyimide, poly-p-phenylenevinylene, or polyoxadiazole. In a preferred embodiment of the present invention, a polymer film used as a substrate, and a polymer film are each made of an aromatic polyimide.

However, in a case where the load is large, each of the graphite membranes 15b, which is obtained by graphitizing a polymer film, is bonded to the graphite membrane 15a, which is obtained by graphitizing a polymer film (sample film), after the laminate is baked. Thus, when the graphite membrane 15b is peeled off, this graphite membrane may be broken. Thus, it may be necessary to peel off the graphite membrane carefully. In order to prevent the bonding of the sample film, it is preferred to lay a releasing layer 15d between the sample film 15a and the adjacent substrate 15b. The releasing layer is not particularly limited as far as the layer does not hinder the formation of the graphite membrane and can prevent the bonding of the film. The releasing layer is preferably made of, e.g., a material having fluidity such as oil or organic solvent, a pasty material such as resin paste, a sheet-form layer such as a paper or a nonwoven fabric piece or a resin film, or a layer of powder such as resin powder, carbon powder, graphite powder, or diamond powder. In general, any layer that can endure a relatively high temperature is preferred. Those decomposed or vaporized at a predetermined temperature to disappear from between the films and the substrates such as oil, an organic solvent, a resin paste, a resin film, resin powder are excellent since these do not give any impurity to the resultant graphite membranes. Graphite powder, a resin sheet which is heated to be turned to graphite, resin powder and others each have an advantage of exhibiting, as a releasing layer, an effect thereof stably up to the last of the graphitizing process. Of course, this method makes it possible to bake many graphite membranes simultaneously to be especially excellent in producing performance.

The releasing layer may be formed between each of the second substrates (graphite plates) 15c and the substrate 15b. When polymer films 15a are laminated onto each other at one site and the laminate is used, a releasing layer may be formed between every adjacent two of the polymer films 15a.

[Baking (4) of Film Stacked with baking Substrate]

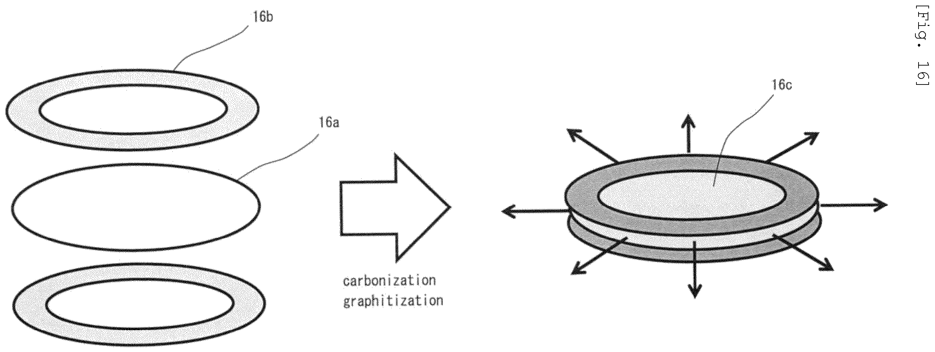

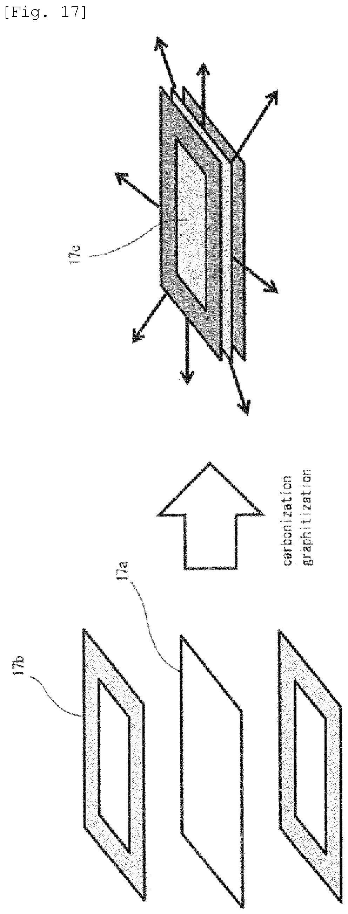

Each of Figs. 16 and 17 illustrates an example of a method of using the following as frames or substrates that are means for applying force to a sample polymer film 16a or 17a outward along the film plane: polymer film frames 16b or 17b which are smaller in size shrinkage ratio than the sample polymer film after the film is finally graphitized, and are excellent in mechanical strength. In the illustrated examples, in a main manner or means of a method other than the application of load, the sample polymer film 16a or 17a is stacked with the polymer films 16b or 17b, and the resultant is carbonized and graphitized while keeping this stacked state. In this way, moieties of the frames 16b or 17b act to pull a moiety of the sample polymer film 16a or 17a outward, thereby yielding a graphite membrane 16c or 17c excellent in surface smoothness. Also in the case of using the substrates (not illustrated), the substrates are stacked with the circumference of the polymer film without being stacked with other moieties of the polymer film, thereby making it possible to cause the substrates to have substantially the same function as the frames, so that the circumstantial portion of the polymer film can be pulled outward.

It is allowable to carbonize or graphitize the sample polymer film 16a or 17a, and the polymer film frames 16b or 17b separately, stack the carbonized film or graphitized film with the carbonized or graphitized flames, which may be substrate-form frames (this same matter will be applied to the following description), and subsequently carbonize or graphitize, or graphitize the stacked body. It is preferred to carbonize the sample polymer film 16a or 17a, and the polymer film frames 16b or 17b, or the substrates separately, stack the carbonized film with the carbonized flames (substrates), and subsequently carbonize and graphitize, or graphitize the stacked body. For example, polyimide is also varied in the degree of a size change thereof in the film plane when baked (a shrinkage when carbonized or an expansion when graphitized) in accordance with the composition, the thickness, or a method for forming the graphite membrane. When frames (or substrates) each made of a thick polymer film excellent in mechanical strength and small in size shrinkage ratio after finally graphitized are stacked with a thin polymer film as a sample and then the stacked body is baked, the thin sample film is finally pulled outward in the film plane direction by the frames (substrates), which are small in size shrinkage ratio, so that wrinkles of the resultant are stretched.

The sample polymer film, and the polymer films used as the frames or the substrates may each be made of polyimide, or may be made of different polymer species which are baked to be finally turned to graphite or carbon. Examples of a polymer other than polyimide include poly-p-phenylenevinylene, and polyoxadiazole.

It is important that the frames or the substrates used as frames are made of a polymer. When a polymer film is bonded to stainless steel frames and the resultant is carbonized, the carbonized film is pulled excessively strongly to be inversely wrinkled since the stainless frames are never shrunken. The polymer frames that are of an appropriate species and each have an appropriate thickness are higher in mechanical strength than the polymer film, so as to be lower in shrinkage degree than the polymer film; however, the polymer frames are more appropriately shrunken than the stainless frames so that inconveniences as generated by the stainless frames are avoidable.

The method for stacking the thin polymer film (or carbonized film) as a sample with the thick polymer films (or carbonized films) as the frames or substrates may be an appropriately devised method, such as a method of sewing these members with a graphite string, a method of sticking these members with pins made of graphite, a method of bonding these members to each other with an adhesive, a method of using a melted polymer as an adhesive, a method of applying a polymer solution onto these members, drying the members, and then using the remaining polymer as an adhesive, or a method of applying a polyamic acid onto the members, drying and heating the members to be made into an imide, and then using the imide as an adhesive. When this method makes only use of the shrinkage or expansion of the frames or substrates basically without applying any load to the film plane into a direction perpendicular to the film plane, the resultant graphite membrane can be effectively stretched, and realize a graphite membrane excellent in surface smoothness. However, in order to prevent the sample film, or the frames or substrates from being warped in a direction deviated away from the film plane at the carbonizing time or the graphitizing time, it is allowable to sandwich an stacked body of the sample film and the frames (substrates) between gaskets made of graphite, or put a weight made of, e.g., graphite onto the stacked body. A small load may be applied to the stacked body to such a degree that it is not intended to produce a directly wrinkle-decreasing effect or an effect of directly stacking the sample film with the frames (substrates). However, when a strong load is applied to the stacked body to hinder the shrinkage or expansion of the moieties of the frames (substrates) in the film plane direction at the carbonizing or graphitizing time, the effect of decreasing wrinkles of the graphite membrane may not be sufficiently exhibited. Accordingly, the load applied to the laminated body in a direction perpendicular to the film plane is appropriately 1 kgf/cm$^2$ or less. The load is preferably 0.5 kgf/cm$^2$ or less, more preferably 0.2 kgf/cm$^2$ or less, even more preferably 0.1 kgf/cm$^2$ or less, and even more preferably 0.05 kgf/cm$^2$ or less.

About each of the frames, usually, the inside thereof is hollow. However, a flame the inside of which is solid (that is, a substrate) is also usable as a frame. Even such a substrate (flame) is usable as a flame by stacking the substrate with the circumference of a sample polymer film while not stacking the inside of the substrate with that of the polymer film. The shape of the frame, which may be a substrate-like frame, may be an appropriately devised shape such as a square, a rectangle, a hexagon or a circle, or a square frame, rectangular frame, hexagonal frame or doughnut frame shape. About the frame the inside of which is hollow, the sample film is to be in a state floating in the air. Thus, the stacked body can be baked without taking care of additional interference.

About each of the substrate-like frames, a graphite membrane may be bonded to the inside moiety of the frame after the baking, and thus when the membrane is peeled off, the graphite membrane may be broken. Thus, the peeling needs to be carefully performed. It is preferred to lay a releasing layer between the substrate-like frame and the sample film in order to prevent the bonding of the sample film. The releasing layer is not particularly limited as far as the layer does not hinder the formation of the graphite membrane and can prevent the bonding of the membrane. It is advisable to insert the following for the releasing layer into between the sample film and the substrate: a releasing layer made of, e.g., a material having fluidity, such as oil or an organic solvent, a pasty material such as resin paste, a sheet such as a paper or a nonwoven fabric piece or a resin film, or a powder such as resin powder, carbon powder, graphite powder, or diamond powder. In general, any layer that can endure a relatively high temperature is preferred. Those decomposed or vaporized at a predetermined temperature to disappear from between the films and the substrates such as oil, an organic solvent, a resin paste, a resin film, resin powder are excellent since these do not give any impurity to the resultant graphite membrane. Graphite powder, a resin sheet which is heated to be turned to graphite, resin powder and others each have an advantage of exhibiting, as a releasing layer, an effect thereof up to the last of the graphitizing process.

A single frame may be used, or plural frames may be used. A sample film may be sandwiched therebetween from the front side and the rear side thereof. The shape and the number of the frame(s) are not particularly limited. However, if the width of the frame(s) is too small, a force thereof of pulling the moiety of the sample film is weak so that the surface-smoothness-improving effect is small. If the width is too large, the moiety of the sample film becomes relatively small in area to lower the productivity of the frame. When (each of) the frame(s) is, for example, in a doughnut form and the outside diameter thereof in connection with the thickness of the frame is 10 cm, the inside diameter thereof is preferably from about 6 to 9 cm. Also when the frame is, for example, in a square form and each external side thereof is 10 cm in length, each internal side thereof is preferably from about 6 to 9 cm in length. A frame having a complicated shape requires much labor for the production thereof. Thus, in many cases, a relatively easily-formed square or doughnut form frame is preferred.

If the thickness of the frame (substrate) is too small, the force of pulling a sample film is weak so that the surface-smoothness-improving effect of the resultant graphite membrane is small. If the thickness is too large, at the time of putting the flame onto a sample film the moiety of the sample film is relatively small in volume. Thus, when the laminate is baked, the laminate unfavorably becomes lower in productivity. From such a viewpoint, the thickness of the polymer film of the frame (substrate) is preferably from 5 to 300 $\mu$m, more preferably from 8 to 200 $\mu$m, even more preferably from 10 to 150 $\mu$m, and even more preferably from 15 to 100 $\mu$m. The thickness of the polymer film is, for example, preferably not less than 100 nm and not more than 15 $\mu$m, and more preferably not less than 1 $\mu$m and not more than 13 $\mu$m.

The thickness of the polymer film as a frame is, for example, 8 times or more, and preferably 10 times or more and for example, 100 times or less, and preferably 30 times or less the thickness than that of the polymer film as a sample.

This method requires somewhat labor for stacking a polymer film with frames (substrates) of the polymer film. However, the method requires no especially large-scale apparatus, and can improve the surface smoothness of the resultant graphite membrane simply while a mild force is applied to the stacked body. This method is also high in producing performance since many films are laminated onto each other and the laminate can be baked at one time. In this method, the force of pulling the film(s) is not large so that the surface smoothness of the resultant graphite membrane is not easily at an especially excellent level. However, this method can realize a sufficiently high surface smoothness.

[Decreasing of Wrinkles by Pressing]

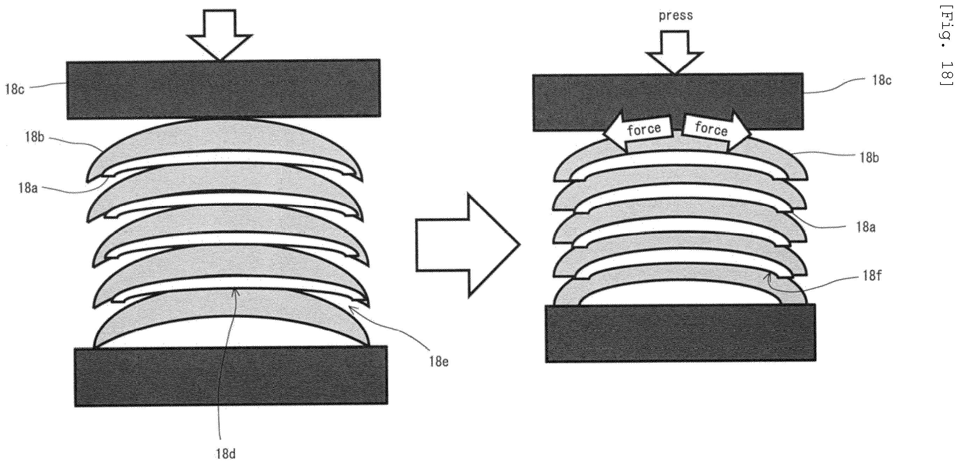

The means for applying a film outward along the film plane may be pressing using a curved substrate. An example in which curved substrates are used is illustrated in Fig. 18. In the example illustrated in Fig. 18, each polymer film 18a is sandwiched, from the upper and lower of the film, between two dome-form curved substrates 18b which are heated to show flexibility. Furthermore, the sandwiched laminates are sandwiched between pressing plates 18c. While this sandwiched laminate is heated to a high temperature, the body is pressed from the top and the bottom thereof to be deformed into a flat plate form or a substantially flat plate form. In this way, each of the polymer films 18a is initially pushed only at one point 18d which is a contact point between adjacent two of the curved substrates (in the illustrated example, a vicinity of the apex of each of the dome-form curved substrates 18b). As the curved substrates are deformed into a flatter form by the pressing, the interval 18e or 18f between every two of the substrates is made smaller so that the film therebetween can be gradually pushed and stretched from the contact point 18d as the center of the stretch to the circumference to stretch wrinkles of the whole of the film (Fig. 18). It is advisable to press the film to be pushed and stretched basically along the film plane radially outward from the center of the graphite membrane. However, the pushing direction does not necessarily need to be isotropic. The deviation of this direction may be a deviation inside the film plane, or a deviation away from the film plane. In particular, when the orientation of the polymer film is anisotropic, it is effective to push and stretch the film from the center not to the radial directions but to directions deviated intentionally from the radial directions. This is effective also in the case of desiring to cause the structure of the graphite membrane or the electrical conductivity or other properties thereof intentionally to have anisotropy. The used substrates may each be a substrate other than the curve substrate in the shape of dome as far as the substrate has a curved surface. The substrate may be, for example, a substrate having a surface curved only into one direction, such as a side surface of a circular column. It is sufficient for the present invention to make use of at least one curved substrate. A polymer film, which may be a carbonized film or graphite film converted from this polymer film, may be sandwiched, for example, between a curved substrate and a flat substrate. The carbonized film before the graphitization is brittle to be cracked by pressing in many cases. Thus, it is preferred to press a film starting to be somewhat graphitized (film heated to a certain measure of high temperature) in the process of the graphitization. It is preferred to press the film, for example, after the film temperature becomes 2200°C or higher. Merely by sandwiching the film simply between two parallel substrates and pressing the sandwiched laminate, wrinkles generated at the carbonizing time can be pushed and removed to some degree. However, in many cases, the wrinkles are merely shifted to another site of the film, or large ones of the wrinkles are merely turned to small wrinkles. Thus, it is difficult to stretch the wrinkles fundamentally to improve the surface smoothness largely. Merely by sandwiching the film between objects each having a parallel flat surface and pressing the film in such a way, the film does not easily realize a sufficient surface smoothness.

Thus, it is preferred in the present invention to press a film starting to be somewhat graphitized between surfaces having different curvatures (or between convex surfaces which have the same curvature and face to each other). For example, initially, only the center of the film or only a portion of the film is pressed, and then the pressed-area of the film is gradually widened from the center or portion as the press-starting point to the circumstance of the film so that wrinkles of the film are gradually widened from the press-starting point to be pushed and stretched. In this way, the surface smoothness of the resultant graphite membrane is improved. The plates used for the pressing are preferably plates that can endure the heating temperature at the graphitizing time, such as graphite plates, or glassy carbon plates. The form or shape of the plates used for the pressing is preferably, for example, a slightly warped dome form, or a shape as the shape of a portion of a slightly warped side surface of a circular column (such as a curved surface form of a semicylindrical body).

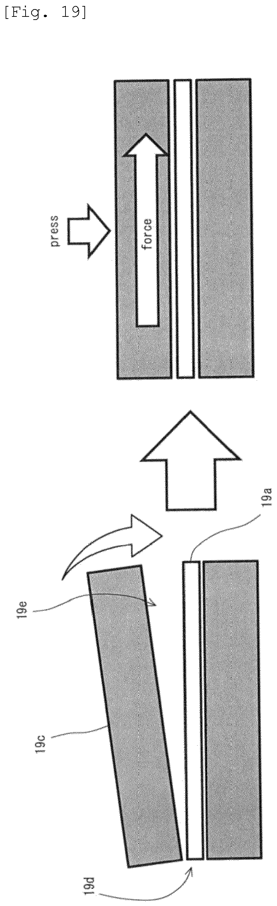

Even when no curved substrates are used, in the case of pressing only a portion of a sample film initially and then pressing the film, as described above, to increase the pressed-area gradually so as to be widened therefrom, winkles can be largely decreased to improve the resultant graphite membrane in surface smoothness. Fig. 19 is a schematic view illustrating this modified example. As illustrated in Fig. 19, for example, when a polymer film 19a, which may be a carbonized film or graphite membrane converted from the film 19a, is heated to a graphitizing temperature (for example, 2200°C or higher), the polymer film 19a, which may be the carbonized film or graphite membrane converted from the film 19a, is inserted into a gap between two flat-plane substrates 19c which are not parallel with each other and are only partially 19d brought into contact with each other. After the start of pressing the film, the two flat-plane substrates 19c are gradually made parallel with each other while the pressing is attained to cause the gap 19e between the two flat-plane substrates 19c to disappear. In this way, the graphite membrane is pushed and stretched successively from its end, so that wrinkles of the graphite membrane can be stretched (Fig. 19).

If the pressing pressure is too weak, the surface-smoothness-improving effect is not produced. If the pressure is too intense, the film is broken, perforated, cracked or turned to have other defects. Moreover, there is the high possibility that problems are caused, for example, the plates used for the pressing adhere closely to the film not to be peeled off therefrom. When a strong pressing mechanism comes to be required, the apparatus itself of the furnace also becomes large in scale. Thus, the pressing pressure is preferably not less than 0.03 kgf/cm$^2$ and not more than 30 kgf/cm$^2$, more

preferably not less than 0.1 kgf/cm$^2$ and not more than 20 kgf/cm$^2$, even more preferably from not less than 0.2 kgf/cm$^2$ and not more than 10 kgf/cm$^2$, and even more preferably not less than 0.5 kgf/cm$^2$ and not more than 5 kgf/cm$^2$.

The carbonized film is brittle to be easily broken; thus, about the pressing timing, the pressing is performed preferably at a temperature of 2200°C or higher, at which graphitization starts somewhat. When the polymer film is made of an aromatic polyimide, the pressing is performed more preferably at a temperature of 2600°C or higher. The pressing pressure may be a constant pressure, or may be varied. As described above, however, it is advisable to make the warp of the pressing plates gradually flat since wrinkles need to be stretched to be pushed and widened over the whole of the graphite membrane in the membrane plane direction. Thus, when the pressing pressure is varied, basically, the pressure is gradually made stronger. The pressing may be performed for a long period or for a short period. The pressing may be performed plural times. However, the size of the graphite membrane in the membrane plane direction is elongated until the membrane temperature becomes the highest temperature; therefore, wrinkles of the graphite membrane that are generated by an uneven elongation of the membrane at a final stage of the graphitization cannot be decreased when the pressing is ended at a very early stage while the membrane is heated for the graphitization. When the pressing is performed at the very early stage and then continued as it is, the graphite membrane unfavorably comes not to be elongated although the membrane should be originally elongated into the membrane plane direction. This also causes the generation of finally-obtained surface irregularities of the graphite membrane. Thus, basically, at the stage when the film is heated to the vicinity of the highest temperature, the film is pressed; or the film is repeatedly pressed for a short period and is further pressed also at the vicinity of the highest temperature. It is advisable to optimize appropriately the pressing pressure, period and timing, and other minute conditions, considering such a basis as described above.

The improvement in the surface smoothness by pressing may permit a little push unevenness. Thus, it may be difficult to heighten the surface smoothness to a very high level in every corner of the film. However, the pressing makes it possible to bake, at one time, many films put onto each other to be a method excellent in the productivity. Moreover, the pressing has an advantage of being more easily applicable to a case where the sample thickness is very small, such as 200 nm or less, so that the sample is weak against physical pulling than an improvement in the surface smoothness by the above-mentioned size regulation or predetermined force.

Each of the substrates used for the pressing may be bonded to the graphite membrane so that when the graphite membrane is peeled off, the graphite membrane may be broken. In this case, it may be necessary to attain the peeling carefully. In order to prevent the bonding of the sample film, a releasing layer may be laid between the sample film and each of the substrates used for the pressing. The releasing layer is not particularly limited as far as the layer does not hinder the formation of the graphite membrane and can prevent the bonding of the membrane. It is advisable to insert the following for the releasing layer into between the sample film and the substrate: a releasing layer made of, e.g., a material having fluidity such as oil or an organic solvent, a pasty material such as resin paste, a sheet-form layer such as a paper or a nonwoven fabric piece or a resin film, or a layer of a powder such as resin powder, carbon powder, graphite powder, or diamond powder. In general, any layer that can endure a relatively high temperature is preferred. Those decomposed or vaporized at a predetermined temperature to disappear from between the films and the substrates such as oil, an organic solvent, a resin paste, a resin film, resin powder are excellent since these do not give any impurity to the resultant graphite membrane. Graphite powder, a resin sheet which is heated to be turned to graphite, resin powder and others each have an advantage of exhibiting, as a releasing layer, an effect thereof up to the last of the graphitizing process.

EXAMPLES

Hereinafter, the present invention will be explained with Examples.

The surface roughness Ra of a graphite membrane in each of the working examples is a value obtained on the basis of JIS B 0601. Specifically, a surface roughness measuring instrument Surfcorder ET 4300 (manufactured by Kosaka Laboratory Ltd.) is used to measure the surface roughness Ra of a graphite membrane in an atmosphere of room temperature. The surface roughness Ra of the graphite membrane is a value obtained by representing a value obtained in accordance with a formula (1) described below, using the unit of "nm", at the time of causing the instrument to draw a chart at an evaluating length of 1.25 mm, a reference length (cutoff value) of 0.25 mm, and a feeding speed of 0.5 mm/minute about predetermined sites and a predetermined length portion of the graphite membrane, these sites and portion being described below, cutting out a portion thereof that has the reference length, and then representing a roughness curve Y = f(X) using a central line of the cut-out portion as an X axis, and the vertical direction as a Y axis. As will be described below, at each of five sites of the graphite membrane, a line segment of 2.5 mm length is prescribed. This line segment is divided into 10 equal parts, using the reference length L. In each of the 10 sites having the reference length L, the Ra value of the site is measured. The maximum value out of the resultant 10 Ra values is defined as the maximum Ra of the line segment. Furthermore, out of the respective maximum Ra values obtained in the five line segments on the graphite membrane, the maximum value is defined as the maximum Ra of the graphite membrane.

[Mahtematical formula 1]

$$Ra = \frac{1}{L}\int_0^L |f(x)| dx \quad \ldots \quad (1)$$

The electrical conductivity of the graphite membrane is measured by the van der Pauw method. This method is the most suitable method for measuring the electrical conductivity of a thin-membrane form sample. Details of this method are descried in "Experimental Chemical Lecture 9, Electricity/Magnetism, 4th edition, (edited by Corporate Juridical Person The Chemical Society of Japan and published by Maruzen Co., Ltd. (published on June 5th, 1991)" (p. 170). A characteristic of this method is in that a measurement can be made in the state of fitting electrodes onto any four points of edges of a thin-membrane form sample having any shape. When the sample is even in thickness, the electrical conductivity thereof can be precisely measured. In the present invention, a sample cut into a square is used, and then silver paste electrode is fitted to each of four corners (edges) thereof to make the measurement. The measurement is made, using a resistivity/DC & AC hole measuring system, Resi Test 8300, manufactured by TOYO Corporation.

(Example 1)

<Polyimide Film Production>

A polyamic acid was synthesized using pyromellitic dianhydride (PMDA), and 4,4'-diaminodiphenyl ether (ODA) at a ratio by mole of 1/1 (that is, 4/4). Into 100 g of an 18%-by-weight solution of this polyamic acid in DMF was blended an imidization acceralator composed of 20 g of acetic anhydride, and 10 g of isoquinoline. The blend was stirred and defoamed by centrifugal separation. Thereafter, the liquid was cast to be coated onto an aluminum foil piece. Operations from the stirring to the defoaming were made while the liquid was cooled to 0°C. The laminate of the aluminum foil piece and the polyamic acid solution was heated at each of 100°C, 250°C and 450°C for 60 seconds, and then the aluminum foil piece was etched to be removed to produce a polyimide film having a 10 cm × 10 cm square size.

<Polyimide Film Thickness Measurement>

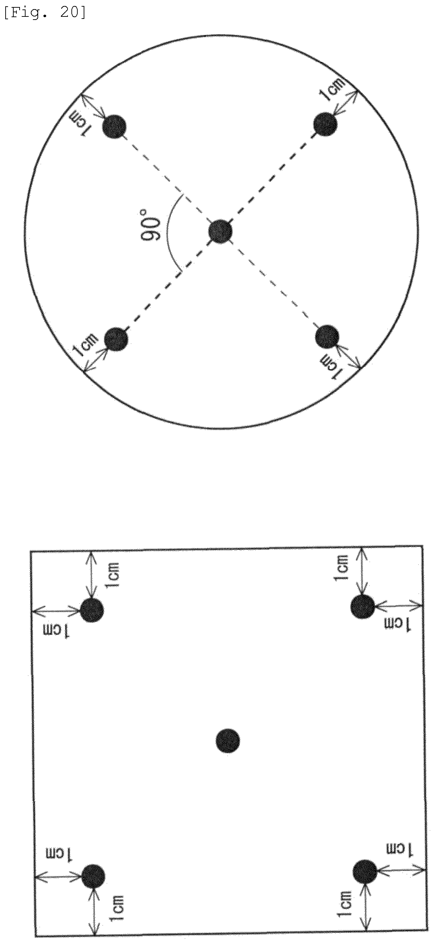

The thickness of the resultant polyimide film was measured at five points thereof as illustrated in Fig. 20, using a contact type thickness meter. As a result, the average value of the thicknesses was 15.3 $\mu$m. Fig. 20 is a plan view of a square or circular polymer film, in which thickness-measuring sites are represented by black circles (•). Specifically, when the polymer film was square, the measurement was made at the sites, the total number of which was five, that were following sites: sites near the individual corners and 1 cm apart from the nearest two of the four sides (4 points in total); and one site at the centroid of the square. When the polymer film was circular, the measurement was made at the sites, the total number thereof being five, that were the following sites: sites 1 cm apart inward from the circumference of the circle and at intervals of 90° of the angle around the center of the circle (4 points in total); and one site at the centroid of the circle.

<Carbonization>

Circular holes were made at four corners of the resultant polyimide film. Tips of arms each made of a CIP material (made of a graphite) in the form of a circular column were passed through the holes, respectively (Fig. 8). An electrical furnace was used to raise the temperature of this film to 950°C at a rate of 5°C/minute in a nitrogen gas atmosphere, keep the film at 950°C for 10 minutes, and then cool the film naturally to carbonize the polyimide film. At this time, the respective positions of the arm tips of the CIP material were mechanically moved in the film plane direction to regulate the size of the polyimide film (carbonized film) in the film plane direction. At temperatures from room temperature to 600°C, positions of the CIP material arm tips were fixed to set the size of the polyimide film (carbonized film) in the film plane direction to 100% of the size of the original polyimide film in the film plane direction. In a period from the time when the temperature reached 600°C to the end of the heating at 950°C for the ten minutes, the CIP material arms were moved at a constant speed toward the center of the film to film-shrinking directions to change the size of the polyimide film (carbonized film) in the film plane direction from 100% of the size of the original polyimide film in the film plane direction to 81% thereof.

<Graphitization>

The temperature of the resultant carbonized film was raised to 2800°C at a rate of 5°C/minute in an argon atmosphere, and the film was kept at 2800°C for 20 minutes, and then naturally cooled to be graphitized. At this time, the respective positions of the CIP material arm tips were mechanically moved in the film plane direction to regulate the size of the carbonized film (graphite membrane) in the film plane direction. At temperatures from room temperature to 2200°C, the respective positions of the tips of the CIP material arms were fixed to set the size of the carbonized film (graphite membrane) in the film plane direction to 81% of the size of the original polyimide film in the film plane direction. In a period from the time when the temperature reached 2200°C to the end of the heating at 2800°C for the twenty minutes, the CIP material arms were moved at a constant speed from the center of the film to radially widening directions to change the size of the carbonized film (graphite membrane) in the film plane direction from 81% of the size of the original polyimide film in the film plane direction to 92% thereof.

<Graphite Membrane Surface Roughness Measurement>

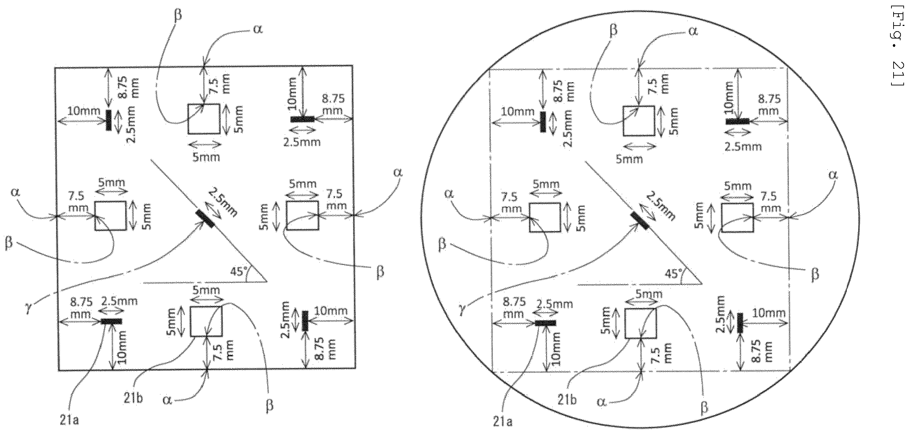

From the resultant square graphite membrane, a central portion thereof 5 cm square was cut out. The surface roughness measuring instrument Surfcorder ET 4300 (manufactured by Kosaka Laboratory Ltd.) was used to measure the surface roughness (arithmetic average roughness Ra) at five sites of the membrane, as illustrated in Fig. 21, over a length of 2.5 mm. As a result, the maximum value of Ra at the five sites, that is, the maximum Ra value at all the measured sites on the graphite membrane was 8 nm. Fig. 21 is a plan view of a square or circular graphite membrane, and represents each surface roughness measuring site thereof by a line segment 21a. Each electrical resistance- and thickness-measuring site thereof is represented by a white square (□) 21b. In this figure, any $\alpha$ is the middle point of each side of the square graphite membrane or the middle point of each side of a square inscribed to the circular graphite membrane; any $\beta$ is the middle point of one side of the white square (□) representing the electrical resistance- and thickness-measuring site; and any $\gamma$ is the centroid of each of the graphite membranes. Details of the Ra-measuring method are as described above.

<Graphite Membrane Electrical conductivity Measurement>

About the graphite membrane 5 cm square, 5-mm squares were cut out, respectively, at four sites as illustrated in Fig. 21. At four corners of each of the cut squares, silver paste was used to form electrodes, respectively, and the van der Pauw method was used to measure the electrical resistance (sheet resistance) of the cut membrane in the membrane plane direction. Furthermore, a measured value of the thickness, as described below, was used to calculate the electrical conductivity. As a result, the average value of the respective electrical conductivities at the four sites in the membrane plane direction was 17000 S/cm.

<Graphite Membrane Thickness Measurement>

A contact type thickness meter was used to measure the thickness of each of the four 5-mm square graphites cut out in the above-mentioned electrical resistance measurement. As a result, the average of the thicknesses of the four 5-mm square graphite membranes was 7.5 $\mu$m.
As described above, the use of the method of the present invention makes it possible that in a graphite membrane having a thickness of 12 $\mu$m or less, such as a conventional membrane having many irregularities based on wrinkles even when this membrane is uniform in thickness, a very high surface smoothness showing a maximum Ra value of 8 nm is realized. Moreover, the electrical conductivity of the graphite membrane is also 17000 S/cm, which is very good.

(Example 2)

The same experiment as in Example 1 was made except that a polyimide film having an average thickness of 15.5 $\mu$m was used, and the final size of the carbonized film (graphite membrane) in the film plane direction at the carbonizing time, and that at the graphitizing time were adjusted to 84% and 95% of the size of the original polyimide film, respectively. As a result, about the resultant graphite membrane, the maximum Ra value was 6 nm, the average value of the electrical conductivities was 12000 S/cm, and the average value of the thicknesses was 7.0 $\mu$m.
As compared with Example 1, Example 2 was somewhat better in surface smoothness, was lower in electrical conductivity but sufficiently good, and was slightly smaller in thickness. It can be considered that this is because the size of the film was regulated to a somewhat larger size when the film was baked, so that the carbonized film (graphite membrane) was more strongly pulled outward in the film plane direction in Example 2 than in Example 1, so that the film was more strongly elongated. It can also be considered that gaps between graphite crystals inside the graphite membrane were somewhat widened so that the electrical conductivity was made slightly lower.

(Example 3)

The same experiment as in Example 1 was made except that a polyimide film having an average thickness of 15.4 $\mu$m was used, and the final size of the carbonized film (graphite membrane) in the film plane direction at the carbonizing time, and that at the graphitizing time were adjusted to 79% and 89% of the size of the original polyimide film, respectively. As a result, about the resultant graphite membrane, the maximum Ra value was 11 nm, the average value of the electrical conductivities was 19000 S/cm, and the average value of the thicknesses was 7.8 $\mu$m.

Reversely to Example 2, in Example 3, the surface smoothness was somewhat lower, the electrical conductivity was higher, and the thickness was slightly larger than in Example 1. It can be considered that this is because the size at the baking time was regulated to a smaller size so that the carbonized film was more weakly pulled outward in the film plane direction to be more weakly elongated in Example 3 than in Example 1. It can also be considered that the electrical conductivity became slightly higher for, e.g., the reason why gaps between graphite crystals inside the graphite membrane were slightly smaller.

(Example 4)

The same experiment as in Example 1 was made except that a polyimide film having an average thickness of 15.0 $\mu$m was used, and without regulating the size mechanically at the graphitizing time, the carbonized film was merely sandwiched between gaskets made of graphite to leave the film to size elongation without applying a force. As a result, about the resultant graphite membrane, the maximum Ra value was 190 nm, the average value of the electrical conductivities was 17000 S/cm, and the average value of the thicknesses was 8.1 $\mu$m. The surface smoothness was lower and the thickness was slightly larger than in Example 1. It can be considered that this is because no size regulation was made at the graphitizing time so that wrinkles generated at the graphitizing time were hardly stretched.

(Example 5)

The same experiment as in Example 1 was made except that a polyimide film having an average thickness of 15.7 $\mu$m was used, and without regulating the size mechanically at the carbonizing time, the polyimide film was merely sandwiched between gaskets made of graphite to leave the film to size shrinkage without applying a force. As a result, about the resultant graphite membrane, the maximum Ra value was 106 nm, the average value of the electrical conductivities was 15000 S/cm, and the average value of the thicknesses was 8.0 $\mu$m. The surface smoothness was lower and the thickness was slightly larger than in Example 1. It can be considered that this is because no size regulation was made at the carbonizing time, so that the wrinkle-decreasing effect was low since wrinkles generated at the carbonizing time also needed to be stretched, together with other wrinkles, at the graphitizing time.

(Example 6)

In the same way in Example 1, a circular polyimide film was yielded which had a diameter of 10 cm.

<Polyimide Film Thickness Measurement>

The thickness of the resultant polyimide film was measured at five points thereof as illustrated in Fig. 20, using a contact type thickness meter. As a result, the average value of the thicknesses was 25.0 $\mu$m.

<Carbonization>

Eight circular holes were made at edge portions of the resultant polyimide film to be positioned at regular intervals. Tips of arms of circularly columnar CIP materials were passed through the holes (Fig. 9). This was carbonized while the eight arms were used to regulate the size in the same way as in Example 1.

<Graphitization>

Tips of arms of circularly columnar CIP materials were passed through the eight circular holes made at the edge portions of the resultant carbonized film (Fig. 9). The eight arms were used to graphitize the film while the size of the film was regulated in the same way as in Example 1.

<Graphite Membrane Surface Roughness Measurement>

From the resultant circular graphite membrane, a central circular portion thereof having a diameter of 5 cm was cut out. The contact type step gauge Surfcorder ET 4300 (manufactured by Kosaka Laboratory Ltd.) was used to measure the surface roughness (arithmetic average roughness Ra) at five sites of the membrane, as illustrated in Fig. 21, over a length of 2.5 mm. As a result, the maximum value of Ra at the five sites was 13 nm.

<Graphite Membrane Electrical Conductivity Measurement>

About the above-mentioned circular graphite membrane of 5 cm diameter, 5-mm squares were cut out, respectively, at four sites as illustrated in Fig. 21. At four corners of each of the cut membranes, silver paste was used to form electrodes, respectively, and the van der Pauw method was used to measure the electrical resistance (sheet resistance) of the membrane in the membrane plane direction. Furthermore, a thickness measured value as described below was used to calculate the electrical conductivity. As a result, the average value of the respective electrical conductivities at the four sites in the membrane plane direction was 18000 S/cm.

<Graphite Membrane Thickness Measurement>

A contact type thickness meter was used to measure the thickness of each of the four 5-mm square graphites cut out in the above-mentioned electrical resistance measurement. As a result, the average of the thicknesses of the four 5-mm square graphites was 11.6 $\mu$m.

As described above, also when a circular polymer film is used and the film is pulled in eight directions to be regulated about the size thereof, a thin graphite membrane can be yielded which has a very high surface smoothness and a high electrical conductivity. The maximum Ra value was larger than in Example 1 probably since the thickness of the used polyimide film was as large as 25.0 $\mu$m so that the wrinkle-stretching effect based on the size regulation was relatively small.

(Example 7)

A polyamic acid was synthesized using pyromellitic dianhydride (PMDA), 4,4'-diaminodiphenyl ether (ODA) and p-phenylenediamine (PDA) at a ratio by mole of 4/3/1. An 18%-by-weight solution of this polyamic acid in DMF was used to produce a polyimide film having an average thickness of 15.7 $\mu$m. Except this matter, the same experiment as in Example 1 was made. As a result, about the resultant graphite membrane, the maximum Ra value was 12 nm, the average value of the electrical conductivities was 18000 S/cm, and the average value of the thicknesses was 7.6 $\mu$m. It has been understood that even when the composition of the polyimide is changed, good results are obtained.

(Example 8)

A polyamic acid was synthesized using pyromellitic dianhydride (PMDA), 4,4'-diaminodiphenyl ether (ODA) and p-phenylenediamine (PDA) at a ratio by mole of 4/2/2. An 18%-by-weight solution of this polyamic acid in DMF was used to produce a polyimide film having an average thickness of 15.8 $\mu$m. Except this matter, the same experiment as in Example 1 was made. As a result, about the resultant graphite membrane, the maximum Ra value was 12 nm, the average value of the electrical conductivities was 19000 S/cm, and the average value of the thicknesses was 7.7 $\mu$m. It has been understood that even when the composition of the polyimide is changed, good results are obtained.

(Example 9)

A polyamic acid was synthesized using pyromellitic dianhydride (PMDA), 4,4'-diaminodiphenyl ether (ODA) and p-phenylenediamine (PDA) at a ratio by mole of 4/1/3. An 18%-by-weight solution of this polyamic acid in DMF was used to produce a polyimide film having an average thickness of 15.5 $\mu$m. Except this matter, the same experiment as in Example 6 was made. As a result, about the resultant graphite membrane, the maximum Ra value was 16 nm, the average value of the electrical conductivities was 11000 S/cm, and the average value of the thicknesses was 7.5 $\mu$m. It has been understood that even when the composition of the polyimide is changed, good results are obtained.

(Example 10)

The same experiment as in Example 9 was made except that a polyimide film having an average thickness of 15.4 $\mu$m was used, and the final size of the carbonized film (graphite membrane) in the film plane direction at the carbonizing time, and that at the graphitizing time were adjusted to 83% and 90% of the size of the original polyimide film, respectively. As a result, about the resultant graphite membrane, the maximum Ra value was 33 nm, the average value of the electrical conductivities was 15000 S/cm, and the average value of the thicknesses was 7.2 $\mu$m. According to the change of the size to be specified, Ra, electrical conductivity, and an average thickness can be finely controlled. When the composition of the polyimide is different, it is necessary to finely adjust a size to be controlled.

(Comparative Example 1)

The same experiment as in Example 6 was made except that a polyimide film having an average thickness of 15.2 $\mu$m was used, and at the carbonizing time, the final size of the carbonized film in the film plane direction was regulated to 90% of the size of the original polyimide film. As a result, the carbonized film was broken. The broken carbonized film had many wrinkles and cracks. Thus, it was visually clear that the Ra of the front surface was larger than 200 nm. It can be considered that this is because the size regulated at the carbonizing time was too large so that the film did not endure the pulling.

For reference, in the state that the polyimide film can be shrunken without applying a force, the film is carbonized under other conditions are not varied. The size of the resultant carbonized film is reduced into 80% of that of the original polyimide film. The size regulation into 90% at the carbonizing time was 112.5% (= 90/80) of this expansion size (80%) without applying a force to be more than 112%. Thus, the film was unfavorably broken.

(Comparative Example 2)

The same experiment as in Example 6 was made except that a polyimide film having an average thickness of 15.2 $\mu$m was used, and at the carbonizing time and the graphitizing time, the final size of the carbonized film (graphite membrane) in the film plane direction was regulated, respectively, to 81% and 100% of the size of the original polyimide film. As a result, the graphite membrane was broken. It can be considered that this is because the size regulated at the graphitizing time was too large so that the film did not endure the pulling.

For reference, the above-mentioned carbon film, the size of which is 81% of the size of the original polyimide film, is graphitized in the state that the carbon film is permitted to be shrunken and expanded without applying a force under other conditions are not varied. As a result, the size thereof is reduced into 91.1% (= 81 x 112.5%) (about a ground for the numerical value 112.5%, see Example 20). The size regulation into 100% at the graphitizing time was 110% (= 100/91.1) of this expansion size (91.1%) without applying a force to be more than 109%. Thus, the film was unfavorably broken.

(Comparative Example 3)

The same experiment as in Example 6 was made except that a polyimide film having an average thickness of 15.2 $\mu$m was used, and at the carbonizing time and the graphitizing time, the final size of the carbonized film (graphite membrane) in the film plane direction was regulated, respectively, to 70% and 92% of the size of the original polyimide film. As a result, about the resultant graphite membrane, the maximum Ra value was 653 nm, the average value of the electrical conductivities was 12000 S/cm, and the average value of the thicknesses was 7.7 $\mu$m. In this case, at the carbonizing time the film should be shrunken into about 80% of the size of the original polyimide film; however, it can be considered that the film was unfavorably regulated to a smaller size, i.e., 70% of the size of the original polyimide film so that force for shrinking the film was applied to the film. In other words, it can be considered that the advantageous effect of making surface irregularities of the film small by pulling-effect was not obtained, and reversely the carbonized film was wrinkled into large wrinkle-sizes, so that the large wrinkles generated at the carbonizing time were not sufficiently stretched even by giving pulling-effect to the film by the size regulation at the subsequent graphitizing time.

(Comparative Example 4)

The same experiment as in Example 6 was made except that a polyimide film having an average thickness of 15.2 $\mu$m was used, and at the carbonizing time and the graphitizing time, the final size of the carbonized film (graphite membrane) in the film plane direction was regulated, respectively, to 81% and 85% of the size of the original polyimide film. As a result, about the resultant graphite membrane, the maximum Ra value was 844 nm, the average value of the electrical conductivities was 13000 S/cm, and the average value of the thicknesses was 7.9 $\mu$m. At the graphitizing time, the film should be elongated to about 90% of the size of the original polyimide film; however, it can be considered that the film was unfavorably regulated to a smaller size, i.e., 85% of the size of the original polyimide film so that force for shrinking the film was applied to the film. In other words, it can be considered that the advantageous effect of making surface irregularities of the film small by pulling-effect was not obtained, and reversely the graphite membrane was wrinkled into large wrinkle-sizes at the time of the graphitization.

(Example 11)

The same experiment as in Example 1 was made except that a polyimide film having an average thickness of 4.5 $\mu$m was used, and at the graphitizing time, the final size of the graphite membrane in the film plane direction was regulated to 91% of the size of the original polyimide film. As a result, about the resultant graphite membrane, the maximum Ra value was 20 nm, the average value of the electrical conductivities was 18000 S/cm, and the average value of the thicknesses was 1.6 $\mu$m. It has been understood that even when a thin polyimide film is used, good results can be obtained.

(Example 12)

The same experiment as in Example 11 was made except that a size was changed by sandwiching a carbonized film between gasket prepared by graphite without applying a force and controlling a size at the graphitization. As a result, about the resultant graphite membrane, the maximum Ra value was 172 nm, the average value of the electrical conductivities was 19000 S/cm, and the average value of the thicknesses was 1.7 $\mu$m. The maximum Ra, average of electrical conductivity, and average thickness become large compared to those of Example 11 because pulling force is not applied to the carbonized film (graphite membrane) at the graphitization.

(Example 13)

The same experiment as in Example 11 was made except that a size was changed by sandwiching a polyimide film between gasket prepared by graphite without applying a force and controlling a size at the carbonization. As a result, about the resultant graphite membrane, the maximum Ra value was 95 nm, the average value of the electrical conductivities was 20000 S/cm, and the average value of the thicknesses was 1.6 $\mu$m. The maximum Ra, and average of electrical conductivity become large compared to those of Example 11 because pulling force is not applied to the polyimide film (carbonized film) at the carbonization.

(Example 14)

A polyamic acid was synthesized using pyromellitic dianhydride (PMDA), 4,4'-diaminodiphenyl ether (ODA) and p-phenylenediamine (PDA) at a ratio by mole of 4/3/1. An 18%-by-weight solution of this polyamic acid in DMF was used to produce a polyimide film having an average thickness of 4.7 $\mu$m. Except this matter, the same experiment as in Example 12 was made. As a result, about the resultant graphite membrane, the maximum Ra value was 191 nm, the average value of the electrical conductivities was 15000 S/cm, and the average value of the thicknesses was 1.8 $\mu$m. It has been understood that even when the composition of the polyimide is changed at even relatively thin film, good results are obtained. On the other hand, the maximum Ra value became relatively large because a size was not controlled in the graphitization.

(Example 15)

A polyamic acid was synthesized using pyromellitic dianhydride (PMDA), 4,4'-diaminodiphenyl ether (ODA) and p-phenylenediamine (PDA) at a ratio by mole of 4/2/2. An 18%-by-weight solution of this polyamic acid in DMF was used to produce a polyimide film having an average thickness of 4.6 $\mu$m. Except this matter, the same experiment as in Example 11 was made. As a result, about the resultant graphite membrane, the maximum Ra value was 24 nm, the average value of the electrical conductivities was 16000 S/cm, and the average value of the thicknesses was 1.7 $\mu$m. It has been understood that even when the composition of the polyimide is changed in a relatively thin film, good results are obtained.

(Example 16)

A polyamic acid was synthesized using pyromellitic dianhydride (PMDA), 4,4'-diaminodiphenyl ether (ODA) and p-phenylenediamine (PDA) at a ratio by mole of 4/1/3. An 18%-by-weight solution of this polyamic acid in DMF was used to produce a polyimide film having an average thickness of 4.6 $\mu$m. Except this matter, the same experiment as in Example 13 was made. As a result, about the resultant graphite membrane, the maximum Ra value was 110 nm, the average value of the electrical conductivities was 14000 S/cm, and the average value of the thicknesses was 1.7 $\mu$m. It has been understood that even when the composition of the polyimide is changed in a relatively thin polyimide film, good results are obtained. On the other hand, the maximum Ra value became large because the carbonization was carried out without controlling a size of the polymer film.

(Example 17)

The same experiment as in Example 13 was made except a polyimide film having an average thickness of 1.1 $\mu$m was used. As a result, about the resultant graphite membrane, the maximum Ra value was 74 nm, the average value of the electrical conductivities was 18000 S/cm, and the average value of the thicknesses was 0.3 $\mu$m. It has been understood that even when a relatively thin polyimide film is used, good results are obtained. On the other hand, the maximum Ra value became large because the carbonization was carried out without controlling a size of the polymer film.

(Example 18)

A polyamic acid was synthesized using pyromellitic dianhydride, and 4,4'-diaminodiphenyl ether at a ratio by mole of 1/1 (that is, 4/4). DMF was further added to an 18%-by-weight solution of this polyamic acid in DMF to turn this solution to a 6%-by-weight solution. Without adding any imidization acceralator to the solution, the solution was dropped down onto an aluminum foil piece, and spin coating was performed at 7000 rpm for 5 minutes to produce a laminate composed of the aluminum foil piece and the polyamic acid solution. Thereafter, in the same way as in Example 6, a circular polyimide film was yielded which had a diameter of 10 cm and an average thickness of 0.5 $\mu$m. In the same way as in Example 6, this polyimide film was used to be baked into graphite. However, in this example, which was different from Example 6, at the carbonizing time, without making any size regulation, the polyimide film was merely sandwiched between gaskets made of graphite to leave the film to size shrinkage without applying a force. In this way, at the graphitizing time, the final size of the graphite membrane in the film plane direction was regulated to 91% of the size of the original polyimide film.

As a result, about the resultant graphite membrane, the maximum Ra value was 127 nm, the average value of the electrical conductivities was 11000 S/cm, and the average value of the thicknesses was 0.2 $\mu$m. Also when a polyimide film produced by thermal curing was used, good results were obtained. It is understood that it is also permissible to use a thin polyimide film having an average thickness of 1 $\mu$m or less. However, since no size regulation was made at the carbonizing time, the maximum Ra value tended to be relatively large.

(Example 19)

The same experiment as in Example 18 was made except that at the carbonizing time, the final size of the carbonized film in the film plane direction was regulated to 81% of the size of the original polyimide film. As a result, about the resultant graphite membrane, the maximum Ra value was 55 nm, the average value of the electrical conductivities was 11000 S/cm, and the average value of the thicknesses was 0.2 $\mu$m. Also when a polyimide film produced by thermal curing was used, good results were obtained. It is understood that it is also permissible to use a thin polyimide film having an average thickness of 1 $\mu$m or less.

(Example 20)

The same experiment as in Example 1 was made except that a polyimide film having an average thickness of 15.4 $\mu$m was used, and at the carbonizing time and the graphitizing time, the final size of the carbonized film (graphite membrane) in the film plane directions was regulated, respectively, to 86% and 103% of the size of the original polyimide film. As a result, about the resultant graphite membrane, the maximum Ra value was 4 nm, the average value of the electrical conductivities was 10000 S/cm, and the average value of the thicknesses was 5.9 $\mu$m. The same polyimide film as used in the present example was carbonized and graphitized without being subjected to any size regulation in the state that the film was allowable to be shrunken and expanded without applying a force. As a result, after the carbonization, the size in the film plane direction was shrunken to 80% of the size of the original polyimide film. After the graphitization, the size in the film plane direction was expanded to 90% of the size of the original polyimide film. In other words, in the present example, at the carbonizing time, the film was regulated into 107.5% of the original size (the value 86% corresponds to 107.5% of the value 80%) without applying a force. The carbonized film should be originally expanded into 112.5% in the film plane direction by graphitization (the expansion ratio from 80% to 90% is 112.5%). For this reason, when the size at the carbonizing time is regulated into 86%, a subsequent graphitization of the film in the state that the film is allowable to be expanded without applying a force should adjust the size in the film plane direction into 96.8% of the size of the original polyimide film (112.5% of the value 86% is 96.8%). Accordingly, in the present example, at the graphitizing time, the film was regulated into 106.4% of the original size (the value 103% corresponds to 106.4% of the value 96.8%) without applying a force. As described herein, in the carbonizing process and the graphitizing process, by regulating the size largely, respectively, to 112% or less and 109% or less of the original size without applying a force in the film plane direction, the graphite membrane can be improved in surface smoothness.

In the present example, the surface smoothness was somewhat better, the electrical conductivity was lower but sufficiently good, and the thickness was slightly smaller than in Examples 1 to 19. It can be considered that the size at the baking time was regulated to a larger value so that the carbonized film (graphite membrane) was more strongly pulled outward in the film plane direction to be more strongly elongated than in Examples 1 to 19. It can also be considered that gaps between graphite crystals inside the graphite membrane were somewhat widened to make the membrane slightly low in electrical conductivity. The density of the graphite membrane was 2.05 g/cm$^3$. Thus, it is understood that this graphite membrane was obtained with a denseness such that the inside thereof hardly had voids.

(Example 21)

A polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce a polyimide film having an average thickness of 12.0 $\mu$m. At the carbonizing time, without being subjected to any size regulation, the polyimide film was used to be merely sandwiched between gaskets made of graphite to be left to size-shrinkage without applying a force. At the graphitizing time, the final size of the graphite membrane in the membrane plane direction was adjusted to 97% of the size of the original polyimide film. Except these matters, the same experiment as in Example 1 was made. As a result, about the resultant graphite membrane, the maximum Ra value was 3 nm, the average value of the electrical conductivities was 10000 S/cm, and the average value of the thicknesses was 5.1 $\mu$m. The same polyimide film as used in the present example was carbonized and graphitized without being subjected to any size regulation in the state that the film was allowable to be shrunken and expanded without applying a force. As a result, after the carbonization, the size in the film plane direction was shrunken to 81% of the size of the original polyimide film. After the graphitization, the size in the film plane direction was expanded to 90% of the size of the original polyimide film. In other words, in the present example, at the graphitizing time, the film was regulated into 107.8% of the original size (the value 97% corresponds to 107.7% of the value 90%) without applying a force. As described herein, in the graphitizing process, the graphite membrane can be improved in surface smoothness by regulating the size largely to 109% or less of the original size without applying a force in the membrane plane direction.

In the present example, the surface smoothness was somewhat better, the electrical conductivity was lower but was sufficiently good, and the thickness was slightly smaller than in Examples 1 to 19. It can be considered that the size at the baking time was regulated to a larger value so that the graphite membrane was more strongly pulled outward in the membrane plane direction to be more strongly elongated than in Examples 1 to 19. It can also be considered that gaps between graphite crystals inside the graphite membrane were somewhat widened to make the membrane slightly low in electrical conductivity. The density of the graphite membrane was 2.10 g/cm$^3$. Thus, it is understood that the graphite membrane was obtained with such a denseness that the inside thereof hardly had voids.

This is evident also from a sectional SEM image of the resultant graphite membrane (Fig. 4). In Fig. 4, reference sign 4a represents a cross section of a smooth-surfaced graphite membrane of the present invention. In the cross section 4a, very thin graphite layers uniform in thickness and excellent in surface smoothness are laminated onto each other in parallel with the membrane plane from one of the surfaces of the graphite membrane to the other surface without having any gap. As is understood from such graphite membrane sectional SEM images, the inside of the graphite membrane has a structure in which many very thin graphite layers are laminated onto each other, these layers being parallel with the membrane plane of the graphite membrane and excellent in thickness uniformity, and having an excellent surface smoothness such that irregularities in a direction perpendicular to the membrane plane are hardly present. This structure can never be produced even by shaping natural graphite into a sheet form, or by pressing, cutting and surface-polishing isotropic graphite, glassy carbon, a graphite evaporated membrane, fullerene or carbon nanotubes, or a composite material of two or more of these materials. Thus, the present invention realizes a graphite membrane having good properties such as unprecedented especially excellent surface smoothness, and very high electrical conductivity, thermoconductivity, bending resistance, rapture resistance, and easy cuttability at the same time.

(Example 22)

In the same way as in Example 1, a polyimide film having a 10 cm square size and an average thickness of 15.5 $\mu$m was yielded. This was baked while force was applied thereto outward along the film plane in the same way as in Example 1 to yield a graphite membrane. However, in this example, which was different from Example 1, the method for applying the force outward along the film plane at the carbonizing time and the graphitizing time was a method of continuing the application of a constant force. Specifically, the method was as follows:

<Carbonization>

Circular holes were made at four corners of the resultant polyimide film. Tips of arms each made of a CIP material in the form of a circular column were passed through the holes, respectively (Fig. 8). An electrical furnace was used to raise the temperature of this film to 950°C at a rate of 5°C/minute in a nitrogen gas atmosphere, keep the film at 950°C for 10 minutes, and then cool the film to carbonize the polyimide film without applying a force. From the start of the heating to the end of the heating at 950°C over the ten minutes, the four CIP material arms were used to pull the film continuously from the center of the film to radially widening directions evenly by a constant force. About the pulling force, the total force of all the CIP material arms per total sectional area of the original polyimide film was set to 30 gf/mm$^2$ (Fig. 11).

<Graphitization>

The temperature of the resultant carbonized film was raised to 2800°C at a rate of 5°C/minute in an argon atmosphere, and the film was kept at 2800°C for 20 minutes, and then naturally cooled to be graphitized. From the start of the heating to the end of the heating at 2800°C over the twenty minutes, the four CIP material arms were used to pull the film continuously from the center of the film to radially widening directions evenly by a constant force. About the pulling force, the total force of all the CIP material arms per total sectional area of the original polyimide film was set to 30 gf/mm$^2$ (Fig. 11).

<Measurements>

About a graphite membrane having a 5 cm square size, cut out from the membrane after the graphitization, the surface roughness (Ra), the electrical conductivity and the thickness were measured in the same way as in Example 1.
As a result, about the resultant graphite membrane, the maximum Ra value was 49 nm, the average value of the electrical conductivities was 13000 S/cm, and the average value of the thicknesses was 6.7 $\mu$m. Also the method for baking the film while applying the constant force to the film outward along the film plane produced good results. This method is a relatively easilycontrollable method and is also excellent to mass production performance.

(Example 23)

The same experiment as in Example 22 was made except that a polyimide film having an average thickness of 15.0 $\mu$m was used and when the constant force was applied to the film outward along the film plane at the carbonizing time and the graphitizing time, the total force of all the CIP material arms per total sectional area of the original polyimide film was set to 20 gf/mm$^2$. As a result, about the resultant graphite membrane, the maximum Ra value was 54 nm, the average value of the electrical conductivities was 14000 S/cm, and the average value of the thicknesses was 6.9 $\mu$m. Also when the value of the force was made slightly smaller, good results were obtained.

(Example 24)

The same experiment as in Example 22 was made except that a polyimide film having an average thickness of 15.8 $\mu$m was used and when the constant force was applied to the film outward along the film plane at the carbonizing time and the graphitizing time, the total force of all the CIP material arms per total sectional area of the original polyimide film was set to 50 gf/mm$^2$. As a result, about the resultant graphite membrane, the maximum Ra value was 18 nm, the average value of the electrical conductivities was 11000 S/cm, and the average value of the thicknesses was 6.4 $\mu$m. The electrical conductivity tended to be slightly low, but the surface smoothness tended to be better as the applied force was somewhat larger.

(Example 25)

The same experiment as in Example 22 was made except that a polyimide film having an average thickness of 15.2 $\mu$m was used and at the carbonizing time the pulling by the CIP material arms was not performed. As a result, about the resultant graphite membrane, the maximum Ra value was 102 nm, the average value of the electrical conductivities was 16000 S/cm, and the average value of the thicknesses was 7.3 $\mu$m. When the film was not pulled at the carbonizing time, the electrical conductivity was slightly high and the maximum Ra value was somewhat large.

(Example 26)

The same experiment as in Example 23 was made except that a polyimide film having an average thickness of 15.0 $\mu$m was used and at the carbonizing time the pulling by the CIP material arms was not performed. As a result, about the resultant graphite membrane, the maximum Ra value was 123 nm, the average value of the electrical conductivities was 17000 S/cm, and the average value of the thicknesses was 7.2 $\mu$m. When the film was not pulled at the carbonizing time, the electrical conductivity was slightly high and the maximum Ra value was somewhat large.

(Example 27)

The same experiment as in Example 24 was made except that a polyimide film having an average thickness of 15.3 $\mu$m was used and at the carbonizing time the pulling by the CIP material arms was not performed. As a result, about the resultant graphite membrane, the maximum Ra value was 109 nm, the average value of the electrical conductivities was 15000 S/cm, and the average value of the thicknesses was 7.0 $\mu$m. When the film was not pulled at the carbonizing time, the electrical conductivity was slightly high and the maximum Ra value was somewhat large.

(Example 28)

The same experiment as in Example 22 was made except that a polyimide film having an average thickness of 15.1 $\mu$m was used and at the graphitizing time the pulling by the CIP material arms was not performed. As a result, about the resultant graphite membrane, the maximum Ra value was 189 nm, the average value of the electrical conductivities was 13000 S/cm, and the average value of the thicknesses was 7.2 $\mu$m. When the film was not pulled at the graphitizing time, the electrical conductivity was slightly high.

(Example 29)

The same experiment as in Example 23 was made except that a polyimide film having an average thickness of 15.1 $\mu$m was used and at the graphitizing time the pulling by the CIP material arms was not performed. As a result, about the resultant graphite membrane, the maximum Ra value was 186 nm, the average value of the electrical conductivities was 14000 S/cm, and the average value of the thicknesses was 7.4 $\mu$m. When the film was not pulled at the graphitizing time, the electrical conductivity was slightly high.

(Example 30)

The same experiment as in Example 24 was made except that a polyimide film having an average thickness of 15.2 $\mu$m was used and at the graphitizing time the pulling by the CIP material arms was not performed. As a result, about the resultant graphite membrane, the maximum Ra value was 175 nm, the average value of the electrical conductivities was 12000 S/cm, and the average value of the thicknesses was 7.0 $\mu$m. When the film was not pulled at the graphitizing time, the electrical conductivity was slightly high.

(Comparative Example 5)

The same experiment as in Example 22 was made except that a polyimide film having an average thickness of 15.4 $\mu$m was used and when the constant force was applied to the film outward along the film plane at the carbonizing time and the graphitizing time, the total force of all the CIP material arms per total sectional area of the original polyimide film was set to 5 gf/mm$^2$. As a result, about the resultant graphite membrane, the maximum Ra value was 9043 nm, the average value of the electrical conductivities was 18000 S/cm, and the average value of the thicknesses was 7.4 $\mu$m. When the applied force is too weak, the surface smoothness becomes poor.

(Comparative Example 6)

The same experiment as in Example 28 was made except that a polyimide film having an average thickness of 15.9 $\mu$m was used and when the constant force was applied to the film outward along the film plane at the carbonizing time, the total force of all the CIP material arms per total sectional area of the original polyimide film was set to 200 gf/mm$^2$. As a result, the carbonized film was broken. It can be considered that this is because the applied force was too strong so that the film did not endure the pulling.

(Example 31)

The same experiment as in Example 22 was made except a polyamic acid was synthesized using pyromellitic dianhydride (PMDA), 4,4'-diaminodiphenyl ether (ODA) and p-phenylenediamine (PDA) at a ratio by mole of 4/3/1, an 18%-by-weight solution of this polyamic acid in DMF was used to produce a polyimide film having an average thickness of 15.7 $\mu$m. As a result, about the resultant graphite membrane, the maximum Ra value was 52 nm, the average value of the electrical conductivities was 17000 S/cm, and the average value of the thicknesses was 6.6 $\mu$m. It has been understood that even when the composition of the polyimide is changed, good results are obtained.

(Example 32)

The same experiment as in Example 22 was made except a polyamic acid was synthesized using pyromellitic dianhydride (PMDA), 4,4'-diaminodiphenyl ether (ODA) and p-phenylenediamine (PDA) at a ratio by mole of 4/2/2, an 18%-by-weight solution of this polyamic acid in DMF was used to produce a polyimide film having an average thickness of 15.6 $\mu$m. As a result, about the resultant graphite membrane, the maximum Ra value was 50 nm, the average value of the electrical conductivities was 17000 S/cm, and the average value of the thicknesses was 6.5 $\mu$m. It has been understood that even when the composition of the polyimide is changed, good results are obtained.

(Example 33)

A polyimide film having a diameter of 10cm, and an average thickness of 15.5 $\mu$m was prepared according to Example 9. According to Example 9, the carbonization and the graphitization were carried out by using the method for radically applying the force outward along the film plane using eight CIP material arms. In this case, the pulling with a constant force was continued from the center of the film to a radical direction of the film according to Example 22 in the view point of mechanical control and the strength of the force to radically spread the film. The force for pulling the film was 30 gf/mm$^2$ as total pulling force of eight CIP material arms per total cross-section area of the polyimide film (Fig.12). As a result, about the resultant graphite membrane, the maximum Ra value was 58 nm, the average value of the electrical conductivities was 16000 S/cm, and the average value of the thicknesses was 6.7 $\mu$m. It was confirmed that good results were obtained even if a composition and shape of the polyimide, the number of arm were changed.

(Example 34)

The same experiment as in Example 22 was made except a polyimide film having an average thickness of 4.5 $\mu$m was used. As a result, about the resultant graphite membrane, the maximum Ra value was 47 nm, the average value of the electrical conductivities was 17000 S/cm, and the average value of the thicknesses was 1.8 $\mu$m. It has been understood that even when a thin polyimide film is used, good results are obtained.

(Example 35)

The same experiment as in Example 22 was made except a polyamic acid was synthesized using pyromellitic dianhydride (PMDA), 4,4'-diaminodiphenyl ether (ODA) and p-phenylenediamine (PDA) at a ratio by mole of 4/3/1, an 18%-by-weight solution of this polyamic acid in DMF was used to produce a polyimide film having an average thickness of 4.7 $\mu$m, and pull by CIP material arm was not carried out in the graphitization. As a result, about the resultant graphite membrane, the maximum Ra value was 183 nm, the average value of the electrical conductivity was 17000 S/cm, and the average value of the thicknesses was 2.0 $\mu$m. It has been understood that even when the composition of the polyimide is changed, good results are obtained.

(Example 36)

The same experiment as in Example 22 was made except a polyamic acid was synthesized using pyromellitic dianhydride (PMDA), 4,4'-diaminodiphenyl ether (ODA) and p-phenylenediamine (PDA) at a ratio by mole of 4/2/2, an 18%-by-weight solution of this polyamic acid in DMF was used to produce a polyimide film having an average thickness of 4.6 $\mu$m. As a result, about the resultant graphite membrane, the maximum Ra value was 40 nm, the average value of the electrical conductivities was 16000 S/cm, and the average value of the thicknesses was 1.8 $\mu$m. It has been understood that even when the composition of the polyimide is changed, good results are obtained.

(Example 37)

The same experiment as in Example 22 was made except that a polyamic acid was synthesized using pyromellitic dianhydride (PMDA), 4,4'-diaminodiphenyl ether (ODA) and p-phenylenediamine (PDA) at a ratio by mole of 4/1/3, an 18%-by-weight solution of this polyamic acid in DMF was used to produce a polyimide film having an average thickness of 4.6 $\mu$m, and pull by CIP material arm was not carried out in the carbonization. As a result, about the resultant graphite membrane, the maximum Ra value was 108 nm, the average value of the electrical conductivities was 18000 S/cm, and the average value of the thicknesses was 2.1 $\mu$m. It has been understood that even when the composition of the polyimide is changed, good results are obtained. The maximum Ra indicated a large value.

(Example 38)

The same experiment as in Example 22 was made except a polyimide film having an average thickness of 1.3 $\mu$m was used, and pull by CIP material arm was not carried out in the carbonization. As a result, about the resultant graphite membrane, the maximum Ra value was 104 nm, the average value of the electrical conductivities was 20000 S/cm, and the average value of the thicknesses was 0.4 $\mu$m. It has been understood that even when a thin polyimide film is used, good results are obtained.

(Example 39)

The same experiment as in Example 18 was carried out to prepare a polyimide film having an average thickness of 0.3 $\mu$m and a circle shape of 10cm diameter with the thermal cure method. The resultant polyimide film was subjected to the carbonization and the graphitization in the same manner as in Example 33. As a result, about the resultant graphite membrane, the maximum Ra value was 32 nm, the average value of the electrical conductivities was 19000 S/cm, and the average value of the thicknesses was 0.1 $\mu$m. It has been understood that even when a thin polyimide film having a thickness of 1 $\mu$m or less is used, good results are obtained. In addition, it was confirmed that good results are obtained in a polyimide film prepared by a thermal cure method.

(Example 40)

The same experiment as in Example 39 was made except a polyimide film having an average thickness of 0.5 $\mu$m was used, and pull by CIP material arm was not carried out in the carbonization. As a result, about the resultant graphite membrane, the maximum Ra value was 98 nm, the average value of the electrical conductivities was 18000 S/cm, and the average value of the thicknesses was 0.2 $\mu$m. It has been understood that even when very thin polyimide having a thickness of 1 $\mu$m or less is used, good results are obtained. In addition, it was confirmed that good results are obtained in a polyimide film prepared by a thermal cure method.

(Example 41)

In the same way as in Example 1, a polyimide film having a 10 cm square size and an average thickness of 15.5 $\mu$m was yielded. This was baked while force was applied thereto outward along the film plane to yield a graphite membrane. The method for applying the force outward along the film plane at the carbonizing time and the graphitizing time was specifically as follows:

<Carbonization>

Two circular holes were made in each of the four sides of the yielded polyimide film, and tips of eight CIP material arms in the form of circular columns were passed through the holes (Fig. 10). An electrical furnace was used to raise the temperature of this film to 950°C at a rate of 5°C/minute in a nitrogen gas atmosphere, keep the film at 950°C for 10 minutes, and then cool the film to carbonize the polyimide film without applying a force. From the reach of the temperature to 300°C to the reach to 950°C, the eight CIP material arms were used to pull the film evenly in directions perpendicular to the sides of the film to widen the film plane while the applied force was gradually increased. About the degree of the pulling force, the total force of all the CIP material arms per total sectional area of the original polyimide film was changed from 15 to 175 gf/mm$^2$. This force was straightly increased as the time elapsed. After the reach of the temperature to 950°C, the film was continuously pulled at 175 gf/mm$^2$ until the heating at 950°C for the ten minutes was ended.

<Graphitization>

The temperature of the resultant carbonized film was raised to 2800°C at a rate of 5°C/minute in an argon atmosphere, and the film was kept at 2800°C for 20 minutes, and then naturally cooled to be graphitized. From the reach of the temperature to 2200°C to the reach to 2800°C, the eight CIP material arms were used to pull the film evenly in directions perpendicular to the sides of the film to widen the film plane while the applied force was gradually increased. About the degree of the pulling force, the total force of all the CIP material arms per total sectional area of the original polyimide film was changed from 15 to 750 gf/mm$^2$. This force was straightly increased as the time elapsed. After the reach of the temperature to 2800°C, the film was continuously pulled at 750 gf/mm$^2$ until the heating at 2800°C for the twenty minutes was ended.

<Measurement>

About a graphite membrane having a 5 cm square size, cut out from the membrane after the graphitization, the surface roughness (Ra), the electrical conductivity and the thickness were measured in the same way as in Example 1.
As a result, about the resultant graphite membrane, the maximum Ra value was 8 nm, the average value of the electrical conductivities was 10000 S/cm, and the average value of the thicknesses was 5.4 $\mu$m. Also according to the method of baking the film while the film was pulled outward along the film plane by the force that was increased little by little, good results were obtained. At each of the carbonizing process and the graphitizing process, the final pulling force was large. Thus, the maximum Ra value was small to realize a good surface smoothness. Gaps between graphite crystals inside the graphite membrane were somewhat widened. It appears that this matter and others make the electrical conductivity slightly low. The density of the graphite membrane was 2.10 g/cm$^3$. Thus, it is understood that the graphite membrane was obtained with a denseness such that the inside thereof hardly had voids.

(Example 42)

The same experiment as in Example 41 was made except that at the carbonizing time the film was not pulled, and at the graphitizing time the range of the force for pulling the film was set from 10 to 500 gf/mm$^2$ at 2200 to 2800°C. As a result, about the resultant graphite membrane, the maximum Ra value was 15 nm, the average value of the electrical conductivities was 15000 S/cm, and the average value of the thicknesses was 5.6 $\mu$m. Also according to the method of baking the film while the film was pulled outward along the film plane by the force that was increased little by little, good results were obtained. At the graphitizing process, the final pulling force was large. Thus, the maximum Ra value was small to realize a good surface smoothness. The density of the graphite membrane was 2.15 g/cm$^3$. Thus, it is understood that the graphite membrane was obtained with a denseness such that the inside thereof hardly had voids.

(Example 43)

A polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce a polyimide film having an average thickness of 4.3 $\mu$m. At the carbonizing time, force for pulling the film was set into the range of 10 to 120 gf/mm$^2$ at 300 to 950°C, and at the graphitizing time, force for pulling the film was set into the range of 50 to 250 gf/mm$^2$ at 2200 to 2800°C. Except these matters, the same experiment as in Example 41 was made. As a result, about the resultant graphite membrane, the maximum Ra value was 9 nm, the average value of the electrical conductivities was 12000 S/cm, and the average value of the thicknesses was 1.0 $\mu$m. Also according to the method of baking the film while the film was pulled outward along the film plane by the force that was increased little by little, good results were obtained. At each of the carbonizing process and the graphitizing process, the final pulling force was large. Thus, the maximum Ra value was small to realize a good surface smoothness. The density of the graphite membrane was 2.16 g/cm$^3$. Thus, it is understood that the graphite membrane was obtained with a denseness such that the inside thereof hardly had voids.

(Example 44)

A polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce a polyimide film having an average thickness of 4.3 $\mu$m. Without pulling the film at the carbonizing time, at the graphitizing time, force for pulling the film was set into the range of 10 to 125 gf/mm$^2$ at 2200 to 2800°C. Except these matters, the same experiment as in Example 41 was made. As a result, about the resultant graphite membrane, the maximum Ra value was 23 nm, the average value of the electrical conductivities was 18000 S/cm, and the average value of the thicknesses was 1.1 $\mu$m. Also according to the method of baking the film while the film was pulled outward along the film plane by the force that was increased little by little, good results were obtained. In the graphitizing process, the final pulling force was large. Thus, the maximum Ra value was small to realize a good surface smoothness. The density of the graphite membrane was 2.20 g/cm$^3$. Thus, it is understood that the graphite membrane was obtained with a denseness such that the inside thereof hardly had voids.

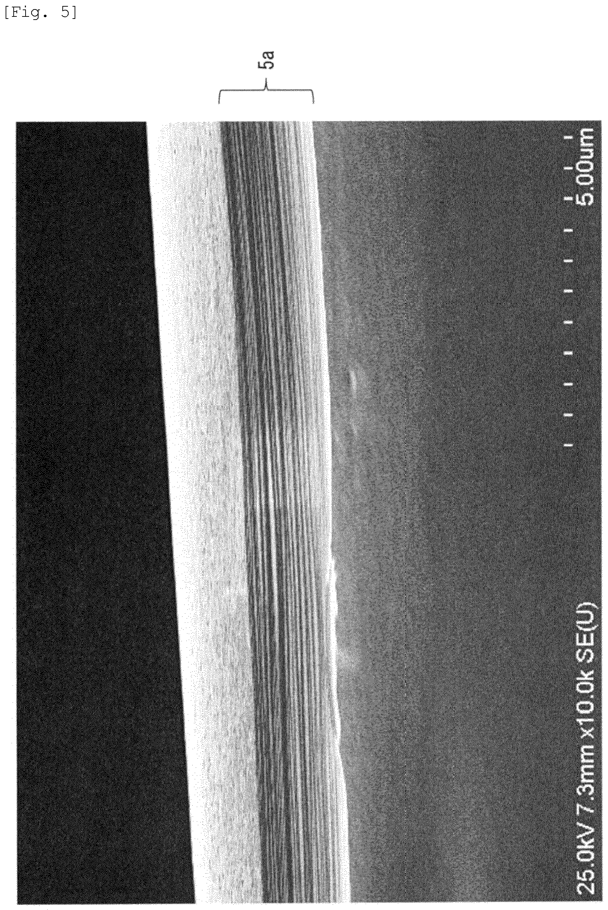

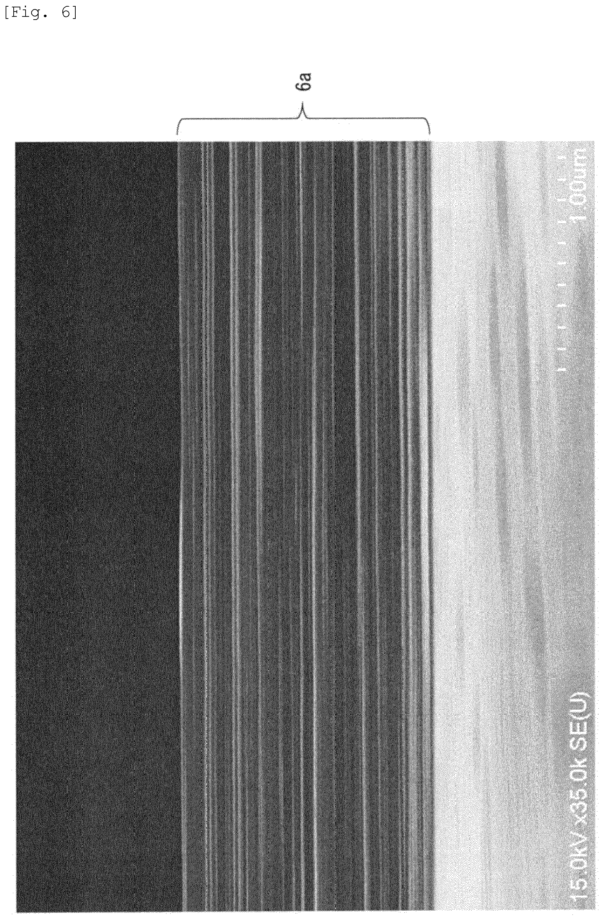

This is evident also from sectional SEM images of the resultant graphite membrane (Figs. 5 and 6). Reference sign 5a in Fig. 5 and reference sign 6a in Fig. 6 each represent a cross section of a smooth-surfaced graphite of the present invention. In each of the cross sections 5a and 6a, very thin graphite layers uniform in thickness and excellent in surface smoothness are laminated onto each other in parallel with the membrane plane from one of the surfaces of the graphite membrane to the other surface without having any gap. Figs. 2(a) and 2(b) are respective sectional SEM images of conventional high-quality graphite membranes. The thickness thereof is very small and uniform. However, large-area one of these membranes has wrinkles and undulations. Thus, it is demonstrated that there remains a room for improving the surface smoothness. As is understood from such graphite membrane sectional SEM images, the inside of the graphite membrane of the present invention has a structure in which many very thin graphite layers are laminated onto each other, these layers being parallel with the membrane plane of the graphite membrane and excellent in thickness uniformity, and having an excellent surface smoothness such that irregularities in a direction perpendicular to the membrane plane are hardly present. This structure can never be produced even by shaping natural graphite into a sheet form, or by pressing, cutting and surface-polishing isotropic graphite, glassy carbon, a graphite evaporated membrane, fullerene or carbon nanotubes, or a composite material of two or more of these materials. Thus, the present invention realizes a graphite membrane having good properties such as unprecedented, especially excellent surface smoothness, and very high electrical conductivity, thermoconductivity, bending resistance, rapture resistance, and easy cuttability at the same time.

When a sectional TEM image of the resultant graphite membrane is viewed (Fig. 3), it is understood that the inside of the membrane has a structure in which many graphene layers are laminated onto each other and these layers are parallel with the membrane plane of the graphite membrane and hardly have irregularities in a direction perpendicular to the membrane plane to be excellent in surface smoothness. Other methods do not make it possible to produce a graphite membrane about which not only over its outer surfaces but also over its inside, nanometer-level layer-structures are controlled and irregularities are restrained. Thus, the method of the present invention is especially excellent.

(Example 45)

A polyamic acid was synthesized using pyromellitic dianhydride, 4,4'-diaminodiphenyl ether and p-phenylenediamine at a ratio by mole of 20/13/7. An 18%-by-weight solution of this polyamic acid in DMF was used to produce a polyimide film having an average thickness of 2.5 $\mu$m. Without pulling the film at the carbonizing time, at the graphitizing time, force for pulling the film was set into the range of 300 to 1450 gf/mm$^2$ at 2200 to 2800°C. Except these matters, the same experiment as in Example 41 was made. As a result, about the resultant graphite membrane, the maximum Ra value was 7 nm, the average value of the electrical conductivities was 21000 S/cm, and the average value of the thicknesses was 0.7 $\mu$m. Also according to the method of baking the film while the film was pulled outward along the film plane by the force that was increased little by little, good results were obtained. At the graphitizing process, the final pulling force was large. Thus, the maximum Ra value was small to realize a good surface smoothness. The density of the graphite membrane was 2.21 g/cm$^3$. Thus, it is understood that the graphite membrane was obtained with a denseness such that the inside thereof hardly had voids.

(Example 46)

A polyamic acid was synthesized using pyromellitic dianhydride, 4,4'-diaminodiphenyl ether and p-phenylenediamine at a ratio by mole of 5/3/2. An 18%-by-weight solution of this polyamic acid in DMF was used to produce a polyimide film having an average thickness of 12.5 $\mu$m. Without pulling the film at the carbonizing time, at the graphitizing time, force for pulling the film was set into the range of 10 to 80 gf/mm$^2$ at 2200 to 2800°C. Except these matters, the same experiment as in Example 41 was made. As a result, about the resultant graphite membrane, the maximum Ra value was 35 nm, the average value of the electrical conductivities was 20000 S/cm, and the average value of the thicknesses was 4.7 $\mu$m. Also according to the method of baking the film while the film was pulled outward along the film plane by the force that was increased little by little, good results were obtained. At the graphitizing process, the final pulling force was large. Thus, the maximum Ra value was small to realize a good surface smoothness. The density of the graphite membrane was 2.24 g/cm$^3$. Thus, it is understood that the graphite membrane was obtained with a denseness such that the inside thereof hardly had voids.

(Example 47)

In Example 1, a copper foil piece was used instead of the aluminum foil piece, and a laminate of the copper foil piece and the polyamic acid solution was heated at each of 100°C, 250°C, and 450°C for 60 seconds to form a polyimide film on the copper foil piece (Fig. 13). From this laminate, a 10 cm square piece was cut out. In the same way as in Example 1, about the laminate of the copper foil piece and the polyimide film, the thicknesses of five points thereof were measured. Also about the copper foil piece alone, the thicknesses of the corresponding five points were beforehand measured in the same way. The average value of respective thickness differences at the individual points was calculated. The value was 12.6 $\mu$m. This value was used as the average film thickness of the polyimide film.

The resultant laminate having a 10 cm square size of the copper foil piece and the polyimide film was sandwiched between graphite gaskets made of graphite, and then carbonized under the same conditions as in Example 1. Of course, the film was not pulled by any CIP material arm. Thereafter, the copper foil piece was etched with an aqueous ferric chloride solution to be removed. In this way, a single body of a carbon film was yielded. This film was sandwiched between graphite gaskets, and graphitized under the same conditions as in Example 1. Of course, the film was not pulled by any CIP material arm.

About the resultant graphite membrane, from the center thereof, a portion 5 cm square was cut out in the same way as in Example 1. Various measurements thereof were made. As a result, about the resultant graphite membrane, the maximum Ra value was 196 nm, the average value of the electrical conductivities was 9000 S/cm, and the average value of the thicknesses was 4.3 $\mu$m. No technical manner of stretching wrinkles was performed at the graphitizing time; however, the film was carbonized in the state of being stacked with the copper foil piece, so that wrinkles generated at the carbonizing time were prevented. Simultaneously, the carbonized film was started to be graphitized in a smooth film state. Consequently, the realization of a graphite membrane was attainable which was thin and had a good surface smoothness (small Ra) and a high electrical conductivity. Moreover, the present method does not require any mechanism and others for pulling the film, so that such a surface smoothness can simply be realized. However, this example was larger in maximum Ra value than the above-mentioned working examples.

(Example 48)

The same experiment as in Example 47 was made except that without using any imidization acceralator, the raw materials were imidized only by heating to form a polyimide film having an average thickness of 12.8 $\mu$m on a copper foil piece. As a result, about the resultant graphite membrane, the maximum Ra value was 189 nm, the average value of the electrical conductivities was 9000 S/cm, and the average value of the thicknesses was 4.5 $\mu$m. It has been understood that the use of a polyimide film formed by a thermal curing method also produces good results.

(Comparative Example 7)

The same experiment as in Example 47 was made except that at the time of carbonizing the laminate of the copper foil piece and the polyimide film, the highest temperature was changed to 700°C, and the film was kept at 700°C for 10 minutes. As a result, about the resultant graphite membrane, the maximum Ra value was 3643 nm, the average value of the electrical conductivities was 10000 S/cm, and the average value of the thicknesses was 4.8 $\mu$m.

It can be considered that the carbonizing temperature was not sufficiently high (700°C) in the state that the polyimide film was stacked with the copper foil piece, and thus when the film was heated to 700 to 950°C at the graphitizing time, wrinkles larger than the wrinkles in Example 47 were generated so that the resultant graphite membrane was lowered in surface smoothness.

(Comparative Example 8)

The same experiment as in Comparative Example 7 was made except that without using any imidization acceralator, the raw materials were imidized only by heating to form a polyimide film having an average thickness of 12.5 $\mu$m on a copper foil piece. As a result, about the resultant graphite membrane, the maximum Ra value was 15823 nm, the average value of the electrical conductivities was 10000 S/cm, and the average value of the thicknesses was 4.8 $\mu$m. It can be considered that the carbonizing temperature was not sufficiently high (700°C) in the state that the polyimide film was stacked with the copper foil piece, and thus when the film was heated to 700 to 950°C at the graphitizing time, wrinkles larger than the wrinkles in Example 48 were generated so that the resultant graphite membrane was lowered in surface smoothness.

(Comparative Example 9)

The same experiment as in Example 47 was made except that a polyimide film having an average thickness of 2.0 $\mu$m was formed onto an aluminum foil piece, and at the time of carbonizing the resultant laminate of the aluminum foil piece and the polyimide film, the highest temperature was set to 600°C and the laminate was kept at 600°C for 10 minutes. As a result, about the resultant graphite membrane, the maximum Ra value was 33900 nm, the average value of the electrical conductivities was 13000 S/cm, and the average value of the thicknesses was 0.7 $\mu$m. It can be considered that the carbonizing temperature was not sufficiently high (600°C) in the state that the polyimide film was stacked with the aluminum foil piece, and thus when the film was heated to 600 to 950°C at the graphitizing time, wrinkles larger than the wrinkles in Example 47 were generated so that the resultant graphite membrane was lowered in surface smoothness.

(Example 49)

The same experiment as in Example 47 was made except that a polyimide film having an average thickness of 2.1 $\mu$m was formed onto a nickel foil piece, the highest temperature when the laminate of the nickel foil piece and the polyimide film was carbonized was set to 1200°C, and the laminate was kept at 1200°C for 10 minutes. As a result, about the resultant graphite membrane, the maximum Ra value was 149 nm, the average value of the electrical conductivities was 8000 S/cm, and the average value of the thicknesses was 0.6 $\mu$m. It can be considered that the carbonizing temperature was sufficiently high in the state that the polyimide film was stacked with the nickel foil piece to make it possible to decrease wrinkles of the resultant graphite membrane satisfactorily.

(Example 50)

The same experiment as in Example 47 was made except that a polyimide film having an average thickness of 2.2 $\mu$m was formed into a piece about 10 cm square onto a quartz glass piece, the highest temperature when the laminate of the quartz glass piece and the polyimide film was carbonized was set to 1000°C, and the laminate was kept at 1000°C for 10 minutes. However, the contact type step gauge was used to measure the thickness of the polyimide film from a difference in height between portions of the laminate where the quartz glass piece was naked and portions thereof that were covered with the polyimide film. Furthermore, in order to yield a single body of the carbonized film, the laminate of the quartz glass piece and the carbonized film was immersed in water, an end thereof was slightly peeled with tweezers, and then the carbonized film was peeled while the laminate was swung in the water. As a result, about the resultant graphite membrane, the maximum Ra value was 170 nm, the average value of the electrical conductivities was 9000 S/cm, and the average value of the thicknesses was 0.6 $\mu$m. It can be considered that the carbonizing temperature was sufficiently high in the state that the polyimide film was stacked with the quartz glass piece to make it possible to decrease wrinkles of the resultant graphite membrane satisfactorily.

(Example 51)

The same experiment as in Example 50 was made except that a circular polyimide film having an average thickness of 2.2 $\mu$m and a diameter of about 10 cm was formed onto a silicon wafer. In the same way as in Example 6, from a central portion of a circular graphite membrane obtained by baking the laminate, a graphite membrane having a dimeter of 5 cm was cut out. About the resultant graphite membrane, the same measurements as in Example 6 were made. As a result, about the resultant 5-cm-diameter graphite membrane, the maximum Ra value was 172 nm, the average value of the electrical conductivities was 10000 S/cm, and the average value of the thicknesses was 0.6 $\mu$m. It can be considered that the carbonizing temperature was sufficiently high in the state that the polyimide film was stacked with the silicon wafer to make it possible to decrease wrinkles of the resultant graphite membrane satisfactorily.

(Example 52)

The same experiment as in Example 50 was made except that a polyimide film having an average thickness of 2.2 $\mu$m was formed onto a SiC substrate. As a result, about the resultant graphite membrane, the maximum Ra value was 180 nm, the average value of the electrical conductivities was 9000 S/cm, and the average value of the thicknesses was 0.7 $\mu$m. It can be considered that the carbonizing temperature was sufficiently high in the state that the polyimide film was stacked with the SiC substrate to make it possible to decrease wrinkles of the resultant graphite membrane satisfactorily.

(Example 53)

A polyimide film having an average thickness of 2.1 $\mu$m was formed into a piece about 10 cm square onto a surface-polished graphite substrate. The laminate was sandwiched between gaskets in the state of being stacked with the graphite substrate. This was carbonized and graphitized under the same heating conditions as in Example 47. An adhesive tape was bonded onto the upper of the graphite membrane obtained in the state of being bonded to the graphite substrate. This tape-bonded membrane was, together the graphite substrate, immersed into water, and then the adhesive tape was gradually and successively peeled off from an end of the substrate. The adhesive of the adhesive tape was dissolved with acetone to yield a graphite membrane single body. In the same way as in Example 47, various measurements of the resultant square graphite membrane having a 5 cm square size were made. As a result, about the resultant graphite membrane, the maximum Ra value was 90 nm, the average value of the electrical conductivities was 8000 S/cm, and the average value of the thicknesses was 0.7 $\mu$m. Since the polyimide film was heated in the state of being stacked with the substrate until the completion of the graphitization, the maximum Ra value was very small. A graphite membrane obtained in Patent Document 3 and transferred to a PMMA film had fine wrinkles. It is evident only with the naked eye that in its area 5 mm square, the maximum Ra value was larger than that of the present example. One reason for this difference is, of course, that the peeling methods were different from each other. Another reason would be as follows: in the present invention, the method for forming a polyimide film is based on coating; this method gives a polyimide film higher in orientation in the film plane direction than a vapor deposition polymerization method; consequently, a tougher graphite-layer structure is more easily developed, so that a graphite membrane is formed in which wrinkles are intrinsically less easily generated when the membrane is peeled from the substrate.

(Example 54)

The same experiment as in Example 50 was made except that a polyimide film having an average thickness of 2.1 $\mu$m was formed onto a glassy carbon substrate, the highest temperature when the laminate of the glassy carbon substrate and the polyimide film was carbonized was set to 1300°C, and the laminate was kept at 1300°C for 10 minutes. In other words, the polyimide film on the glassy carbon substrate was carbonized, the carbonized film was peeled from the glassy carbon substrate, and then the carbonized film was sandwiched between graphite gaskets to be graphitized. As a result, about the resultant graphite membrane, the maximum Ra value was 177 nm, the average value of the electrical conductivities was 11000 S/cm, and the average value of the thicknesses was 0.5 $\mu$m. It can be considered that the carbonizing temperature was sufficiently high in the state that the polyimide film was stacked with the glassy carbon substrate to make it possible to decrease wrinkles of the resultant graphite membrane satisfactorily.

(Example 55)

The same experiment as in Example 50 was made except that a polyimide film having an average thickness of 2.3 $\mu$m was formed onto a glassy carbon substrate, the highest temperature when the laminate of the glassy carbon substrate and the polyimide film was carbonized was set to 1800°C, and the laminate was kept at 1800°C for 10 minutes. In other words, the polyimide film was carbonized on the glassy carbon substrate, the carbonized film was peeled from the glassy carbon substrate, and then the carbonized film was sandwiched between graphite gaskets to be graphitized. As a result, about the resultant graphite membrane, the maximum Ra value was 165 nm, the average value of the electrical conductivities was 10000 S/cm, and the average value of the thicknesses was 0.5 $\mu$m. It can be considered that the carbonizing temperature was sufficiently high in the state that the polyimide film was stacked with the glassy carbon substrate to make it possible to decrease wrinkles of the resultant graphite membrane satisfactorily.

(Example 56)

The same experiment as in Example 53 was made except that a polyimide film having an average thickness of 2.0 $\mu$m was formed onto a glassy carbon substrate. As a result, about the resultant graphite membrane, the maximum Ra value was 8 nm, the average value of the electrical conductivities was 8000 S/cm, and the average value of the thicknesses was 0.7 $\mu$m. Since the polyimide film was heated in the state of being stacked with the glassy carbon substrate excellent in surface smoothness until the completion of the graphitization, the maximum Ra value was very small. A graphite membrane obtained in Patent Document 3 and transferred to a PMMA film had fine wrinkles. It is evident only with the naked eye that in its area 5 mm square, the maximum Ra value was larger than that of the present example. One reason for this difference is, of course, that the peeling methods were different from each other. Another reason would be as follows: in the present invention, the method for forming a polyimide film is based on coating; this method gives a polyimide film higher in orientation in the film plane direction than a vapor deposition polymerization method; consequently, a tougher graphite-layer structure is easily developed, so that a graphite membrane is formed in which wrinkles are intrinsically less easily generated when the membrane is peeled from the substrate.

(Comparative Example 10)

In the same way as in Example 6, a circular polyimide film having an average thickness of 2.0 $\mu$m and a diameter of 10 cm was yielded. This was bonded to a doughnut-shaped glassy carbon substrate obtained by making a circular hole of 7 cm diameter in the center of a glassy carbon substrate of 10 cm outside-diameter. Specifically, a polyamic acid solution produced in the same way as in Example 6 was coated between the circular polyimide film and the doughnut-shaped glassy carbon substrate and the resultant was heated to 450°C to stack the circular polyimide film with the doughnut-shaped glassy carbon substrate. This was carbonized under the same conditions as in Example 47. As a result, the carbonized film was broken. As demonstrated in some of the above-mentioned working examples, in the case of forming a polyimide film to cover a substrate in a flat-plane form, the resultant carbonized film was not broken even when the film was carbonized in the state of being stacked with the substrate. However, when the polyimide film was carbonized in the state of floating in the air, the membrane was broken. A reason therefor can be considered as follows: the polyimide film (carbonized film) had no substrate for supporting the entire plane of this film, so that tension based on the shrinkage of the polyimide film (carbonized film) was not uniform on the entire plane of the film, and further the film was fixed to the unshrinkable frame; thus, a very strong tension was concentrated only to locally generated wrinkles or portions of the film in the vicinity of the fixed film edge. In short, this example intrinsically fell in the same situation as in Comparative Examples 1 and 2.

(Example 57)

In the same way as in Example 6, a circular polyimide film having an average thickness of 2.4 $\mu$m and a diameter of 10 cm was yielded. This was sandwiched between two doughnut-shaped frames (outside diameter: 10 cm, and inside diameter: 7 cm) each obtained by making a circular hole of 7 cm diameter in the center of a circular poly-p-phenylenevinylene film of 10 cm diameter and 50.2 $\mu$m average thickness (Fig. 16). Specifically, a polyamic acid solution produced in the same way as in Example 6 was coated between the circular polyimide film and each of the doughnut-shaped poly-p-phenylenevinylene films, and the resultant was heated to 450°C to stack the circular polyimide film with the doughnut-shaped poly-p-phenylenevinylene frames. This was sandwiched between graphite gaskets, and then baked according to the same carbonizing and graphitizing program (temperature-raising rate and temperature-keeping) as in Example 1. In this way, the polyimide film was carbonized and graphitized in the state of being stacked with the frames. Thereafter, the doughnut-shaped frame moiety was cut away to yield a single body of a graphite membrane of about 6 cm diameter, which originated from the 2.4-$\mu$m-average-thickness polyimide. Various measurements of this membrane were made in the same way as in Example 6. As a result, about the resultant graphite membrane, the maximum Ra value was 45 nm, the average value of the electrical conductivities was 17000 S/cm, and the average value of the thicknesses was 1.1 $\mu$m. The membrane was heated in the state of being stacked with the frames, which were thick and high in mechanical strength and were not destroyed by bake even at the graphitizing temperature because of the conversion thereof to graphite, so that wrinkles at the baking time were effectively decreased and the maximum Ra value was relatively small to be good.

(Example 58)

In the same way as in Example 57 (i.e., in the same way as in Example 6), a circular polyimide film having an average thickness of 5.2 $\mu$m and a diameter of 10 cm was yielded. Moreover, in the same way as in Example 57 (i.e., in the same way as in Example 6), circular polyimide films each having an average thickness of 55.0 $\mu$m and a diameter of 10 cm were yielded, and these films were used as doughnut-shaped frames in the same way as in Example 57. The polyimide film of 5.2 $\mu$m average thickness was sandwiched between these doughnut-shaped frames. In the same way as in Example 57, these members were bonded to each other, carbonized and graphitized, and various measurements of the resultant circular graphite membrane of about 6 cm diameter were made. As a result, about the resultant graphite membrane, the maximum Ra value was 76 nm, the average value of the electrical conductivities was 17000 S/cm, and the average value of the thicknesses was 2.5 $\mu$m. The film was heated in the state of being stacked with the frames, which were thick and high in mechanical strength and were not destroyed by bake even at the graphitizing temperature because of the conversion thereof to graphite, so that the maximum Ra value was relatively small to be good.

(Example 59)

The same experiment as in Example 58 was made except that a polyimide film having an average thickness of 2.2 $\mu$m was used as a sample, and a disc-form substrate having, at the center thereof, no hole and having a diameter of 10 cm and a thickness of 55.0 μm was used instead of the doughnut-shaped frames. The polyimide film of the sample and the disc-form polyimide substrate were bonded to each other by coating a polyamic acid solution only onto the circumference of the circle. After the graphitization, only the bonded portion of the circumference was cut off with scissors to cut the graphitized membrane and the disc-form substrate to be separated from each other. As a result, about the resultant circular about-6-cm-diameter graphite membrane, the maximum Ra value was 66 nm, the average value of the electrical conductivities was 17000 S/cm, and the average value of the thicknesses was 1.0 μm. The membrane was heated in the state of being stacked with the frame, which was thick and high in mechanical strength and was not destroyed by bake even at the graphitizing temperature because of the conversion thereof to graphite, so that the maximum Ra value was relatively small to be good. It is also understood that good results can be obtained also in the case of using not doughnut-shaped frames but a disc-form substrate.

(Example 60)

A polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce a polyimide film having an average thickness of 2.3 μm. Except that this film was used as a sample, the same experiment as in Example 58 was made, in which doughnut-shaped polyimide frames were also the same as described above. As a result, about the resultant circular about-6-cm-diameter graphite membrane, the maximum Ra value was 25 nm, the average value of the electrical conductivities was 18000 S/cm, and the average value of the thicknesses was 1.1 μm. The membrane was heated in the state of being stacked with the frame, which was thick and high in mechanical strength and was not destroyed by bake even at the graphitizing temperature because of the conversion thereof to graphite, so that the maximum Ra value was relatively small to be good. Moreover, this example was smaller in maximum Ra value than Examples 57 to 59. A reason therefor can be considered as follows: the sample moiety was different from the frame moiety in polyimide composition, so that when the graphitization was finally completed, the ratio of the shrunken size of the sample moiety to the original size thereof was slightly larger than that of the frame moiety to the original size thereof; consequently, the force for pulling the sample outward in the membrane plane was slightly largely applied to the membrane.

(Example 61)

A polyamic acid was synthesized using pyromellitic dianhydride, 4,4'-diaminodiphenyl ether and p-phenylenediamine at a ratio by mole of 4/2/2. An 18%-by-weight solution of this polyamic acid in DMF was used to produce a polyimide film having an average thickness of 2.4 μm. Except that this film was used as a sample, the same experiment as in Example 58 was made, in which doughnut-shaped polyimide frames were also the same as described above. As a result, about the resultant circular about-6-cm-diameter graphite membrane, the maximum Ra value was 26 nm, the average value of the electrical conductivities was 18000 S/cm, and the average value of the thicknesses was 1.1 μm. The film was heated in the state of being stacked with the frames, which were thick and high in mechanical strength and were not destroyed by bake even at the graphitizing temperature because of the conversion thereof to graphite, so that the maximum Ra value was relatively small to be good. Moreover, this example was smaller in maximum Ra value than Examples 57 to 59. A reason therefor can be considered as follows: the sample moiety was different from the frame moiety in polyimide composition, so that when the graphitization was finally completed, the ratio of the shrunken size of the sample moiety to the original size thereof was slightly larger than that of the frame moiety to the original size thereof; consequently, the force for pulling the sample outward in the membrane plane was slightly largely applied to the membrane.

(Example 62)

In the same way as in Example 8, a polyamic acid was synthesized using pyromellitic dianhydride, 4,4'-diaminodiphenyl ether and p-phenylenediamine at a ratio by mole of 4/2/2, and an 18%-by-weight solution of this polyamic acid in DMF was used to produce a polyimide film having a 10 cm square size and an average thickness of 2.3 μm. Moreover, in the same way as in Example 1, a polyamic acid was synthesized using pyromellitic dianhydride, and 4,4'-diaminodiphenyl ether at a ratio by mole of 1/1 (i.e., 4/4), and an 18%-by-weight solution of this polyamic acid in DMF was used to produce each of two polyimide films having a 10 cm square size and an average thickness of 55.0 μm. Two frames which were each in a picture frame form were each produced by making a 7 cm square hole in the center of one of the 55.0-μm-average-thickness square films. The 2.3-μm-average-thickness square polyimide film was sandwiched between the square frames, and these members were bonded to each other (Fig. 17). Specifically, a polyamic acid solution produced in the same way as in Example 6 was coated between the 2.3-μm-average-thickness square polyimide film and each of the picture-frame-form polyimide frames, and the resultant was heated to 450°C to stack the polyimide film with the picture-frame-form polyimide frames. This was sandwiched between graphite gaskets, and then baked according to the same carbonizing and graphitizing program (temperature-raising rate and temperature-keeping) as in Example 1. In this way, the polyimide film was carbonized and graphitized in the state of being stacked with the frames. Thereafter, the picture-frame-form graphitized frame moiety of the resultant was cut away to yield a single body of a square graphite membrane having each side of about 6 cm length, which originated from the about-2.3-$\mu$m-average-thickness square polyimide. Various measurements of this membrane were made in the same way as in Example 1. As a result, about the resultant graphite membrane having about 6 cm square size, the maximum Ra value was 21 nm, the average value of the electrical conductivities was 18000 S/cm, and the average value of the thicknesses was 1.1 $\mu$m. The membrane was heated in the state of being stacked with the frames, which were thick and high in mechanical strength and were not destroyed by bake even at the graphitizing temperature because of the conversion thereof to graphite, so that the maximum Ra value was relatively small to be good. Moreover, this example was smaller in maximum Ra value than Examples 57 to 59. A reason therefor can be considered as follows: the sample moiety was different from the frame moiety in polyimide composition, so that when the graphitization was finally completed, the ratio of the shrunken size of the sample moiety to the original size thereof was slightly larger than that of the frame moiety to the original size thereof; consequently, the force for pulling the sample outward in the membrane plane was slightly largely applied to the membrane.

(Example 63)

A polyamic acid was synthesized using pyromellitic dianhydride, 4,4'-diaminodiphenyl ether and p-phenylenediamine at a ratio by mole of 4/1/3. An 18%-by-weight solution of this polyamic acid in DMF was used to produce a polyimide film having an average thickness of 2.2 $\mu$m. Except that this film was used as a sample, the same experiment as in Example 58 was made, in which doughnut-shaped polyimide frames were also the same as described above. As a result, about the resultant circular about-6-cm-diameter graphite membrane, the maximum Ra value was 18 nm, the average value of the electrical conductivities was 16000 S/cm, and the average value of the thicknesses was 1.1 $\mu$m. The membrane was heated in the state of being stacked with the frames, which were thick and high in mechanical strength and were not destroyed by bake even at the graphitizing temperature because of the conversion thereof to graphite, so that the maximum Ra value was relatively small to be good. Moreover, this example was smaller in maximum Ra value than Examples 57 to 59. A reason therefor can be considered as follows: the sample moiety was different from the frame moiety in polyimide composition, so that when the graphitization was finally completed, the ratio of the shrunken size of the sample moiety to the original size thereof was slightly larger than that of the frame moiety to the original size thereof; consequently, the force for pulling the sample outward in the membrane plane was slightly largely applied to the membrane.

(Example 64)

In the same way as in Example 61, a polyamic acid was synthesized using pyromellitic dianhydride, 4,4'-diaminodiphenyl ether and p-phenylenediamine at a ratio by mole of 4/2/2, and an 18%-by-weight solution of this polyamic acid in DMF was used to produce a circular polyimide film having a diameter of 10 cm and an average thickness of 12.5 $\mu$m. Moreover, in the same way as in Example 6, two doughnut-shaped frames (outside diameter: 10 cm, and inside dimeter: 7 cm) were each produced by making a circular hole having a diameter of 7 cm in the center of a circular film having a diameter of 10 cm and an average thickness of 251.0 $\mu$m. Next, an epoxy adhesive was coated between the circular polyimide film and each of the doughnut-shaped frames to bond these members to each other to produce a product in which the doughnut-shaped frames were bonded, respectively, to both surfaces of the circular polyimide film (Fig. 16). This was sandwiched between graphite gaskets, and then baked according to the same carbonizing and graphitizing program (temperature-raising rate and temperature-keeping) as in Example 1. In this way, the polyimide film was carbonized and graphitized in the state of being stacked with the frames. Thereafter, the doughnut-shaped frame moiety of the resultant was cut away to yield a single body of a graphite membrane having a diameter of about 6 cm, which originated from the 12.5-$\mu$m-diameter polyimide film. Various measurements of this membrane were made in the same way as in Example 6. As a result, about the resultant graphite membrane, the maximum Ra value was 18 nm, the average value of the electrical conductivities was 16000 S/cm, and the average value of the thicknesses was 5.1 $\mu$m. The membrane was heated in the state of being stacked with the frames, which were thick and high in mechanical strength and were not destroyed by bake even at the graphitizing temperature because of the conversion thereof to graphite, so that wrinkles at the baking time were effectively deceased, and the maximum Ra value was relatively small to be good. The density of the graphite membrane was 1.96 g/cm$^3$. It is understood that this graphite membrane was obtained with a denseness such that the inside thereof hardly had voids.

(Example 65)

In the same way as in Example 61, a polyamic acid was synthesized using pyromellitic dianhydride, 4,4'-diaminodiphenyl ether and p-phenylenediamine at a ratio by mole of 4/2/2, and an 18%-by-weight solution of this polyamic acid in DMF was used to produce a circular polyimide film having a diameter of 10 cm and an average thickness of 2.4 $\mu$m. Moreover, in the same way as in Example 6, two doughnut-shaped frames (outside diameter: 10 cm, and inside dimeter: 7 cm) were each produced by making a circular hole having a diameter of 7 cm in the center of a circular film having a diameter of 10 cm and an average thickness of 55.0 $\mu$m. The circular polyimide film, and the two doughnut-shaped frames were each independently carbonized in the same way as in Example 1. Next, an epoxy adhesive was coated between the circular polyimide film and each of the doughnut-shaped frames to bond these members to each other to produce a product in which the carbonized doughnut-shaped frames were bonded, respectively, to both surfaces of the carbonized circular polyimide film (Fig. 16). This was sandwiched between graphite gaskets, and then baked according to the same graphitizing program (temperature-raising rate and temperature-keeping) as in Example 1. In this way, the polyimide film was graphitized in the state of being stacked with the doughnut-shaped frames. Thereafter, the doughnut-shaped frame moiety of the resultant was cut away to yield a single body of a graphite membrane having a diameter of about 6 cm, which originated from the 2.4-$\mu$m-average-thickness polyimide film. Various measurements of this membrane were made in the same way as in Example 6. As a result, about the resultant graphite membrane, the maximum Ra value was 18 nm, the average value of the electrical conductivities was 16000 S/cm, and the average value of the thicknesses was 1.1 $\mu$m. The membrane was heated in the state of being stacked with the frames, which were thick and high in mechanical strength and were not destroyed by bake even at the graphitizing temperature because of the conversion thereof to graphite, so that wrinkles at the baking time were effectively deceased, and the maximum Ra value was relatively small to be good. The density of the graphite membrane was 2.00 g/cm$^3$. It is understood that this graphite membrane was obtained with a denseness such that the inside thereof hardly had voids.

(Example 66)

In the same way as in Example 6, a circular polyimide film was yielded which had an average thickness of 15.8 $\mu$m and a diameter of 10 cm. This was sandwiched between gaskets made of graphite, and an electrical furnace was used to raise the temperature of the sandwich to 950°C at a rate of 5°C/minute, and keep the sandwich at 950°C for 10 minutes. The sandwich was then naturally cooled to carbonize the polyimide film. The resultant carbonized film was inserted into between two dome-shaped glassy carbon plates having a diameter of 12 cm, put onto each other into the same direction (Fig. 18). About each of the dome-shaped glassy carbon plates, one (internal dome surface) of the two surfaces thereof had a curvature radius of 100 cm while the other (external dome surface) had a curvature radius of 80 cm. This carbonized film sandwiched between the two dome-shaped glassy carbon plates was graphitized in an electrical furnace having a pressing function. The graphitization was performed by raising the temperature of the sandwich to 2800°C at a rate of 5°C/minute in an argon gas atmosphere, keeping the sandwich at 2800°C for 20 minutes, and cooling the sandwich naturally. Over 20 minutes from the reach of the temperature to 2800°C, the carbonized film (graphite membrane) sandwiched between the two dome-shaped glassy carbon plates was pressed in a direction perpendicular to the film plane of the carbonized film (graphite membrane) at a pressure of 0.04 kgf/cm$^2$ per circular area of the circle of 12 cm diameter. About a circular graphite membrane having a diameter of 5 cm, cut out from the center of the resultant graphite membrane, the same various measurements as in Example 6 were made. As a result, the maximum Ra value was 114 nm, the average value of the electrical conductivities was 19000 S/cm, and the average value of the thicknesses was 7.0 $\mu$m. It has been understood that also by pressing of a film when the film is graphitized, a graphite membrane can be yielded in which wrinkles are decreased and a high electrical conductivity is shown. This method produces the same advantageous effects also when many carbonized films and glassy carbon plates are stacked on each other, so as to be excellent in the productivity.

(Example 67)

The same experiment as in Example 66 was carried out except that a pressure of press was 0.1 kgf/cm$^2$. As result, about the resultant circular about-5-cm-diameter graphite membrane, the maximum Ra value was 109 nm, the average value of the electrical conductivities was 20000 S/cm, and the average value of the thicknesses was 6.9 $\mu$m.

(Example 68)

The same experiment as in Example 66 was carried out except that a polyimide film having a thickness of 15.9 $\mu$m, a pressure of 1.0 kgf/cm$^2$ was applied to the film for 1 minute after reaching 2200°C, 2400°C, 2600°C, 2800°C in the graphitization. As result, about the resultant circular about-5-cm-diameter graphite membrane, the maximum Ra value was 102 nm, the average value of the electrical conductivities was 19000 S/cm, and the average value of the thicknesses was 6.5 $\mu$m.

(Example 69)

The same experiment as in Example 66 was carried out except that a carbonized film was sandwiched by convex of glassy carbon plate having a dome shape and glassy carbon disk plate having a diameter of 12 cm, these were pressed by a pressure of 1.0 kgf/cm$^2$ for one minute after reaching a temperature of 2600 °C and 2800 °C in the graphitization. As result, about the resultant circular about-5-cm-diameter graphite membrane, the maximum Ra value was 138 nm, the average value of the electrical conductivities was 19000 S/cm, and the average value of the thicknesses was 6.6 $\mu$m.

(Example 70)

The same experiment as in Example 66 was carried out except that a carbonized film obtained by carbonizing a polyimide film having an average thickness of 15.6 $\mu$m was sandwiched by convex of two glassy carbon plates having a dome shape, these were pressed by a pressure of 1.0 kgf/cm$^2$ for one minute after reaching a temperature of 2600 °C and 2800 °C in the graphitization. As result, about the resultant circular about-5-cm-diameter graphite membrane, the maximum Ra value was 123 nm, the average value of the electrical conductivities was 19000 S/cm, and the average value of the thicknesses was 6.4 $\mu$m.

(Example 71)

The same experiment as in Example 66 was carried out except that a polyimide film having an average thickness of 15.7 $\mu$m was used, the polyimide film and glassy carbon plates were pressed by a pressure of 1.0 kgf/cm$^2$ for one minute after reaching a temperature of 2800 °C in the graphitization. As result, about the resultant circular about-5-cm-diameter graphite membrane, the maximum Ra value was 124 nm, the average value of the electrical conductivities was 19000 S/cm, and the average value of the thicknesses was 6.8 $\mu$m.

(Example 72)

The same experiment as in Example 66 was carried out except that a polyimide film having an average thickness of 15.6 $\mu$m was used, the polyimide film and glassy carbon plates were pressed by a pressure of 10.0 kgf/cm$^2$. As result, about the resultant circular about-5-cm-diameter graphite membrane, the maximum Ra value was 165 nm, the average value of the electrical conductivities was 17000 S/cm, and the average value of the thicknesses was 6.4 $\mu$m.

(Example 73)

The same experiment as in Example 66 was carried out except that the polyimide film and glassy carbon plates were pressed by a pressure of 25.0 kgf/cm$^2$. As result, about the resultant circular about-5-cm-diameter graphite membrane, the maximum Ra value was 178 nm, the average value of the electrical conductivities was 16000 S/cm, and the average value of the thicknesses was 6.1 $\mu$m.

(Comparative Example 11)

The same experiment as in Example 66 was carried out except that a polyimide film having an average thickness of 15.6 $\mu$m was used, the polyimide film and glassy carbon plates were pressed by a pressure of 0.02 kgf/cm$^2$. As result, about the resultant circular about-5-cm-diameter graphite membrane, the maximum Ra value was 262 nm, the average value of the electrical conductivities was 19000 S/cm, and the average value of the thicknesses was 6.4 $\mu$m. Wrinkle of the carbonized film were not sufficiently stretched due to too much weak pressure of the press.

(Comparative Example 12)

The same experiment as in Example 66 was carried out except that a polyimide film having an average thickness of 15.9 $\mu$m was used, the polyimide film and glassy carbon plates were pressed by a pressure of 40.0 kgf/cm$^2$. As result, about the resultant circular about-5-cm-diameter graphite membrane, the maximum Ra value was 456 nm, the average value of the electrical conductivities was 14000 S/cm, and the average value of the thicknesses was 6.2 $\mu$m. Some wrinkles were generated due to too much strong pressure of the press.

(Example 74)

A polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce a polyimide film having an average thickness of 15.8 $\mu$m, the polyimide film and glassy carbon plates were pressed by a pressure of 0.5kgf/cm$^2$. Except this matter, the same experiment as in Example 66 was made. As a result, about the resultant circular about-5-cm-diameter graphite membrane, the maximum Ra value was 120 nm, the average value of the electrical conductivities was 18000 S/cm, and the average value of the thicknesses was 6.8 $\mu$m. It has been understood that even when the composition of the polyimide is changed, good results are obtained.

(Example 75)

A polyamic acid was synthesized using pyromellitic dianhydride, 4,4'-diaminodiphenyl ether and p-phenylenediamine at a ratio by mole of 4/2/2. An 18%-by-weight solution of this polyamic acid in DMF was used to produce a polyimide film having an average thickness of 15.9 $\mu$m, the polyimide film and glassy carbon plates were pressed by a pressure of 2.0 kgf/cm$^2$. Except this matter, the same experiment as in Example 66 was made. As a result, about the resultant circular about-5-cm-diameter graphite membrane, the maximum Ra value was 108 nm, the average value of the electrical conductivities was 21000 S/cm, and the average value of the thicknesses was 6.8 $\mu$m. It has been understood that even when the composition of the polyimide is changed, good results are obtained.

(Example 76)

A polyamic acid was synthesized using pyromellitic dianhydride, 4,4'-diaminodiphenyl ether and p-phenylenediamine at a ratio by mole of 4/1/3. An 18%-by-weight solution of this polyamic acid in DMF was used to produce a polyimide film having an average thickness of 15.7 $\mu$m, the polyimide film and glassy carbon plates were pressed by a pressure of 10.0 kgf/cm$^2$. Except this matter, the same experiment as in Example 66 was made. As a result, about the resultant circular about-5-cm-diameter graphite membrane, the maximum Ra value was 100 nm, the average value of the electrical conductivities was 20000 S/cm, and the average value of the thicknesses was 6.5 $\mu$m. It has been understood that even when the composition of the polyimide is changed, good results are obtained.

(Example 77)

The same experiment as in Example 66 was made except that a polyimide film having an average thickness of 4.5 $\mu$m, the polyimide film and glassy carbon plates were pressed by a pressure of 0.05 kgf/cm$^2$. As a result, about the resultant circular about-5-cm-diameter graphite membrane, the maximum Ra value was 99 nm, the average value of the electrical conductivities was 18000 S/cm, and the average value of the thicknesses was 2.1 $\mu$m. It has been understood that even when the polyimide film is thin, good results are obtained.

(Example 78)

A polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce a polyimide film having an average thickness of 4.6 $\mu$m, the polyimide film and glassy carbon plates were pressed by a pressure of 1.0 kgf/cm$^2$. Except this matter, the same experiment as in Example 66 was made. As a result, about the resultant circular about-5-cm-diameter graphite membrane, the maximum Ra value was 97 nm, the average value of the electrical conductivities was 20000 S/cm, and the average value of the thicknesses was 2.2 $\mu$m. It has been understood that even when the composition of the polyimide is changed, good results are obtained.

(Example 79)

A polyamic acid was synthesized using pyromellitic dianhydride, 4,4'-diaminodiphenyl ether and p-phenylenediamine at a ratio by mole of 4/2/2. An 18%-by-weight solution of this polyamic acid in DMF was used to produce a polyimide film having an average thickness of 4.6 $\mu$m, the polyimide film and glassy carbon plates were pressed by a pressure of 1.0 kgf/cm$^2$. Except this matter, the same experiment as in Example 66 was made. As a result, about the resultant circular about-5-cm-diameter graphite membrane, the maximum Ra value was 95 nm, the average value of the electrical conductivities was 20000 S/cm, and the average value of the thicknesses was 2.1 $\mu$m. It has been understood that even when the composition of the polyimide is changed, good results are obtained.

(Example 80)

A polyamic acid was synthesized using pyromellitic dianhydride, 4,4'-diaminodiphenyl ether and p-phenylenediamine at a ratio by mole of 4/1/3. An 18%-by-weight solution of this polyamic acid in DMF was used to produce a polyimide film having an average thickness of 4.6 $\mu$m, the polyimide film and glassy carbon plates were pressed by a pressure of 10.0 kgf/cm$^2$. Except this matter, the same experiment as in Example 66 was made. As a result, about the resultant circular about-5-cm-diameter graphite membrane, the maximum Ra value was 105 nm, the average value of the electrical conductivities was 18000 S/cm, and the average value of the thicknesses was 2.2 $\mu$m. It has been understood that even when the composition of the polyimide is changed, good results are obtained.

(Example 81)

The same experiment as in Example 66 was carried out except that the polyimide film having an average thickness of 1.3 $\mu$m was used, and the polyimide film and glassy carbon plates were pressed by a pressure of 1.0 kgf/cm$^2$. As a result, about the resultant circular about-5-cm-diameter graphite membrane, the maximum Ra value was 85 nm, the average value of the electrical conductivities was 11000 S/cm, and the average value of the thicknesses was 0.4 $\mu$m. It has been understood that even when the polyimide film is thin, good results are obtained.

(Example 82)

The same experiment as in Example 66 was carried out except that the polyimide film having an average thickness of 0.1 $\mu$m and a diameter of 10cm and a shape of circle obtained by spin coating method without adding imidazation accelerator was used, and the polyimide film and glassy carbon plates were pressed by a pressure of 0.5 kgf/cm$^2$. As a result, about the resultant circular about-5-cm-diameter graphite membrane, the maximum Ra value was 99 nm, the average value of the electrical conductivities was 9000 S/cm, and the average value of the thicknesses was 0.03 $\mu$m. It has been understood that even when the polyimide film is thin, good results are obtained.

(Example 83)

In the same way as in Example 18, without adding any imidization acceralator to raw materials, a circular polyimide film having an average thickness of 0.05 $\mu$m and a diameter of 10 cm was yielded by spin coating. This was used to make the same experiment as in Example 66 except that the pressing was performed at a pressure of 10.0 kgf/cm$^2$. As a result, about the resultant 5-cm-average-thickness graphite membrane, the maximum Ra value was 98 nm, the average value of the electrical conductivities was 10000 S/cm, and the average value of the thicknesses was 0.01 $\mu$m. It has been understood that also when the polyimide film is thin, good results can be obtained.

(Example 84)

In the same way as in Example 6, a circular polyimide film was yielded which had an average thickness of 15.7 $\mu$m and a diameter of 10 cm. This was sandwiched between graphite gaskets, and an electrical furnace was used to raise the temperature of the sandwiched laminate to 950°C at a rate of 5°C/minute, and keep the sandwiched laminate at 950°C for 10 minutes. The sandwiched laminate was then naturally cooled to carbonize the polyimide film. The resultant carbonized film was inserted into between two square glassy carbon flat substrates having a 12 cm square size, such that the substrates were arranged obliquely into a hinge form in the manner of bringing only one side of one of the substrates into contact with only one side of the other (Fig. 19). The carbonized film sandwiched between the two glassy carbon flat substrates was graphitized in a furnace having a pressing function. The graphitization was performed by raising the temperature of the sandwiched laminate to 2800°C at a rate of 5°C/minute in an argon gas atmosphere, keeping the sandwiched laminate at 2800°C for 20 minutes, and cooling the sandwiched laminate naturally. Over 20 minutes from the reach of the temperature to 2800°C, the carbonized film sandwiched between the two glassy carbon flat substrates having a square shape was pressed at a pressure of 15.0 kgf/cm$^2$ per 12 cm square area. At this time, about the upper glassy carbon flat substrate arranged obliquely in the hinge form, a side thereof that was opposed to the hinge-contacting side thereof was moved downward at a speed of 1 mm/s by the pressing. As a result, about a circular graphite membrane having a diameter of 5 cm, cut out from the center of the resultant graphite membrane, the maximum Ra value was 118 nm, the average value of the electrical conductivities was 18000 S/cm, and the average value of the thicknesses was 6.3 $\mu$m. Also when a membrane is pressed between flat substrates, wrinkles of the resultant graphite membrane can be effectively decreased.

(Example 85)

A polyamic acid was synthesized using pyromellitic dianhydride, 4,4'-diaminodiphenyl ether and p-phenylenediamine at a ratio by mole of 4/2/2, and an 18%-by-weight solution of this polyamic acid in DMF was used to produce a polyimide film having an average thickness of 4.6 $\mu$m. This film was used to make the same experiment as in Example 84 except that the pressing pressure was set to 0.2 kgf/cm$^2$. As a result, about the resultant circular graphite membrane having a diameter of 5 cm, the maximum Ra value was 91 nm, the average value of the electrical conductivities was 17000 S/cm, and the average value of the thicknesses was 2.1 $\mu$m. Also when a membrane is pressed between flat substrates, wrinkles of the resultant graphite membrane can be effectively decreased.

(Example 86)

In the same way as in Example 1, polyimide films having a 10 cm square size and an average thickness of 15.5 $\mu$m were yielded. One hundred of these films were put onto each other, and then graphite powder was sprinkled onto between every adjacent two of the polyimide films to form a releasing layer (Fig. 14). The 100 polyimide films put onto each other were sandwiched, from two surfaces thereof, between isotropic graphite (CIP material) plates. While the sandwiched laminate was pressed in a direction perpendicular to the film plane at a pressure of 50.0 kgf/cm$^2$, the films were carbonized and graphitized under the same temperature-raising conditions as in Example 1. Graphite powder was sprinkled also onto between the polyimide films and each of the isotropic graphite plates to form a releasing layer. Thereafter, the resultant 100 graphite membranes were peeled from each other. The membranes were observed one by one. As a result, irregularities of a surface of each of the isotropic graphite (CIP material) plates were transferred onto a surface of one of the two graphite membranes that were nearest the isotropic graphite (CIP material) plates while the other 98 graphite membranes were visually hardly different from each other. From the fifth graphite membrane from one of the isotropic graphite (CIP material) plates, a central portion thereof 5 cm square was cut out. About this square graphite membrane, various measurements as in Example 1 were made. As a result, the maximum Ra value was 85 nm, the average value of the electrical conductivities was 15000 S/cm, and the average value of the thicknesses was 7.4 $\mu$m. The density of the graphite membrane was 1.84 g/cm$^3$. It is understood that this graphite membrane was obtained with a denseness such that the inside thereof hardly had voids.

(Example 87)

A polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce polyimide films each having an average thickness of 4.6 $\mu$m. A graph paper piece was inserted into between every adjacent two of 100 of the polyimide films, as well as between each of the outmost polyimide films and the corresponding isotropic graphite plate, to form a releasing layer. The pressing press was set to 1.0 kgf/cm$^2$. Except these matters, the same experiment as in Example 86 was made. The resultant 100 graphite membranes were peeled from each other. The membranes were observed one by one. As a result, irregularities of a surface of each of the isotropic graphite (CIP material) plates were transferred onto a surface of one of the two graphite membranes that were nearest the isotropic graphite (CIP material) plates while the other 98 graphite membranes were visually hardly different from each other. From the fifth graphite membrane from one of the isotropic graphite (CIP material) plates, a central portion thereof 5 cm square was cut out. About this square graphite membrane, various measurements as in Example 1 were made. As a result, the maximum Ra value was 80 nm, the average value of the electrical conductivities was 15000 S/cm, and the average value of the thicknesses was 1.8 $\mu$m. The density of the graphite membrane was 1.82 g/cm$^3$. It is understood that this graphite membrane was obtained with a denseness such that the inside thereof hardly had voids.

(Example 88)

In the same way as in Example 1, polyimide films having a 10 cm square size and an average thickness of 15.5 $\mu$m were yielded, and further polyimide substrates having a 10 cm square size and an average thickness of 55.0 $\mu$m were yielded. One hundred of the polyimide films and 101 of the polyimide substrates were alternately put onto each other. Sewing machine oil was applied onto between every one of the polyimide films and each of the adjacent polyimide substrates to form a releasing layer (Fig. 15). While this stacked body of the polyimide films and the polyimide substrates was sandwiched, from both surfaces thereof, between isotropic graphite (CIP material) plates, and then pressed in a direction perpendicular to the film plane at a pressure of 25.0 kgf/cm$^2$, the stacked body was carbonized and graphitized under the same temperature-raising conditions as in Example 1. Sewing machine oil was applied also onto between each of the outmost polyimide substrates and the corresponding isotropic graphite plate to form a releasing layer. Thereafter, the resultant 100 graphite membranes were peeled from each other. The membranes were observed one by one. As a result, wrinkles or breaks were slightly observed in surfaces of the two graphite membranes that were nearest the isotropic graphite (CIP material) plates. However, the other 98 graphite membranes had neither wrinkle nor breaks, and were visually hardly different from each other. From the fifth graphite membrane from one of the isotropic graphite (CIP material) plates, a central portion thereof 5 cm square was cut out. About this square graphite membrane, various measurements as in Example 1 were made. As a result, the maximum Ra value was 48 nm, the average value of the electrical conductivities was 18000 S/cm, and the average value of the thicknesses was 7.4 $\mu$m. The density of the graphite membrane was 1.89 g/cm$^3$. It is understood that this graphite membrane was obtained with a denseness such that the inside thereof hardly had voids.

(Example 89)

In the same way as in Example 1, polyimide films having a 10 cm square size and an average thickness of 15.4 $\mu$m were yielded. In the same way as in Example 7, a polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce polyimide substrates having a 10 cm square size and an average thickness of 75.2 $\mu$m. One hundred of the polyimide films and 101 of the polyimide substrates were alternately put onto each other. Polystyrene fine particles were applied onto between every one of the polyimide films and each of the adjacent polyimide substrates to form a releasing layer. While this stacked body of the polyimide films and the polyimide substrates was sandwiched, from both surfaces thereof, between isotropic graphite (CIP material) plates and then pressed in a direction perpendicular to the film plane at a pressure of 0.03 kgf/cm$^2$, the stacked body was carbonized and graphitized under the same temperature-raising conditions as in Example 1. Polystyrene fine particles were applied also onto between each of the outmost polyimide substrates and the corresponding isotropic graphite plate to form a releasing layer. Thereafter, the resultant 100 graphite membranes were peeled from each other. The membranes were observed one by one. As a result, wrinkles or breaks were slightly observed in surfaces of two of the graphite membranes that were nearest the isotropic graphite (CIP material) plates. However, the other 98 graphite membranes had neither wrinkle nor breaks, and were visually hardly different from each other. From the fifth graphite membrane from one of the isotropic graphite (CIP material) plates, a central portion thereof 5 cm square was cut out. About this square graphite membrane, various measurements as in Example 1 were made. As a result, the maximum Ra value was 37 nm, the average value of the electrical conductivities was 17000 S/cm, and the average value of the thicknesses was 7.5 $\mu$m. The density of the graphite membrane was 1.90 g/cm$^3$. It is understood that this graphite membrane was obtained with a denseness such that the inside thereof hardly had voids.

(Example 90)

In the same way as in Example 7, a polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce polyimide films having a 10 cm square size and an average thickness of 4.5 $\mu$m. In the same way as in Example 1, polyimide substrates having a 10 cm square size and an average thickness of 55.0 $\mu$m were yielded. One hundred of the polyimide films and 101 of the polyimide substrates were alternately put onto each other. A nonwoven fabric was applied onto between every one of the polyimide films and each of the adjacent polyimide substrates to form a releasing layer. While this stacked body of the polyimide films and the polyimide substrates was sandwiched, from both surfaces thereof, between isotropic graphite (CIP material) plates, and then pressed in a direction perpendicular to the film plane at a pressure of 10.0 kgf/cm$^2$, the films were carbonized and graphitized under the same temperature-raising conditions as in Example 1. A nonwoven fabric was inserted also into between each of the outmost polyimide substrates and the corresponding isotropic graphite plate to form a releasing layer. Thereafter, the resultant 100 graphite membranes were peeled from each other. The membranes were observed one by one. As a result, wrinkles or breaks were slightly observed in surfaces of two of the graphite membranes that were nearest the isotropic graphite (CIP material) plates. However, the other 98 graphite membranes had neither wrinkle nor breaks, and were visually hardly different from each other. From the fifth graphite membrane from one of the isotropic graphite (CIP material) plates, a central portion thereof 5 cm square was cut out. About this square graphite membrane, various measurements as in Example 1 were made. As a result, the maximum Ra value was 143 nm, the average value of the electrical conductivities was 14000 S/cm, and the average value of the thicknesses was 1.9 $\mu$m. The density of the graphite membrane was 1.85 g/cm$^3$. It is understood that this graphite membrane was obtained with a denseness such that the inside thereof hardly had voids.

(Example 91)

In the same way as in Example 7, a polyamic acid was synthesized using pyromellitic dianhydride, 4,4'-diaminodiphenyl ether and p-phenylenediamine at a ratio by mole of 4/3/1. An 18%-by-weight solution of this polyamic acid in DMF was used to produce polyimide films having a 10 cm square size and an average thickness of 4.5 $\mu$m, and polyimide substrates having a 10 cm square size and an average thickness of 75.2 $\mu$m. One hundred of the polyimide films and 101 of the polyimide substrates were alternately put onto each other. Diamond powder was sprinkled onto between every one of the polyimide films and each of the adjacent polyimide substrates to form a releasing layer. While this stacked body of the polyimide films and the polyimide substrates was sandwiched, from both surfaces thereof, between isotropic graphite (CIP material) plates, and then pressed in a direction perpendicular to the film plane at a pressure of 0.05 kgf/cm$^2$, the stacked body was carbonized and graphitized under the same temperature-raising conditions as in Example 1. Diamond powder was sprinkled also onto between each of the outmost polyimide substrates and the corresponding isotropic graphite plate to form a releasing layer. Thereafter, the resultant 100 graphite membranes were peeled from each other. The membranes were observed one by one. As a result, wrinkles or breaks were slightly observed in surfaces of the two graphite membranes that were nearest the isotropic graphite (CIP material) plates. However, the other 98 graphite membranes had neither wrinkle nor breaks, and were visually hardly different from each other. From the fifth graphite membrane from one of the isotropic graphite (CIP material) plates, a central portion thereof 5 cm square was cut out. About this square graphite membrane, various measurements as in Example 1 were made. As a result, the maximum Ra value was 21 nm, the average value of the electrical conductivities was 15000 S/cm, and the average value of the thicknesses was 1.7 $\mu$m. The density of the graphite membrane was 1.92 g/cm$^3$. It is understood that this graphite membrane was obtained with a denseness such that the inside thereof hardly had voids.

(Example 92)

In the same way as in Example 8, a polyamic acid was synthesized using pyromellitic dianhydride, 4,4'-diaminodiphenyl ether and p-phenylenediamine at a ratio by mole of 4/2/2. An 18%-by-weight solution of this polyamic acid in DMF was used to produce polyimide films having a 10 cm square size and an average thickness of 1.8 $\mu$m. In the same way as in Example 1, polyimide substrates having a 10 cm square size and an average thickness of 55.0 $\mu$m were yielded. One hundred of the polyimide films and 101 of the polyimide substrates were alternately put onto each other. Vaseline was applied onto between every one of the polyimide films and each of the adjacent polyimide substrates to form a releasing layer. While this stacked body of the polyimide films and the polyimide substrates was sandwiched, from both surfaces thereof, between isotropic graphite (CIP material) plates, and then pressed in a direction perpendicular to the film plane at a pressure of 5.0 kgf/cm$^2$, the stacked body was carbonized and graphitized under the same temperature-raising conditions as in Example 1. Vaseline was applied also onto between each of the outmost polyimide substrates and the corresponding isotropic graphite plate to form a releasing layer. Thereafter, the resultant 100 graphite membranes were peeled from each other. The membranes were observed one by one. As a result, wrinkles or breaks were slightly observed in surfaces of the two graphite membranes that were nearest the isotropic graphite (CIP material) plates. However, the other 98 graphite membranes had neither wrinkle nor breaks, and were visually hardly different from each other. From the fifth graphite membrane from one of the isotropic graphite (CIP material) plates, a central portion thereof 5 cm square was cut out. About this square graphite membrane, various measurements as in Example 1 were made. As a result, the maximum Ra value was 51 nm, the average value of the electrical conductivities was 18000 S/cm, and the average value of the thicknesses was 0.7 $\mu$m. The density of the graphite membrane was 1.90 g/cm$^3$. It is understood that this graphite membrane was obtained with a denseness such that the inside thereof hardly had voids.

Collected results of the above-mentioned working examples and comparative examples are shown in the following:

[Table 1]

Table.1 Improvement of surface smoothness of graphite membrane by controlled dimension

| Example Comparative Example | Raw material polyimide film | | | Finally controlled dimention at baking | | Graphite membrane | | |
|---|---|---|---|---|---|---|---|---|
| | Composition PMDA/ODA/PDA | Average thickness (μm) | Shape | Carbonization (%) | Graphitization (%) | Average thickness (μm) | Maximum surface roughness Ra (nm) | Average electrical conductivity (S/cm) |
| Example 1 | 4/4/0 | 15.3 | Square | 81 | 92 | 7.5 | 8 | 17000 |
| Example 2 | 4/4/0 | 15.5 | Square | 84 | 95 | 7.0 | 6 | 12000 |
| Example 3 | 4/4/0 | 15.4 | Square | 79 | 89 | 7.8 | 11 | 19000 |
| Example 4 | 4/4/0 | 15.0 | Square | 81 | No | 8.1 | 190 | 17000 |
| Example 5 | 4/4/0 | 15.7 | Square | No | 92 | 8.0 | 106 | 15000 |
| Example 6 | 4/4/0 | 25.0 | Circle | 81 | 92 | 11.6 | 13 | 18000 |
| Example 7 | 4/3/1 | 15.7 | Square | 81 | 92 | 7.6 | 12 | 18000 |
| Example 8 | 4/2/2 | 15.8 | Square | 81 | 92 | 7.7 | 12 | 19000 |
| Example 9 | 4/1/3 | 15.5 | Circle | 81 | 92 | 7.5 | 16 | 11000 |
| Example 10 | 4/1/3 | 15.4 | Circle | 83 | 90 | 7.2 | 33 | 15000 |
| Comparative Example 1 | 4/4/0 | 15.2 | Circle | 90 | XXX | XXX | XXX | XXX |
| Comparative Example 2 | 4/4/0 | 15.2 | Circle | 81 | 100 | XXX | XXX | XXX |
| Comparative Example 3 | 4/4/0 | 15.2 | Circle | 70 | 92 | 7.7 | 653 | 12000 |
| Comparative Example 4 | 4/4/0 | 15.2 | Circle | 81 | 85 | 7.9 | 844 | 13000 |
| Example 11 | 4/4/0 | 4.5 | Square | 81 | 91 | 1.6 | 20 | 18000 |
| Example 12 | 4/4/0 | 4.5 | Square | 81 | No | 1.7 | 172 | 19000 |
| Example 13 | 4/4/0 | 4.5 | Square | No | 91 | 1.6 | 95 | 20000 |
| Example 14 | 4/3/1 | 4.7 | Square | 81 | No | 1.8 | 191 | 15000 |

(continued)

| Example Comparative Example | Raw material polyimide film | | | Finally controlled dimention at baking | | Graphite membrane | | |
|---|---|---|---|---|---|---|---|---|
| | Composition PMDA/ODA/PDA | Average thickness (μm) | Shape | Carbonization (%) | Graphitization (%) | Average thickness (μm) | Maximum surface roughness Ra (nm) | Average electrical conductivity (S/cm) |
| Example 15 | 4/2/2 | 4.6 | Square | 81 | 91 | 1.7 | 24 | 16000 |
| Example 16 | 4/1/3 | 4.6 | Square | No | 91 | 1.7 | 110 | 14000 |
| Example 17 | 4/4/0 | 1.1 | Square | No | 91 | 0.3 | 74 | 18000 |
| Example 18 | 4/4/0 | 0.5(thermal cure) | Circle | No | 91 | 0.2 | 127 | 11000 |
| Example 19 | 4/4/0 | 0.5(thermal cure) | Circle | 81 | 91 | 0.2 | 55 | 11000 |
| Example 20 | 4/4/0 | 15.4 | Square | 86 | 103 | 5.9 | 4 | 10000 |
| Example 21 | 4/3/1 | 12.0 | Square | No | 97 | 5.1 | 3 | 10000 |

[Table 2]

Table 2 Improvement of surface smoothness of graphite membrane by control of pulling force

| Example Comparative Example | Raw material polyimide film | | | Pulling force per cross section area at baking | | Graphite membrane | | |
|---|---|---|---|---|---|---|---|---|
| | Composition PMDA/ODA/PDA | Average thickness (μm) | Shape | Carbonization (gf/mm²) | Graphitization (gf/mm²) | Average thickness (μm) | Maximum surface roughness Ra (nm) | Average electrical conductivity (S/cm) |
| Example 22 | 4/4/0 | 15.5 | Square | 30 | 30 | 6.7 | 49 | 13000 |
| Example 23 | 4/4/0 | 15.0 | Square | 20 | 20 | 6.9 | 54 | 14000 |
| Example 24 | 4/4/0 | 15.8 | Square | 50 | 50 | 6.4 | 18 | 11000 |
| Example 25 | 4/4/0 | 15.2 | Square | No | 30 | 7.3 | 102 | 16000 |
| Example 26 | 4/4/0 | 15.0 | Square | No | 20 | 7.2 | 123 | 17000 |
| Example 27 | 4/4/0 | 15.3 | Square | No | 50 | 7.0 | 109 | 15000 |
| Example 28 | 4/4/0 | 15.1 | Square | 30 | No | 7.2 | 189 | 13000 |
| Example 29 | 4/4/0 | 15.1 | Square | 20 | No | 7.4 | 186 | 14000 |
| Example 30 | 4/4/0 | 15.2 | Square | 50 | No | 7.0 | 175 | 12000 |
| Comparative Example 5 | 4/4/0 | 15.4 | Square | 5 | 5 | 7.4 | 9043 | 18000 |
| Comparative Example 6 | 4/4/0 | 15.9 | Square | 200 | XXX | XXX | XXX | XXX |
| Example 31 | 4/3/1 | 15.7 | Square | 30 | 30 | 6.6 | 52 | 17000 |
| Example 32 | 4/2/2 | 15.6 | Square | 30 | 30 | 6.5 | 50 | 17000 |
| Example 33 | 4/1/3 | 15.5 | Circle | 30 | 30 | 6.7 | 58 | 16000 |
| Example 34 | 4/4/0 | 4.5 | Square | 30 | 30 | 1.8 | 47 | 17000 |
| Example 35 | 4/3/1 | 4.7 | Square | 30 | No | 2.0 | 183 | 17000 |
| Example 36 | 4/2/2 | 4.6 | Square | 30 | 30 | 1.8 | 40 | 16000 |
| Example 37 | 4/1/3 | 4.6 | Square | No | 30 | 2.1 | 108 | 18000 |
| Example 38 | 4/4/0 | 1.3 | Square | No | 30 | 0.4 | 104 | 20000 |

(continued)

| Example Comparative Example | Raw material polyimide film | | | Pulling force per cross section area at baking | | Graphite membrane | | |
|---|---|---|---|---|---|---|---|---|
| | Composition PMDA/ODA/PDA | Average thickness (μm) | Shape | Carbonization (gf/mm²) | Graphitization (gf/mm²) | Average thickness (μm) | Maximum surface roughness Ra (nm) | Average electrical conductivity (S/cm) |
| Example 39 | 4/4/0 | 0.3(thermal cure) | Circle | 30 | 30 | 0.1 | 32 | 19000 |
| Example 40 | 4/4/0 | 0.5(thermal cure) | Circle | No | 30 | 0.2 | 98 | 18000 |
| Example 41 | 4/4/0 | 15.5 | Square | 175 | 750 | 5.4 | 8 | 10000 |
| Example 42 | 4/4/0 | 15.5 | Square | No | 500 | 5.6 | 15 | 15000 |
| Example 43 | 4/3/1 | 4.3 | Square | 120 | 250 | 1.0 | 9 | 12000 |
| Example 44 | 4/3/1 | 4.3 | Square | No | 125 | 1.1 | 23 | 18000 |
| Example 45 | 20/13/7 | 2.5 | Circle | No | 1450 | 0.7 | 7 | 21000 |
| Example 46 | 5/3/2 | 12.5 | Circle | No | 80 | 4.7 | 35 | 20000 |

[Table 3]

Table 3 Improvement of surface smoothness of graphite membrane by baking on solid substrate

| Example Comparative Example | Raw material polyimide film (PMDA/ODA=4/4) | | Heating on substrate | | Graphite membrane | | |
|---|---|---|---|---|---|---|---|
| | Average thickness (μm) | Shape | Kind of Substrate | Heating temperature on substrate (°C) | Average thickness (μm) | Maximum surface roughness Ra (nm) | Average electrical conductivity (S/cm) |
| Example 47 | 12.6 | Square | Copper foil | 950 | 4.3 | 196 | 9000 |
| Example 48 | 12.8 (thermal cure) | Square | Copper foil | 950 | 4.5 | 189 | 9000 |
| Comparative Example 7 | 12.6 | Square | Copper foil | 700 | 4.8 | 3643 | 10000 |
| Comparative Example 8 | 12.5 (thermal cure) | Square | Copper foil | 700 | 4.8 | 15823 | 10000 |
| Comparative Example 9 | 2.0 | Square | Aluminum foil | 600 | 0.7 | 33900 | 13000 |
| Example 49 | 2.1 | Square | Nickel foil | 1200 | 0.6 | 149 | 8000 |
| Example 50 | 2.2 | Square | Quartz glass | 1000 | 0.6 | 170 | 9000 |
| Example 51 | 2.2 | Circle | Si wafer | 1000 | 0.6 | 172 | 10000 |
| Example 52 | 2.2 | Circle | SiC | 1000 | 0.7 | 180 | 9000 |
| Example 53 | 2.1 | Square | Graphite | 2800 | 0.7 | 90 | 8000 |
| Example 54 | 2.1 | Square | Glassy carbon | 1300 | 0.5 | 177 | 11000 |
| Example 55 | 2.3 | Square | Glassy carbon | 1800 | 0.5 | 165 | 10000 |
| Example 56 | 2.0 | Square | Glassy carbon | 2800 | 0.7 | 8 | 8000 |
| Comparative Example 10 | 2.0 | Circle | Glassy carbon (Donut) | 950 | XXX | XXX | XXX |

[Table 4]

Table 4. Improvement of surface smoothness of graphite membrane by baking on frame or substrate made of polymer film

| Example Comparative Example | Raw material polyimide film | | | Frame film | | | Graphite membrane | | |
|---|---|---|---|---|---|---|---|---|---|
| | Composition PMDA/ODA/PDA | Average thickness (μm) | Shape | Kind of Composition | Average thickness (μm) | Shape | Average thickness (μm) | Maximum surface roughness Ra (nm) | Average electrical conductivity (S/cm) |
| Example 57 | 4/4/0 | 2.4 | Circle | Polyparaphenylenevinylene | 50.2 | Donut | 1.1 | 45 | 17000 |
| Example 58 | 4/4/0 | 5.2 | Circle | PMDA/ODA=4/4 | 55.0 | Donut | 2.5 | 76 | 17000 |
| Example 59 | 4/4/0 | 2.2 | Circle | PMDA/ODA=4/4 | 55.0 | Circular plate | 1.0 | 66 | 17000 |
| Example 60 | 4/3/1 | 2.3 | Circle | PMDA/ODA=4/4 | 55.0 | Donut | 1.1 | 25 | 18000 |
| Example 61 | 4/2/2 | 2.4 | Circle | PMDA/ODA=4/4 | 55.0 | Donut | 1.1 | 26 | 18000 |
| Example 62 | 4/2/2 | 2.3 | Square | PMDA/ODA=4/4 | 55.0 | Square picture frame | 1.1 | 21 | 18000 |
| Example 63 | 4/1/3 | 2.2 | Circle | PMDA/ODA=4/4 | 55.0 | Donut | 1.1 | 18 | 16000 |
| Example 64 | 4/2/2 | 12.5 | Circle | PMDA/ODA=4/4 | 251.0 | Donut | 5.1 | 18 | 16000 |
| Example 65 | 4/2/2 | 2.4 | Circle | PMDA/ODA=4/4 | 55.0 | Donut (Stacking after carbonization) | 1.1 | 18 | 16000 |

[Table 5]

[Table 5]

Table 5 Improvement of surface smoothness of graphite membrane by press

| Example Comparative Example | Raw material polyimide film | | Press | | Graphite membrane | | |
|---|---|---|---|---|---|---|---|
| | Composition PMDA/ODA/PDA | Average thickness ($\mu$m) | Pressure of press (kgf/cm$^2$) | Temperature at start of press (°C) | Average thickness ($\mu$m) | Maximum surface roughness Ra (nm) | Average electrical conductivity (S/cm) |
| Example 66 | 4/4/0 | 15.8 | 0.04 | 2800 | 7.0 | 114 | 19000 |
| Example 67 | 4/4/0 | 15.8 | 0.1 | 2800 | 6.9 | 109 | 20000 |
| Example 68 | 4/4/0 | 15.9 | 1.0 | 2200 | 6.5 | 102 | 19000 |
| Example 69 | 4/4/0 | 15.8 | 1.0 (plane plate in one side) | 2600 | 6.6 | 138 | 19000 |
| Example 70 | 4/4/0 | 15.6 | 1.0 (between convexs) | 2600 | 6.4 | 123 | 19000 |
| Example 71 | 4/4/0 | 15.7 | 1.0 | 2800 | 6.8 | 124 | 19000 |
| Example 72 | 4/4/0 | 15.6 | 10.0 | 2800 | 6.4 | 165 | 17000 |
| Example 73 | 4/4/0 | 15.8 | 25.0 | 2800 | 6.1 | 178 | 16000 |
| Comparative Example 11 | 4/4/0 | 15.6 | 0.02 | 2800 | 6.4 | 262 | 19000 |
| Comparative Example 12 | 4/4/0 | 15.9 | 40.0 | 2800 | 6.2 | 456 | 14000 |
| Example 74 | 4/3/1 | 15.8 | 0.5 | 2800 | 6.8 | 120 | 18000 |
| Example 75 | 4/2/2 | 15.9 | 2.0 | 2800 | 6.8 | 108 | 21000 |
| Example 76 | 4/1/3 | 15.7 | 10.0 | 2800 | 6.5 | 100 | 20000 |
| Example 77 | 4/4/0 | 4.5 | 0.05 | 2800 | 2.1 | 99 | 18000 |
| Example 78 | 4/3/1 | 4.6 | 1.0 | 2800 | 2.2 | 97 | 20000 |
| Example 79 | 4/2/2 | 4.6 | 1.0 | 2800 | 2.1 | 95 | 20000 |
| Example 80 | 4/1/3 | 4.6 | 10.0 | 2800 | 2.2 | 105 | 18000 |
| Example 81 | 4/4/0 | 1.3 | 1.0 | 2800 | 0.4 | 85 | 11000 |

EP 3 257 811 B1

59

| Example Comparative Example | Raw material polyimide film | | Press | | Graphite membrane | | |
|---|---|---|---|---|---|---|---|
| | Composition PMDA/ODA/PDA | Average thickness ($\mu$m) | Pressure of press (kgf/cm$^2$) | Temperature at start of press (°C) | Average thickness ($\mu$m) | Maximum surface roughness Ra (nm) | Average electrical conductivity (S/cm) |
| Example 82 | 4/4/0 | 0.1 (thermal cure) | 0.5 | 2800 | 0.03 | 99 | 9000 |
| Example 83 | 4/4/0 | 0.05(thermal cure) | 10.0 | 2800 | 0.01 | 98 | 10000 |
| Example 84 | 4/4/0 | 15.7 | 15.0 (between plane plates) | 2800 | 6.3 | 118 | 18000 |
| Example 85 | 4/2/2 | 4.6 | 0.2 (between plane plates) | 2800 | 2.1 | 91 | 17000 |

[Table 6]

Table 6. Improvement of surface smoothness of graphite membrane by stacking of multiple graphite membranes

| Example Comparative Example | Raw material polyimide film | | Self-supporting polyimide substrate | | Stacked condition | | Graphite membrane | | |
|---|---|---|---|---|---|---|---|---|---|
| | Composition PMDA/ODA/PDA | Average thickness (μm) | Composition PMDA/ODA/PDA | Average thickness (μm) | Pressure of Press (kgf/cm²) | Releasing layer | Average thickness (μm) | Maximum surface roughness Ra (nm) | Average electrical conductivity (S/cm) |
| Example 86 | 4/4/0 | 15.5 | No | No | 50.0 | Graphite powder | 7.4 | 85 | 15000 |
| Example 87 | 4/3/1 | 4.6 | No | No | 1.0 | Graph paper | 1.8 | 80 | 15000 |
| Example 88 | 4/4/0 | 15.5 | 4/4/0 | 55.0 | 25.0 | Sewing machine oil | 7.4 | 48 | 18000 |
| Example 89 | 4/4/0 | 15.4 | 4/3/1 | 75.2 | 0.03 | Polystyrene powder | 7.5 | 37 | 17000 |
| Example 90 | 4/3/1 | 4.5 | 4/4/0 | 55.0 | 10.0 | Non-woven fabric | 1.9 | 143 | 14000 |
| Example 91 | 4/3/1 | 4.5 | 4/3/1 | 75.2 | 0.05 | Diamond powder | 1.7 | 21 | 15000 |
| Example 92 | 4/2/2 | 1.8 | 4/4/0 | 55.0 | 5.0 | Vaseline | 0.7 | 51 | 18000 |

[Industrial applicability]

The present invention can be utilized for the provision of graphite membrane (independent graphite membrane) having a highly smooth surface which is useful for a constituting material such as small-sized and thin electric conductor, thermoconductive material, thermal interface material (TIM), heat resistant sealing material, gasket, heating generator, micro electro mechanical systems (MEMS).

[Description of the reference numerals]

7a, 8a, 9a, 10a, 11a, 12a, 13a, 14a, 15a, 16a, 17a, 18a, 19a polymer film
1a, 1b, 1c, 2a, 4a, 5a, 6a, 7c, 13d, 16c, 17c graphite membrane

**Claims**

1. A graphite membrane having in an independent graphite membrane a thickness of 10 nm to 12 $\mu$m, an area of 5 $\times$ 5 mm$^2$ or more, an electrical conductivity of 8000 S/cm or more, and an arithmetic average roughness Ra of 200 nm or less on the surface of the graphite membrane.

2. The graphite membrane according to claim 1, wherein the graphite membrane has the area of 30 $\times$ 30 mm$^2$ or more.

3. The graphite membrane according to claim 1 or 2, wherein the graphite membrane has a layered structure in which graphene is stacked without gaps between the graphenes in a plane parallel to the graphite membrane in a cross-section of the graphite membrane observed by TEM.

4. The graphite membrane according to any one of claims 1 to 3, wherein the graphite membrane has a layered structure in which graphene is stacked without gaps between the graphenes in a plane parallel to the graphite membrane in a cross-section of the graphite membrane observed by SEM.

5. The graphite membrane according to any one of claims 1 to 4, wherein the graphite membrane has a flat layered structure in which graphene is stacked without gaps between the graphenes in a cross-section of the graphite membrane observed by either TEM or SEM or both TEM and SEM, and the graphite membrane has an arithmetic average roughness Ra of 200 nm or less on the surface of the flat layered structure.

6. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by regulating a size in a direction parallel to the graphite membrane in either the carbonization or the graphitization of the polymer film, or both the carbonization and the graphitization of the polymer film.

7. The method according to claim 6, wherein a size of a direction parallel to a carbonized film obtained by carbonizing the polymer film is 100.2% to 112% of a size of a direction parallel to a carbonized film obtained by carbonizing the polymer film without applying a force and regulating a size of a direction parallel to the polymer film.

8. The method according to claim 7, wherein a size of a direction parallel to a carbonized film obtained by carbonizing the polymer film is 75 to 87% of a size of a direction parallel to the polymer film.

9. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by applying pulling force to the polymer film along a direction parallel to the polymer film in either the carbonization or the graphitization of the polymer film, or both the carbonization and the graphitization of the polymer film.

10. The method according to claim 9, wherein the pulling force along a direction parallel to the polymer film in the carbonization is from 8 gf/mm$^2$ to 180 gf/mm$^2$ as total pulling force per a total cross section area of the polymer film.

11. The method according to claim 9, wherein the pulling force along a direction parallel to the polymer film in the graphitization is from 8 gf/mm$^2$ to 1500 gf/mm$^2$ as total pulling force per a total cross section area of the polymer film.

12. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by stacking the polymer film with a substrate in either the carbonization or the graphitization of the polymer film, or both the carbonization and the graphitization of the polymer film.

13. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by stacking the polymer film having a thickness of 20 nm to 40 $\mu$m as plural pieces, pressing polymer films by applying a pressure in a direction of 30° or less from a perpendicular direction to the polymer film plane in the carbonization of the polymer film or both the carbonization and the graphitization of the polymer film, and separating each of stacked graphite membranes after graphitization.

14. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by stacking the polymer film with a frame or a substrate of a polymer film having mechanical strength higher than that of the polymer film in both the carbonization and the graphitization of the polymer film.

15. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by stacking a carbonized film obtained by carbonizing a polymer film or a graphitized film obtained by graphitizing a polymer film with a frame or a substrate of a carbonized film obtained by carbonizing a polymer film or a graphitized film obtained by graphitizing a polymer film having mechanical strength higher than that of the polymer film in both the carbonization and the graphitization of the polymer film or the graphitization of the polymer film.

16. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by pressing at 2200°C or more the polymer film sandwiched by two substrates including at least one curved substrate in the graphitization of the polymer film.

17. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by interposing the polymer film between gaps formed by two substrates in nonparallel plane such that a part of each of two substrates is contacted with each other at 2200°C or more in the graphitization of the polymer film, and pressing the polymer film and the two substrates such that one or both of the two substrates are gradually adjusted in a parallel state and gaps formed by the two substrates are eliminated.

18. A method for preparing a graphite membrane as defined in any one of claims 1 to 5, comprising a step of carbonizing and graphitizing a polymer film to prepare a graphite membrane, wherein an arithmetic average roughness Ra on the surface of the graphite membrane is reduced by stacking a carbonized film obtained by carbonizing a polymer film with a frame or a substrate of a carbonized film obtained by carbonizing a polymer film having mechanical strength higher than that of the polymer film to graphitize these.

**Patentansprüche**

1. Graphitmembran, welche in einer unabhängigen Graphitmembran eine Dicke von 10 nm bis 12 $\mu$m, eine Fläche von $5 \times 5$ mm$^2$ oder mehr, eine elektrische Leitfähigkeit von 8000 S/cm oder mehr und eine arithmetische Durchschnittsrauhigkeit Ra von 200 nm oder weniger auf der Oberfläche der Graphitmembran aufweist.

2. Graphitmembran gemäß Anspruch 1, wobei die Graphitmembran eine Fläche von $30 \times 30$ mm$^2$ oder mehr aufweist.

3. Graphitmembran gemäß Anspruch 1 oder 2, wobei die Graphitmembran eine Schichtstruktur aufweist, in welcher Graphen ohne Lücken zwischen den Graphenen in einer Ebene parallel zu der Graphitmembran in einem mittels TEM untersuchten Querschnitt der Graphitmembran gestapelt ist.

4. Graphitmembran gemäß einem der Ansprüche 1 bis 3, wobei die Graphitmembran eine Schichtstruktur aufweist, in welcher Graphen ohne Lücken zwischen den Graphenen in einer Ebene parallel zu der Graphitmembran in einem mittels REM untersuchten Querschnitt der Graphitmembran gestapelt ist.

5. Graphitmembran gemäß einem der Ansprüche 1 bis 4, wobei die Graphitmembran eine flache Schichtstruktur aufweist, in welcher Graphen ohne Lücken zwischen den Graphenen in einem entweder mittels TEM oder REM oder sowohl mittels TEM als auch REM untersuchten Querschnitt der Graphitmembran gestapelt ist, und die Graphitmembran eine arithmetische Durchschnittsrauhigkeit Ra von 200 nm oder weniger auf der Oberfläche der flachen Schichtstruktur aufweist.

6. Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Regulieren einer Größe in einer Richtung parallel zu der Graphitmembran während entweder der Karbonisierung oder Graphitierung des Polymerfilms oder sowohl bei der Karbonisierung als auch der Graphitierung des Polymerfilms.

7. Verfahren gemäß Anspruch 6, wobei eine Größe einer Richtung parallel zu einem durch Karbonisierung des Polymerfilms erhaltenen karbonisierten Film 100,2% bis 112% einer Größe einer Richtung parallel zu einem durch Karbonisierung des Polymerfilms erhaltenen karbonisierten Film ohne Anwendung einer Kraft und Regulieren einer Größe einer Richtung parallel zu dem Polymerfilm beträgt.

8. Verfahren gemäß Anspruch 7, wobei eine Größe einer Richtung parallel zu einem durch Karbonisierung des Polymerfilms erhaltenen karbonisierten Film 75 bis 87% einer Größe einer Richtung parallel zu dem Polymerfilm beträgt.

9. Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Anwenden einer Zugkraft auf den Polymerfilm entlang einer Richtung parallel zum Polymerfilm während entweder der Karbonisierung oder der Graphitierung des Polymerfilms oder sowohl der Karbonisierung als auch der Graphitierung des Polymerfilms.

10. Verfahren gemäß Anspruch 9, wobei die Zugkraft entlang einer Richtung parallel zum Polymerfilm bei der Karbonisierung von 8 gf/mm$^2$ bis 180 gf/mm$^2$ als Gesamtzugkraft pro Gesamtquerschnittsfläche des Polymerfilms beträgt.

11. Verfahren gemäß Anspruch 9, wobei die Zugkraft entlang einer Richtung parallel zum Polymerfilm bei der Graphitierung zwischen 8 gf/mm$^2$ und 1500 gf/mm$^2$ als Gesamtzugkraft pro Gesamtquerschnittsfläche des Polymerfilms beträgt.

12. Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Stapeln des Polymerfilms mit einem Substrat während entweder der Karbonisierung oder der Graphitierung des Polymerfilms oder sowohl der Karbonisierung als auch der Graphitierung des Polymerfilms.

13. Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Stapeln des Polymerfilms mit einer Dicke von 20 nm bis 40 $\mu$m in Form mehrerer Stücke, Pressen der Polymerfilme durch Aufbringen eines Drucks in einer Richtung von 30° oder weniger aus einer zu der Polymerfilmebene senkrechten Richtung während der Karbonisierung des Polymerfilms oder sowohl der Karbonisierung als auch der Graphitierung des Polymerfilms, und Trennen jeder der gestapelten Graphitmembranen nach der Graphitierung.

14. Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Stapeln des Polymerfilms mit einem Rahmen oder einem Substrat eines Polymerfilms mit einer höheren mechanischen Festigkeit als der des Polymerfilms während sowohl der Karbonisierung als auch der Graphitierung des Polymerfilms.

**15.** Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Stapeln eines durch Karbonisieren eines Polymerfilms erhaltenen karbonisierten Films oder eines durch Graphitieren eines Polymerfilms erhaltenen graphitierten Films mit einem Rahmen oder einem Substrat eines durch Karbonisieren eines Polymerfilms erhaltenen karbonisierten Films oder eines durch Graphitieren eines Polymerfilms erhaltenen graphitierten Films mit einer höheren mechanischen Festigkeit als der des Polymerfilms während sowohl der Karbonisierung als auch der Graphitierung des Polymerfilms oder der Graphitierung des Polymerfilms.

**16.** Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Pressen bei 2200 °C oder mehr des Polymerfilms, welcher zwischen zwei Substraten einschließlich mindestens eines gekrümmten Substrats eingebettet ist, während der Graphitierung des Polymerfilms.

**17.** Verfahren zur Herstellung einer Graphitmembran, wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Einbringen des Polymerfilms zwischen von zwei Substraten in nicht-paralleler Ebene gebildeten Lücken, so dass ein Teil jedes der beiden Substrate bei 2200°C oder mehr während der Graphitierung des Polymerfilms miteinander in Kontakt gebracht wird, und Pressen des Polymerfilms und der zwei Substrate, so dass eines oder beide der zwei Substrate schrittweise in einen parallelen Zustand gebracht werden und von den zwei Substraten gebildete Lücken beseitigt werden.

**18.** Verfahren zur Herstellung einer Graphitmembran wie in einem der Ansprüche 1 bis 5 definiert, umfassend einen Schritt des Karbonisierens und Graphitierens eines Polymerfilms zum Herstellen einer Graphitmembran, wobei eine arithmetische Durchschnittsrauhigkeit Ra auf der Oberfläche der Graphitmembran verringert wird durch Stapeln eines durch Karbonisieren eines Polymerfilms erhaltenen karbonisierten Films mit einem Rahmen oder einem Substrat eines durch Karbonisieren eines Polymerfilms erhaltenen karbonisierten Films mit einer höheren mechanischen Festigkeit als der des Polymerfilms, um diese zu graphitieren.

**Revendications**

**1.** Membrane de graphite présentant dans une membrane de graphite indépendante une épaisseur allant de 10 nm à 12 $\mu$m, une zone supérieure ou égale à $5 \times 5$ mm$^2$, une conductivité électrique supérieure ou égale à 8000 S/cm, et une rugosité moyenne arithmétique Ra inférieure ou égale à 200 nm à la surface de la membrane de graphite.

**2.** Membrane de graphite selon la revendication 1, dans laquelle la membrane de graphite présente la zone supérieure ou égale à $30 \times 30$ mm$^2$.

**3.** Membrane de graphite selon la revendication 1 ou 2, dans laquelle la membrane de graphite présente une structure en couches dans laquelle du graphène est empilé sans espace entre les graphènes dans un plan parallèle à la membrane de graphite dans une section transversale de la membrane de graphite observée par MET.

**4.** Membrane de graphite selon l'une quelconque des revendications 1 à 3, dans laquelle la membrane de graphite présente une structure en couches dans laquelle du graphène est empilé sans espace entre les graphènes dans un plan parallèle à la membrane de graphite dans une section transversale de la membrane de graphite observée par MEB.

**5.** Membrane de graphite selon l'une quelconque des revendications 1 à 4, dans laquelle la membrane de graphite présente une structure en couches plate dans laquelle du graphène est empilé sans espace entre les graphènes dans une section transversale de la membrane de graphite observée soit par MET, soit par MEB ou à la fois MET et MEB, et la membrane de graphite présente une rugosité moyenne arithmétique Ra inférieure ou égale 200 nm à la surface de la structure en couches plate.

**6.** Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en réglant une taille dans une direction parallèle à la membrane de graphite soit lors de la carbonisation, soit lors de la graphitisation du film polymère, soit à la fois lors de la carbonisation et de la graphitisation du film polymère.

7. Procédé selon la revendication 6, dans lequel une taille d'une direction parallèle à un film carboné obtenu par carbonisation du film polymère va de 100,2 % à 112 % d'une taille d'une direction parallèle à un film carboné obtenu par carbonisation du film polymère sans appliquer une force et en réglant une taille d'une direction parallèle au film polymère.

8. Procédé selon la revendication 7, dans lequel une taille d'une direction parallèle à un film carboné obtenu par carbonisation du film polymère va de 75 à 87 % d'une taille d'une direction parallèle au film polymère.

9. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en appliquant une force de traction sur le film polymère suivant une direction parallèle au film polymère soit lors de la carbonisation, soit lors de la graphitisation du film polymère, soit à la fois lors de la carbonisation et de la graphitisation du film polymère.

10. Procédé selon la revendication 9, dans lequel la force de traction suivant une direction parallèle au film polymère lors de la carbonisation va de 8 gf/mm$^2$ à 180 gf/mm$^2$ en tant que force de traction totale par zone de section transversale totale du film polymère.

11. Procédé selon la revendication 9, dans lequel la force de traction suivant une direction parallèle au film polymère lors de la graphitisation va de 8 gf/mm$^2$ à 1500 gf/mm$^2$ en tant que force de traction totale par zone de section transversale totale du film polymère.

12. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en empilant le film polymère avec un substrat soit lors de la carbonisation, soit lors de la graphitisation du film polymère, soit à la fois lors de la carbonisation et de la graphitisation du film polymère.

13. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en empilant le film polymère présentant une épaisseur allant de 20 nm à 40 $\mu$m sous forme d'éléments multiples, en comprimant des films polymères en appliquant une pression dans une direction inférieure ou égale à 30° à partir d'une direction perpendiculaire au plan du film polymère lors de la carbonisation du film polymère ou à la fois lors de la carbonisation et de la graphitisation du film polymère, et en séparant chacune des membranes de graphite empilées après la graphitisation.

14. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en empilant le film polymère avec un cadre ou un substrat d'un film polymère présentant une résistance mécanique supérieure à celle du film polymère à la fois lors de la carbonisation et de la graphitisation du film polymère.

15. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en empilant le film carboné obtenu par carbonisation d'un film polymère ou un film graphité obtenu par graphitisation d'un film polymère avec un cadre ou un substrat d'un film carboné obtenu par carbonisation d'un film polymère ou un film graphité obtenu par graphitisation d'un film polymère présentant une résistance mécanique supérieure à celle du film polymère à la fois lors de la carbonisation et de la graphitisation du film polymère ou lors de la graphitisation du film polymère.

16. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en comprimant à une température supérieure ou égale à 2200 °C le film polymère pris en sandwich par deux substrats incluant au moins un substrat incurvé lors de la graphitisation du film polymère.

17. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en intercalant le film polymère entre des espaces formés par deux substrats dans un plan non parallèle de sorte qu'une partie de chacun des deux substrats est mis en contact l'un avec l'autre à une température supérieure ou égale à 2200 °C lors de la graphitisation du film polymère, et en comprimant le film polymère et les deux substrats de sorte que l'un des deux ou les deux substrats sont ajustés progressivement dans un état parallèle et des espaces formés par les deux substrats sont éliminés.

18. Procédé de préparation d'une membrane de graphite tel que défini selon l'une quelconque des revendications 1 à 5, comprenant une étape de carbonisation et de graphitisation d'un film polymère pour préparer une membrane de graphite, dans lequel une rugosité moyenne arithmétique Ra à la surface de la membrane de graphite est réduite en empilant un film carboné obtenu par carbonisation d'un film polymère avec un cadre ou un substrat d'un film carboné obtenu par carbonisation d'un film polymère présentant une résistance mécanique supérieure à celle du film polymère pour les graphitiser.

[Fig. 1]

prior art

1a

d2

d3

d1

(a)

1b

(b)

prior art

1c

1d

(c)

[Fig. 2]

prior art

(b)

prior art

(a)

[Fig. 3]

×3,000,000    5nm

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

EP 3 257 811 B1

[Fig. 14]

[Fig. 15]

[Fig. 16]

[Fig. 17]

[Fig. 18]

[Fig. 19]

[Fig. 20]

[Fig. 21]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004299919 A
- JP 2005053719 A
- JP 2013212938 A
- JP 2013121894 A
- JP H02120218 A
- JP S61275116 A
- JP S61275117 B
- JP 2013216552 A
- US 2011162792 A1
- WO 2010074918 A1

**Non-patent literature cited in the description**

- **L. SPAIN ; A. R. UBBELOHDE ; D. A. YOUNG.** Electronic properties of oriented graphite. *PHILOSOPHICAL TRANSACTIONS OF THE ROYAL SOCIETY*
- **T. C. CHIEU ; M. S. DRESSELHAUS ; M. ENDO.** *Phys. Rev.,* 1982, vol. B26, 5867
- Carbon Science from Basic Physical Properties to Application and Development. Kagaku-Dojin Publishing Co., Inc, 15 October 2011, 72-73
- Experimental Chemical Lecture 9, Electricity/Magnetism. Maruzen Co., Ltd, 05 June 1991, 170